# EUROPEAN PATENT SPECIFICATION

(11) **EP 3 404 748 B1**
(45) Date of publication and mention of the grant of the patent: **27.07.2022**
(21) Application number: 18173292.6
(22) Date of filing: 18.05.2018
(51) Int. Cl.: H01M 4/36, H01M 4/525, H01M 4/58, H01M 10/0567

(54) **ELECTROCHEMICAL CELLS COMPRISING ADDITIVES**
ELEKTROCHEMISCHE ZELLEN MIT ADDITIVEN
CELLULES ÉLECTROCHIMIQUES COMPRENANT DES ADDITIFS

(30) Priority: 19.05.2017 US 201762508511 P; 19.05.2017 US 201762508496 P
(43) Date of publication of application: 21.11.2018
(73) Proprietor: Sion Power Corporation, Tucson, AZ 85756 (US)
(72) Inventor: Liao, Zhaohui, TUCSON, AZ Arizona 85756 (US); Scordilis-Kelley, Chariclea, TUCSON, AZ Arizona 85756 (US); Kelley, Tracy Earl, TUCSON, AZ Arizona 85756 (US); Mikhaylik, Yuriy V., TUCSON, AZ Arizona 85756 (US); Schneider, Holger, 67056 Ludwigshafen am Rhein (DE)
(74) Representative: Carpmaels & Ransford LLP

(56) References cited:
- EP-A1- 3 002 814
- WO-A1-2017/083655

## Description

Articles and processes related to electrochemical cells comprising certain additives are provided.

There has been considerable interest in recent years in developing high energy density batteries with anodes containing metallic lithium. In such cells, cathode active material reduction and oxidation electrochemical processes generally involve lithium ions. Rechargeable batteries with metallic lithium anodes generally exhibit limited cycle lifetimes. Accordingly, articles and methods for increasing the cycle lifetime and/or other improvements would be beneficial.

WO 2017/083655 A1 discloses an electrochemical cell, comprising a first electrode, a second electrode, an electrolyte positioned between the first electrode and the second electrode, and an additive which is a carbon disulfide salt and/or an additive precursor comprising a disulfide bridge.

Articles for production of or use in electrochemical cells and electrochemical cells comprising certain additives as well as processes for obtaining said articles resp. electrochemical cells provided. Herein said electrochemical cell or article includes first additive(s) as defined below resp. in the claims, and second additive(s) as defined below resp. in the claims.

According to a first aspect, there is provided an article for production of or use in an electrochemical cell, said article comprising:
- a first electrode comprising lithium, said first electrode comprising a first surface;
- a second electrode, said second electrode comprising a second surface;
- an electrolyte;
wherein said article further comprises
(i) a first additive wherein the first additive comprises a xanthate group;
   and
(ii) a second additive wherein the second additive comprises an (oxalato)borate group, and wherein the first additive is present in the electrolyte, the second additive is present in the electrolyte at greater than or equal to 0.2 wt% versus the total weight of the electrolyte, and wherein the ratio of the total weight of the first additive to the total weight of the second additive is less than or equal to 3.

Accordingly, in said article, (i) said first additive comprises a xanthate group, i.e. is a compound comprising one or more xanthate groups, and said second additive comprises an (oxalato)borate group, i.e. is a compound comprising one or more (oxalato)borate groups. The second additive is present in the electrolyte at greater than or equal to 0.2 wt% versus the total weight of the electrolyte.

Said first additive is preferably selected from the group consisting of lithium xanthate, lithium ethyl xanthate, lithium isobutyl xanthate, potassium xanthate, potassium ethyl xanthate, potassium isobutyl xanthate and a polymer which comprises xanthate functional group.

Said second additive is preferably selected from the group consisting of lithium bis(oxalato) borate and lithium difluoro(oxalato)borate.

Preferably, said first additive is selected from the group consisting of lithium xanthate, lithium ethyl xanthate, lithium isobutyl xanthate, potassium xanthate, potassium ethyl xanthate, potassium isobutyl xanthate and a polymer which comprises xanthate functional groups, and said second additive is selected from the group consisting of lithium bis(oxalato) borate and lithium difluoro(oxalato)borate.

Preferably, said article further comprises a protective layer. Preferably, said protective layer is disposed on the first electrode. Preferably said protective layer is porous.

Preferably, said second electrode comprises a material selected from the group consisting of lithium intercalation compounds and sulfur, wherein said lithium intercalation compound is preferably selected from the group consisting of lithium nickel manganese cobalt oxide, lithium nickel cobalt aluminum oxide, lithium iron phosphate and lithium cobalt oxide. Preferably, said second electrode has a voltage with respect to lithium of greater than 2.8 V and less than or equal to 4.5 V.

Preferably, said electrolyte comprises a solvent, preferably a solvent comprising a carbonate group, wherein said solvent is preferably selected from the group consisting of dimethyl carbonate, diethyl carbonate, ethyl methyl carbonate, propylene carbonate, dioxolanes, dimethoxyethane, ethylene carbonate, fluoroethylene carbonate and difluoroethylene carbonate. Preferably, said electrolyte comprises a lithium salt, wherein said lithium salt is preferably selected from the group consisting of lithium perchlorate, lithium hexafluoroarsenate, lithium tetrafluoroborate, lithium trifluromethanesulfonate, lithium bis(trifluoromethanesulfonyl)imide, lithium bis(flurorosulfonyl)imide (LiN(SO₂F)₂) and lithium hexafluorophosphate. Most preferably, said electrolyte comprises a solvent, preferably a solvent comprising a carbonate group, preferably one of the above-mentioned preferred solvents, and a lithium salt, preferably one of the above-mentioned preferred lithium salts.

Preferably, said first additive (as defined above) is soluble in or miscible with said electrolyte.

According to a further aspect, there is provided an electrochemical cell comprising an article as defined above in the context of the first aspect and in the claims.

Preferably, said electrochemical cell comprises a second electrode comprising a material selected from the group consisting of lithium intercalation compounds and sulfur, wherein said lithium intercalation compound is preferably selected from the group consisting of lithium nickel manganese cobalt oxide, lithium nickel cobalt aluminum oxide, lithium iron phosphate and lithium cobalt oxide. Preferably, said second electrode has a voltage with respect to lithium of greater than 2.8 V and less than or equal to 4.5 V.

Preferably, said electrochemical cell comprises an electrolyte comprising a solvent, preferably a solvent comprising a carbonate group, wherein said solvent is preferably selected from the group consisting of dimethyl carbonate, diethyl carbonate, ethyl methyl carbonate, propylene carbonate, dioxolanes, dimethoxyethane, ethylene carbonate, fluoroethylene carbonate and difluoroethylene carbonate. Preferably, said electrolyte comprises a lithium salt, wherein said lithium salt is preferably selected from the group consisting of lithium perchlorate, lithium hexafluoroarsenate, lithium tetrafluoroborate, lithium trifluromethanesulfonate, lithium bis(trifluoromethanesulfonyl)imide, lithium bis(flurorosulfonyl)imide (LiN(SO₂F)₂) and lithium hexafluorophosphate. Most preferably, said electrolyte comprises a solvent, preferably a solvent comprising a carbonate group, preferably one of the above-mentioned preferred solvents, and a lithium salt, preferably one of the above-mentioned preferred lithium salts.

Preferably, said electrochemical cell further comprises a protective layer. Preferably, said protective layer is disposed on the first electrode. Preferably said protective layer is porous.

According to a further aspect, there is provided a process, especially a process for preparing an article as defined above and in the claims resp. a cell as defined above and in the claims, said process comprising the steps of
introducing
(i) a first additive wherein the first additive comprises a xanthate group;
(ii) a second additive wherein the second additive comprises an (oxalato)borate group,
into an article for production of or use in an electrochemical cell, said article comprising
- a first electrode comprising lithium metal, said first electrode having a first electrode surface;
- a second electrode, said second electrode having a second electrode surface;
- and an electrolyte
or into an electrochemical cell comprising said article, wherein the first additive and the second additive are introduced into the electrolyte, the second additive is introduced in an amount at greater than or equal to 0.2 wt% versus the total weight of the electrolyte, and wherein the ratio of the total weight of the first additive to the total weight of the second additive is less than or equal to 3.

Accordingly, said first additive comprises a xanthate group, i.e. is a compound comprising one or more xanthate groups, and said second additive comprises an (oxalato)borate group, i.e. is a compound comprising one or more (oxaiato)borate groups. The second additive is introduced in an amount greater than or equal to 0.2 wt% versus the total weight of the electrolyte.

In said process, said first additive is preferably selected from the group consisting of lithium xanthate, lithium ethyl xanthate, lithium isobutyl xanthate, potassium xanthate, potassium ethyl xanthate, potassium isobutyl xanthate and a polymer which comprises xanthate functional groups. Said second additive is preferably selected from the group consisting of lithium bis(oxalato)borate and lithium difluoro(oxalato)borate. Preferably, said first additive is selected from the group consisting of lithium xanthate, lithium ethyl xanthate, lithium isobutyl xanthate, potassium xanthate, potassium ethyl xanthate, potassium isobutyl xanthate and a polymer which comprises xanthate functional groups, and said second additive is selected from the group consisting of lithium bis(oxalato) borate and lithium difluoro(oxalato)borate.

According to a further aspect, there is provided a use of
(i) a first additive wherein the first additive comprises a xanthate group;
(ii) a second additive wherein the second additive comprises an (oxalato)borate group,
for preparing an article as defined above and in the claims or an electrochemical cell as defined above and in the claims.

Accordingly, said first additive comprises a xanthate group, i.e. is a compound comprising one or more xanthate groups, and said second additive comprises an (oxalato)borate group, i.e. is a compound comprising one or more (oxalato)borate groups. The second additive is introduced in an amount greater than or equal to 0.2 wt% versus the total weight of the electrolyte.

According to a first alternative aspect (not part of the claimed invention), there is provided an article for production of or use in an electrochemical cell, said article comprising:
- a first electrode comprising lithium, said first electrode comprising a first surface;
- a second electrode, said second electrode comprising a second surface;
- an electrolyte;
wherein said article further comprises
(i) a first additive selected from the group consisting of compounds containing an N-O functional group;
   and
(ii) a second additive consisting of one or more compounds selected from the group consisting of lithium difluoro(oxalato)borate and compounds which do not have a vinyl group but are capable of developing a vinyl group upon cycling of the electrochemical cell.

Accordingly, in said article, (i) said first additive is a compound containing an N-O functional group, and (ii) said second additive consists of one or more compounds selected from the group consisting of lithium difluoro(oxalato)borate and compounds which do not have a vinyl group but are capable of developing a vinyl group upon cycling of the electrochemical cell.

Said compound containing an N-O functional group is preferably selected from the group consisting of nitrates and nitrites, preferably potassium nitrate, potassium nitrite, lithium nitrate, lithium nitrite, guanidine nitrate, pyridine nitrate, polynitrostyrene and nitrocellulose.

Said compounds which do not have a vinyl group but are capable of developing a vinyl group upon cycling of the electrochemical cell are preferably selected from the group consisting of fluoroethylene carbonate and difluoroethylene carbonate.

In certain preferred cases, said second additive is lithium difluoro(oxalato)borate. In other preferred cases, said second additive is selected from the group consisting of fluoroethylene carbonate and difluoroethylene carbonate, i.e. is one or both of fluoroethylene carbonate and difluoroethylene carbonate. In other preferred cases, said second additive consists of lithium difluoro(oxalato)borate and one or both compounds selected from the group consisting of fluoroethylene carbonate and difluoroethylene carbonate.

Preferably, (i) said first additive is lithium nitrate and (ii) said second additive is lithium difluoro(oxalato)borate. Alternatively preferred, (i) said first additive is lithium nitrate and (ii) said second additive consists of lithium difluoro(oxalato)borate and one or both compounds selected from the group consisting of fluoroethylene carbonate and difluoroethylene carbonate.

Preferably, said second electrode comprises a material selected from the group consisting of lithium intercalation compounds and sulfur, wherein said lithium intercalation compound is preferably selected from the group consisting of lithium nickel manganese cobalt oxide, lithium nickel cobalt aluminum oxide, lithium iron phosphate and lithium cobalt oxide. Preferably, said second electrode has a voltage with respect to lithium of greater than 2.8 V and less than or equal to 4.5 V.

Preferably, said electrolyte comprises a solvent, preferably a solvent comprising a carbonate group, wherein said solvent is preferably selected from the group consisting of dimethyl carbonate, diethyl carbonate, ethyl methyl carbonate, propylene carbonate, dioxolanes, dimethoxyethane, ethylene carbonate, fluoroethylene carbonate and difluoroethylene carbonate. Preferably, said electrolyte comprises a lithium salt, wherein said lithium salt is preferably selected from the group consisting of lithium perchlorate, lithium hexafluoroarsenate, lithium tetrafluoroborate, lithium trifluromethanesulfonate, lithium bis(trifluoromethanesulfonyl)imide, lithium bis(flurorosulfonyl)imide (LiN(SO₂F)₂), lithium bis(oxalato) borate and lithium hexafluorophosphate. Most preferably, said electrolyte comprises a solvent, preferably a solvent comprising a carbonate group, preferably one of the above-mentioned preferred solvents, and a lithium salt, preferably one of the above-mentioned preferred lithium salts.

Preferably, said first additive (as defined above) is soluble in or miscible with said electrolyte.

According to a further alternative aspect (not part of the claimed invention), there is provided an electrochemical cell comprising an article as defined above in the context of the alternative first aspect.

Preferably, said electrochemical cell comprises a second electrode comprising a material selected from the group consisting of lithium intercalation compounds and sulfur, wherein said lithium intercalation compound is preferably selected from the group consisting of lithium nickel manganese cobalt oxide, lithium nickel cobalt aluminum oxide, lithium iron phosphate and lithium cobalt oxide. Preferably, said second electrode has a voltage with respect to lithium of greater than 2.8 V and less than or equal to 4.5 V.

Preferably, said electrochemical cell comprises an electrolyte comprising a solvent, preferably a solvent comprising a carbonate group, wherein said solvent is preferably selected from the group consisting of dimethyl carbonate, diethyl carbonate, ethyl methyl carbonate, propylene carbonate, dioxolanes, dimethoxyethane, ethylene carbonate, fluoroethylene carbonate and difluoroethylene carbonate. Preferably, said electrolyte comprises a lithium salt, wherein said lithium salt is preferably selected from the group consisting of lithium perchlorate, lithium hexafluoroarsenate, lithium tetrafluoroborate, lithium trifluromethanesulfonate, lithium bis(trifluoromethanesulfonyl)imide, lithium bis(flurorosulfonyl)imide (LiN(SO₂F)₂), lithium bis(oxalato) borate and lithium hexafluorophosphate. Most preferably, said electrolyte comprises a solvent, preferably a solvent comprising a carbonate group, preferably one of the above-mentioned preferred solvents, and a lithium salt, preferably one of the above-mentioned preferred lithium salts.

According to a further alternative aspect (not part of the claimed invention), there is provided a process, especially a process for preparing an article as defined above in the in the context of the first alternative aspect resp. a cell as defined above, said process comprising the steps of
introducing
(i) a first additive selected from the group consisting of compounds containing an N-O functional group
   and
(ii) a second additive selected from the group consisting of lithium difluoro(oxalato)borate and compounds which do not have a vinyl group but are capable of developing a vinyl group upon cycling of the electrochemical cell
into an article for production of or use in an electrochemical cell, said article comprising
- a first electrode comprising lithium metal, said first electrode having a first electrode surface;
- a second electrode, said second electrode having a second electrode surface;
- and an electrolyte;
or into an electrochemical cell comprising said article.

Accordingly, in said process, (i) said first additive is a compound containing an N-O functional group, and (ii) said second additive consists of one or more compounds selected from the group consisting of lithium difluoro(oxalato)borate and compounds which do not have a vinyl group but are capable of developing a vinyl group upon cycling of the electrochemical cell.

Preferably, introducing said first additive (as defined above) comprises dissolving said first additive in said electrolyte or mixing said first additive with said electrolyte.

According to another alternative aspect (not part of the claimed invention), there is provided a use of
(i) a first additive selected from the group consisting compounds containing an N-O functional group and
(ii) a second additive consisting of one or more compounds selected from the group consisting of lithium difluoro(oxalato)borate and compounds which do not have a vinyl group but are capable of developing a vinyl group upon cycling of the electrochemical cell
for preparing an article as defined above in the context of the alternative first aspect or an electrochemical cell as defined above.

Accordingly, (i) said first additive is a compound containing an N-O functional group, and (ii) said second additive consists of one or more compounds selected from the group consisting of lithium difluoro(oxalato)borate and compounds which do not have a vinyl group but are capable of developing a vinyl group upon cycling of the electrochemical cell.

According to an alternative further aspect (not part of the claimed invention), there is provided an article for production of or use in an electrochemical cell, said article comprising:
- a first electrode comprising lithium, said first electrode comprising a first surface;
- a second electrode, said second electrode comprising a second surface;
- an electrolyte;
wherein said article further comprises
(i) a first additive selected from the group consisting of compounds containing an N-O functional group;
   and
(ii) a second additive consisting of one or more compounds selected from the group consisting of lithium difluoro(oxalato)borate and difluoroethylene carbonate.

Accordingly, in said article according to the fist aspect, (i) said first additive comprises a xanthate group, i.e. is a compound comprising one or more xanthate groups, and said second additive comprises an (oxalato)borate group, i.e. is a compound comprising one or more (oxalato)borate groups. The second additive is present in the electrolyte at greater than or equal to 0.2 wt% versus the total weight of the electrolyte, and in said article according to said first alternative aspect, (i) said first additive is a compound containing an N-O functional group, and (ii) said second additive consists of one or more compounds selected from the group consisting of lithium difluoro(oxalato)borate and difluoroethylene carbonate.

Without wishing to be bound by any theory regarding the effect of the first and second additive as defined above, in the following detailed description said first additive(s) (as defined above resp. in the claims) are referred to as "first passivating agent(s)", and said second additive(s) (as defined above resp. in the claims) are referred to as "second passivating agent(s)".

In the following detailed description, the first electrode (which comprises lithium) as defined above resp. in the claims, is also referred to as anode, and the second electrode, as defined above resp. in the claims, is also referred to as cathode.

Furthermore, in the following detailed description, the term "first electrode surface" resp. "first surface" refers to the surface of the first electrode (which comprises lithium) as defined above resp. in the claims, and the term "second electrode surface" resp. "second surface" refers to the surface of the second electrode as defined above resp. in the claims.

Furthermore, in the following detailed description, the term "first passivating layer" refers to a layer comprising the first passivating agent and/or a precursor thereof and/or a product of a reaction involving the first passivating agent, irrespective of the location of said layer in the cell; and the term "second passivating layer" refers to a layer comprising the second passivating agent and/or a precursor thereof and/or a product of a reaction involving the second passivating agent, irrespective of the location of said layer in the cell.

In case an article for production of or use in an electrochemical cell is provided, said article may be transformed into an electrochemical cell by a conditioning process. The conditioning process may take any suitable form, such as a chemical, physical, spatial, and/or morphological transformation of one or more components of said article. It should also be noted that while much of the discussion herein focuses on electrochemical cells and configurations of electrochemical cells, this is by no means limiting and any references to electrochemical cells should be understood to also encompass articles for production of or use in an electrochemical cell where appropriate.

Advantages and novel features of the present invention will become apparent from the following detailed description of the invention when considered in conjunction with the accompanying figures.

Specific aspects of the present invention will be described by way of example with reference to the accompanying figures, which are schematic and are not intended to be drawn to scale. In the figures, each identical or nearly identical component illustrated is typically represented by a single numeral. For purposes of clarity, not every component is labeled in every figure, nor is every component shown where illustration is not necessary to allow those of ordinary skill in the art to understand the invention. In the figures:

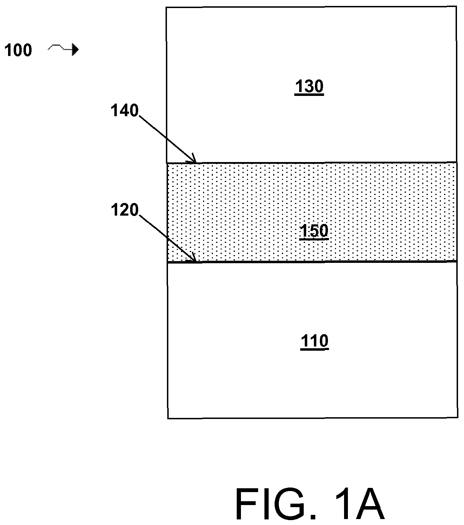

FIG. 1A is a cross-sectional schematic illustration of an electrochemical cell comprising a first electrode comprising a first surface, a second electrode comprising a second surface, and an electrolyte, said cell also comprising a first and a second passivating agent;

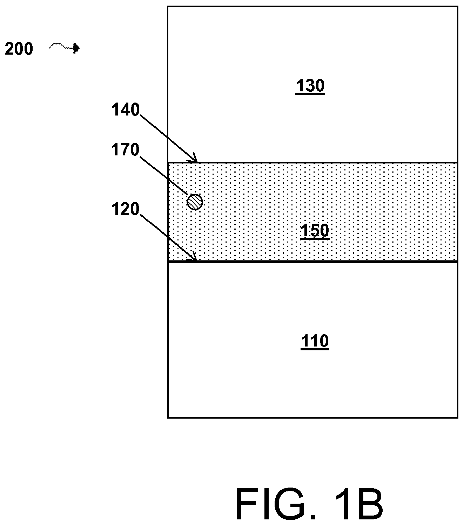

FIG. 1B is a cross-sectional schematic illustration of an electrochemical cell comprising a first electrode surface passivated by a first passivating agent, a second electrode comprising a second surface, and an electrolyte comprising a first passivating agent, said cell also comprising a second passivating agent;

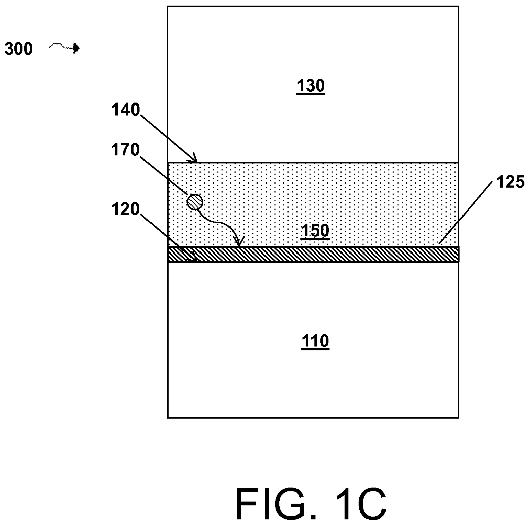

FIG. 1C is a cross-sectional schematic illustration of an electrochemical cell comprising a first electrode comprising a first surface, a first passivating layer adjacent the first surface, a second electrode comprising a second surface, and an electrolyte, said cell also comprising a second passivating agent;

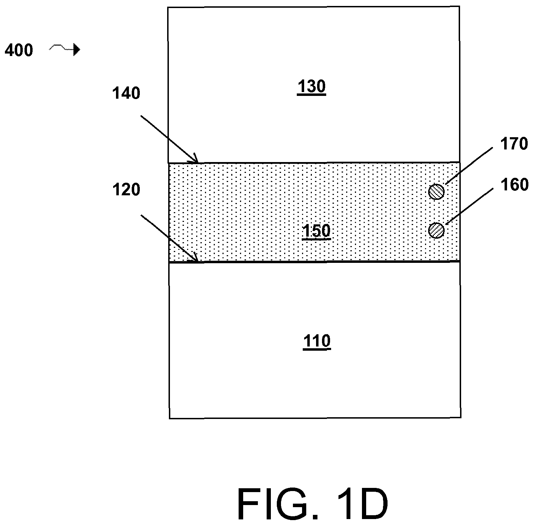

FIG. 1D is a cross-sectional schematic illustration of an electrochemical cell comprising a first electrode surface passivated by a first passivating agent, a second electrode surface passivated by a second passivating agent, and an electrolyte comprising a first passivating agent and a second passivating agent;

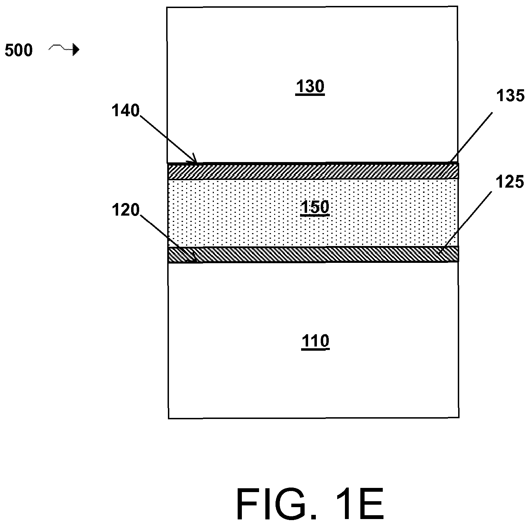

FIG. 1E is a cross-sectional schematic illustration of an electrochemical cell comprising a first electrode comprising a first surface, a first passivating layer adjacent the first surface, a second electrode comprising a second surface, a second passivating layer adjacent the second surface, and an electrolyte;

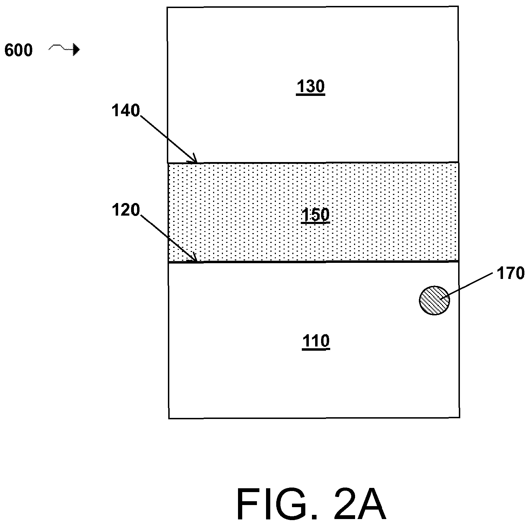

FIG. 2A is a cross-sectional schematic illustration of an electrochemical cell comprising a first electrode comprising a first surface, a reservoir comprising a first passivating agent, a second electrode comprising a second surface, and an electrolyte, said cell also comprising a second passivating agent;

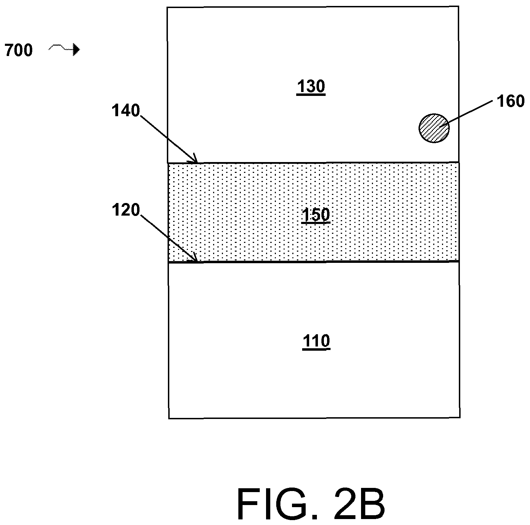

FIG. 2B is a cross-sectional schematic illustration of an electrochemical cell comprising a first electrode comprising a first surface, a second electrode comprising a second surface, a reservoir comprising a second passivating agent, and an electrolyte, said cell also comprising a first passivating agent;

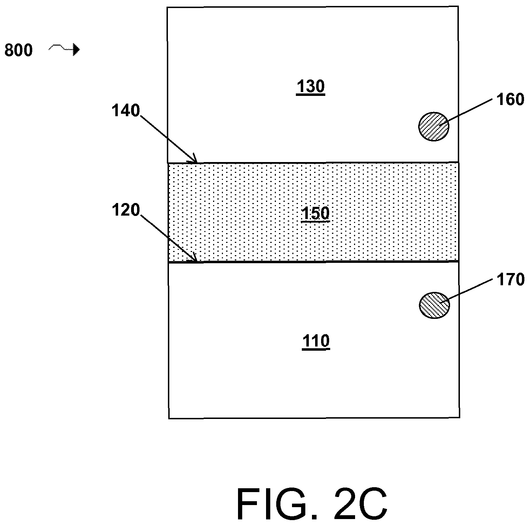

FIG. 2C is a cross-sectional schematic illustration of an electrochemical cell comprising a first electrode comprising a first surface, a second electrode comprising a second surface, a reservoir comprising a first passivating agent, and a reservoir comprising a second passivating agent, and an electrolyte;

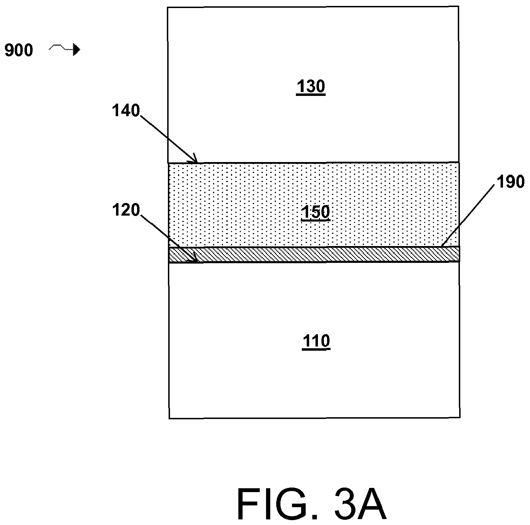

FIG. 3A is a cross-sectional schematic illustration of an electrochemical cell comprising a first electrode comprising a first surface, a second electrode comprising a second surface, a first passivating layer disposed adjacent the first surface, and an electrolyte, said cell also comprising a second passivating agent;

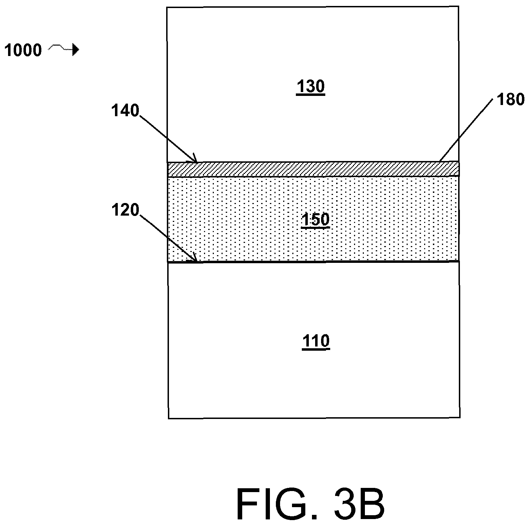

FIG. 3B is a cross-sectional schematic illustration of an electrochemical cell comprising a first electrode comprising a first surface, a second electrode comprising a second surface, a second passivating layer disposed adjacent the second surface, and an electrolyte, said cell also comprising a first passivating agent;

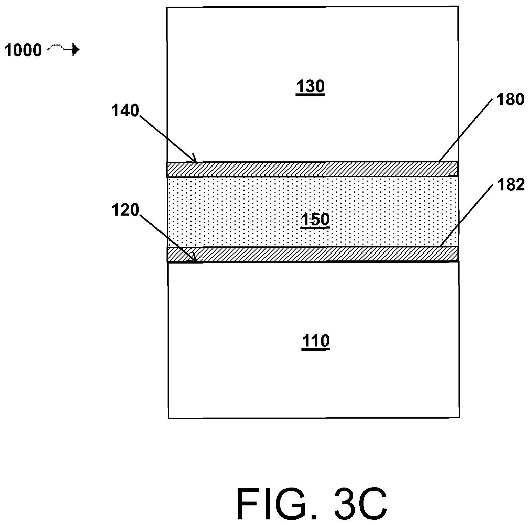

FIG. 3C is a cross-sectional schematic illustration of an electrochemical cell comprising a first electrode comprising a first surface, a second electrode comprising a second surface, a second passivating layer disposed adjacent the first surface, a further second passivating layer disposed adjacent the second surface, and an electrolyte, said cell also comprising a second passivating agent;

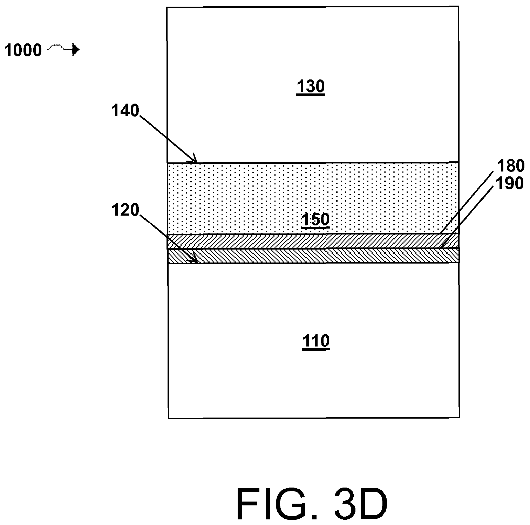

FIG. 3D is a cross-sectional schematic illustration of an electrochemical cell comprising a first electrode comprising a first surface, a second electrode comprising a second surface, a first passivating layer disposed adjacent the first surface, a second passivating layer disposed adjacent the first passivating layer, a second passivating layer disposed adjacent the second surface, and an electrolyte;

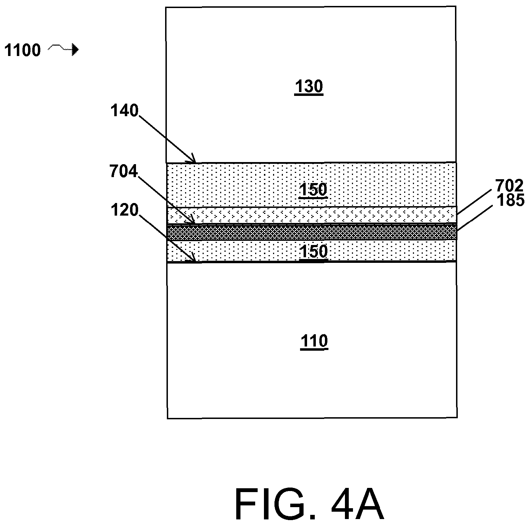

FIG. 4A is a cross-sectional schematic illustration of an electrochemical cell comprising a first electrode comprising a first surface, a second electrode comprising a second surface, a separator comprising a separator surface, a passivating layer disposed adjacent the separator surface, and an electrolyte comprising a passivating agent, wherein said cell also comprises a first and a second passivating agent;

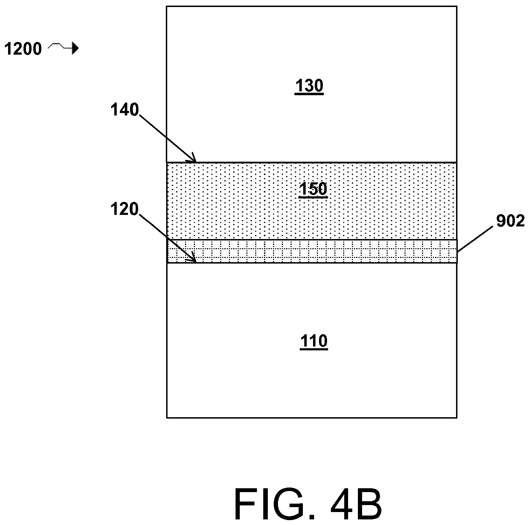

FIG. 4B is a cross-sectional schematic illustration of an electrochemical cell comprising a first electrode comprising a first surface, a second electrode comprising a second surface, a protective layer comprising a protective layer surface, and an electrolyte comprising a passivating agent,

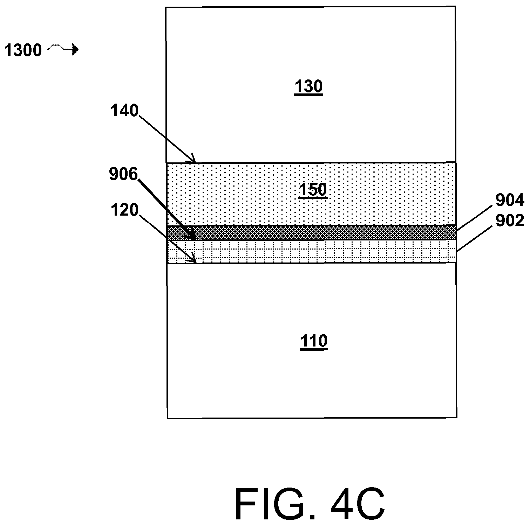

FIG. 4C is a cross-sectional schematic illustration of an electrochemical cell comprising a first electrode comprising a first surface, a second electrode comprising a second surface, a protective layer comprising a protective layer surface, a passivating agent layer disposed adjacent the protective layer surface, and an electrolyte comprising a passivating agent;

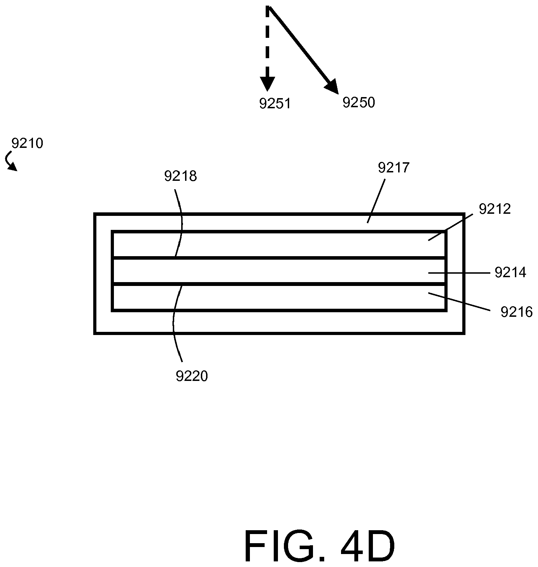

FIG. 4D is a schematic illustration of an electrochemical cell under an applied anisotropic force;

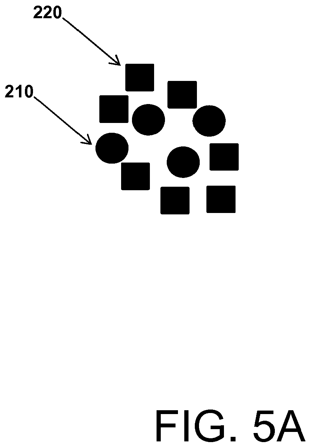

FIG. 5A is a schematic illustration of a method of treating a particulate electroactive material with a passivating agent;

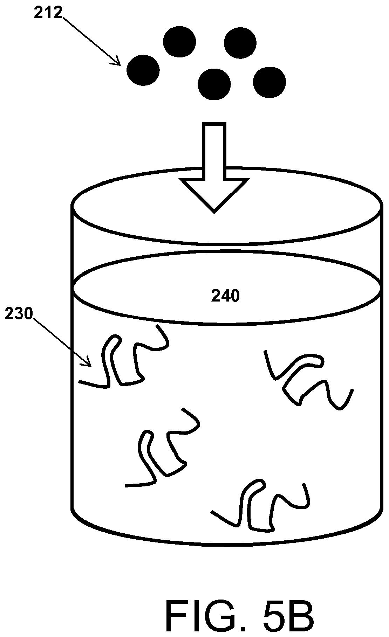

FIG. 5B is a schematic illustration of a method of adding a particulate electroactive material to a slurry;

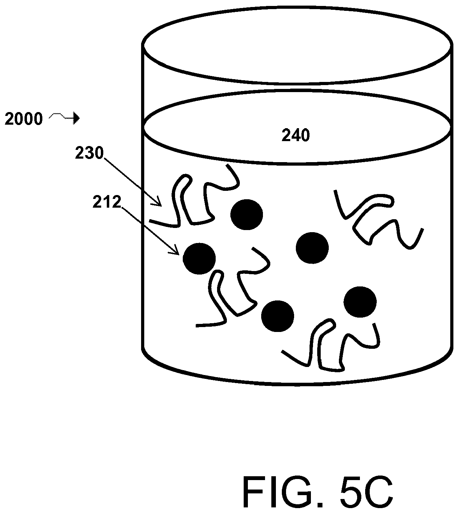

FIG. 5C is a schematic illustration of a slurry comprising a particulate electroactive material, a liquid, and a binder;

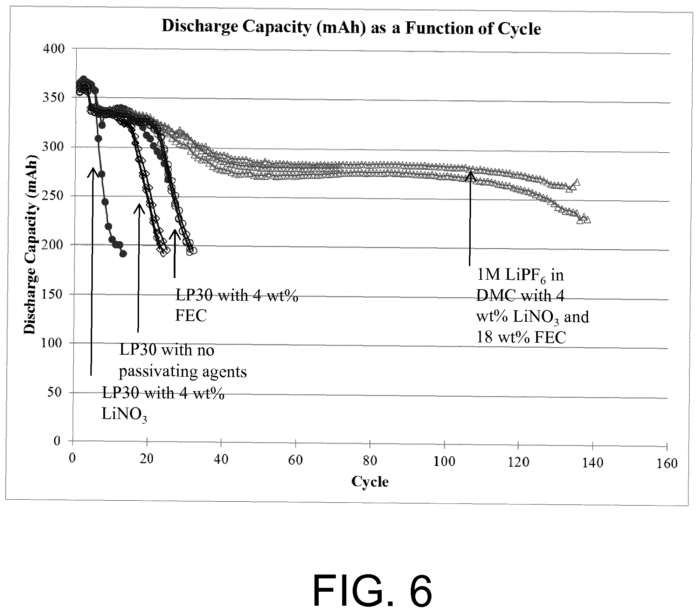

FIG. 6 is a chart showing the discharge capacities as a function of the number of charge/discharge cycles of exemplary electrochemical cells in accordance with the invention;

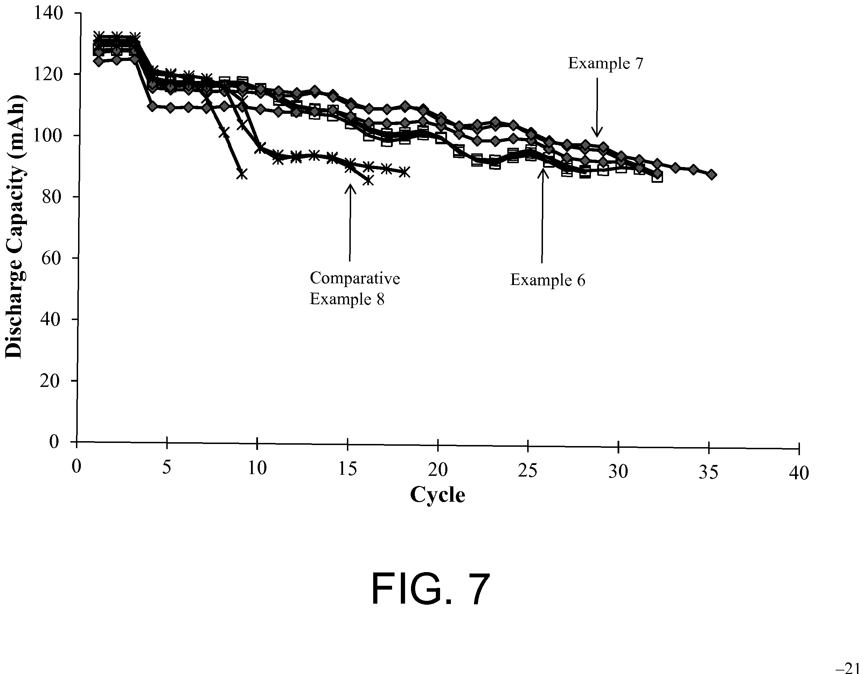

FIG. 7 is a chart showing the discharge capacities as a function of the number of charge/discharge cycles of further exemplary electrochemical cells in accordance with the invention.

A layer referred to as being "disposed on," "disposed between," "on," or "adjacent" another layer(s) means that it can be directly disposed on, disposed between, on, or adjacent the layer(s), or an intervening layer may also be present. For example, a passivating layer described herein that is adjacent the first electrode or adjacent the second electrode may be directly adjacent (e.g., may be in direct physical contact with) the first electrode or second electrode, or an intervening layer (e.g., another protective layer) may be positioned between the first electrode and the passivating layer. A layer that is "directly adjacent," "directly on," or "in contact with," another layer means that no intervening layer is present. It should also be understood that when a layer is referred to as being "disposed on," "disposed between," "on," or "adjacent" another layer(s), it may be covered by, on or adjacent the entire layer(s) or a part of the layer(s).

The species selected for incorporation into an electrochemical cell as passivating agents (e.g. the additives as defined above and in the claims) may have the ability to passivate an electrode (i.e., a first electrode as defined above resp. a second electrode as defined above). As described herein, passivating of an electrode comprises reducing or preventing the electrode surface from reacting with other species to which it is exposed and/or comprises reducing or preventing the electrode surface from catalyzing or otherwise promoting one or more reactions for a species to which it is exposed. Suitable species for passivating a surface may have the ability to react with the surface or at the surface to be passivated. The reaction of a passivating agent at a surface may be enabled by the presence of specific functional groups within the passivating agent. For example, the functional groups of a passivating agent may undergo oxidation or reduction at a surface, may polymerize at a surface, may adsorb to a surface, may block catalytic sites at a surface, may react with catalytic sites such that the catalytic sites are deactivated, and/or may form a layer at a surface. Passivating a surface may comprise forming a layer directly adjacent to the surface that prevents other species from accessing the surface and/or may comprise reacting with the surface such that the surface loses its catalytic ability. Exemplary passivating agent chemistries are described in further detail below.

Without wishing to be bound by any theory, the first passivating agent (e.g. first additive as defined above and in the claims) refers to a species capable of passivating the first electrode. Herein, passivating of the first electrode comprises reducing or preventing the first electrode surface from reacting with other species to which it is exposed and/or reducing or preventing the first surface from catalyzing or otherwise promoting one or more reactions for a species to which it is exposed. Suitable species for passivating the first surface may have the ability to react with said surface or at said surface. The reaction of a passivating agent at the first surface may be enabled by the presence of specific functional groups within the passivating agent. Passivating a surface may comprise forming a layer directly adjacent to the surface that prevents other species from accessing the surface and/or may comprise reacting with the surface such that the surface loses its catalytic ability. Herein, the first passivating agent may form a first passivating layer, which irrespective of the location of said layer in the cell is a layer comprising the first passivating agent and/or a layer comprising a product of a reaction involving the first passivating agent. As described in more detail below, in some cases the first passivating agent is selected from the group consisting of species configured to passivate (and/or capable of passivating) the first electrode surface (anode surface, lithium surface) by preventing reaction between the lithium surface and electrolyte components.

More specifically, said first passivating agents (i.e. first additives as defined above and in the claims) comprise a xanthate group.

Without wishing to be bound by any theory, the second passivating agent (e.g. second additive as defined above and in the claims) refers to a species capable of passivating the second electrode and/or to reduce the rate of decomposition of the first passivating agent and/or a solvent or electrolyte. Herein, passivating of the second electrode comprises reducing or preventing the second electrode surface from reacting with other species to which it is exposed and/or reducing or preventing the second surface from catalyzing or otherwise promoting one or more reactions for a species to which it is exposed. Suitable species for passivating the second surface may have the ability to react with said surface or at said surface. The reaction of a passivating agent at the second surface may be enabled by the presence of specific functional groups within the passivating agent. Passivating a surface may comprise forming a layer directly adjacent to the surface that prevents other species from accessing the surface and/or may comprise reacting with the surface such that the surface loses its catalytic ability. Herein, the second passivating agent may form a second passivating layer, which irrespective of the location of said layer in the cell is a layer comprising the second passivating agent and/or a layer comprising a product of a reaction involving the second passivating agent. Said second passivating layer may be formed at the second surface and/or at other locations in the electrochemical cell.

As described in more detail below, in some cases the second passivating agent is selected so as to reduce or prevent decomposition of the first passivating agent and/or to reduce or prevent decomposition of an electrolyte component promoted by the first passivating agent during cycling of the electrochemical cell. In particular, the second passivating agent is selected so as to reduce of prevent reaction or decomposition of the first passivating agent and/or electrolyte components at the second electrode surface. These effects may result in the electrochemical cell having an improved (e.g., longer) cycle life. More specifically, said second passivating agents (i.e. second additives as defined above and in the claims) comprise an (oxalato)borate group.

More specifically, said second passivating agents (i.e. second additives as defined above in the context of the alternative aspects) are one or more compounds selected from the group consisting of lithium difluoro(oxalato)borate and compounds which do not have a vinyl group but are capable of developing a vinyl group upon cycling of the electrochemical cell.

A passivating agent as used herein may have a beneficial interaction with one surface or component of an electrochemical cell but may have a deleterious interaction with a different surface or component of the same electrochemical cell. For example, a first passivating agent (e.g. first additive as defined above and in the claims) is configured to passivate (and/or capable of passivating) a first electrode as defined above (anode) of an electrochemical cell by reducing electrolyte decomposition at the first electrode. However, the first passivating agent may be susceptible to decomposition at the second electrode as defined above (cathode), or may enhance the rate of electrolyte decomposition or solvent decomposition at the second electrode. Electrochemical cells incorporating such agents may have reduced gas evolution at the first electrode, but may have enhanced gas evolution at the second electrode during cycling. Thus, in some cases, adding the first passivating agent to an electrochemical cell alone (i.e. without a second passivating agent described herein) may reduce overall cell life compared to a cell without the first passivating agent (all other factors being equal), because the harm due to enhanced reactivity of the second electrode may be greater than the benefit due to reduced reactivity of the first electrode. Experimental data regarding the cycle life of cells with and without a first passivating agent are described in more detail below in the Examples section.

A passivating agent may have a beneficial interaction with one surface or component of an electrochemical cell but may have neutral reactions with other surfaces or component of the same electrochemical cell. For instance, the passivating agent may neither passivate the surface nor decompose on said other surface or component. A passivating agent with a neutral interaction with a surface may neither passivate the surface nor catalyze the decomposition of one or more other species on the surface. A first passivating agent may be configured to passivate (and/or capable of passivating) a first electrode (e.g., an anode) of an electrochemical cell by reducing electrolyte decomposition at the first electrode, but the first passivating agent may have neutral interactions with the second electrode (e.g., cathode). Electrochemical cells incorporating such agents may have reduced gas evolution at the first electrode, but may have equivalent gas evolution at the second electrode during cycling, compared to an electrochemical cell without the first passivating agent (all other factors being equal). Adding the first passivating agent to an electrochemical cell alone (without a second passivating agent described herein) may increase overall cell life compared to a cell without the first passivating agent (all other factors being equal) due to reduced reactivity of the first electrode.

According to the present invention, an electrochemical cell or article for production of or use in an electrochemical cell includes a second passivating agent (second additive as defined above and in the claims) in addition to the first passivating agent (e.g. first additive as defined above and in the claims). The second passivating agent may aid in passivating a second electrode (e.g., a cathode). As described herein, passivation of the second electrode may involve reducing or preventing decomposition of a first passivating agent at the second electrode, reducing or preventing decomposition of an electrolyte or solvent at the second electrode, and/or forming a passivating layer at the second electrode. Therefore, advantageously an electrochemical cell comprising both a first passivating agent (e.g. first additive as defined above and in the claims) and a second passivating agent (e.g. second additive as defined above and in the claims) may result in enhanced cycle life compared to a cell lacking passivating agents (or a cell including only a single but not both passivating agents), all other factors being equal. This is because according to the present invention the first passivating agent is configured to reduce (and/or capable of reducing) the rate of one or more undesired reactions at the first surface, and the second passivating agent is configured to reduce (and/or capable of reducing) the rate of one or more undesired reactions at the second surface. The second passivating agent may be configured to reduce (and/or capable of reducing) the rate of decomposition of the first passivating agent and/or of a solvent and/or of an electrolyte. In particular, there may be a synergistic effect wherein the combination of both passivating agents yields a benefit that is greater than the sum of the individual benefits derived from each passivating agent in the absence of the other. A cell comprising both a first passivating agent (e.g. first additive as defined above and in the claims) and a second passivating agent (e.g. second additive as defined above and in the claims) may have reduced gas emission compared to cells lacking either or both passivating agents, and/or may have an increased cycle life compared to cells lacking either or both passivating agents. Experimental data regarding the cycle life of cells with and without first and second passivating agents are described in more detail below in the Examples section.

Accordingly, in some cases, in the absence of the second passivating agent, the first passivating agent may have the effect of reducing the cycle life of an electrochemical cell, compared to a control electrochemical cell that does not include the first or the second passivating agents, all other factors being equal. However, the simultaneous presence of the first and second passivating agents may increase cycle life of an electrochemical cell compared to the control electrochemical cell, all other factors being equal. In such cases advantageously the second passivating agent is configured such that it is capable to reduce or prevent decomposition of the first passivating agent during cycling of the electrochemical cell and/or to reduce or prevent decomposition of an electrolyte component promoted by the first passivating agent during cycling of the electrochemical cell, compared to decomposition in an electrochemical cell that does not include the second passivating agent, all other factors being equal. For example, the second passivating agent may reduce oxidation of the first passivating agent and/or of an electrolyte. In some cases, the second passivating agent prevents or reduces the formation of gases produced by decomposition of the first passivating agent and/or the electrolyte at the surface of the second electrode component. Other configurations of first and second passivating agents are also possible.

In other cases, the first passivating agent may, in the absence of the second passivating agent, increase the cycle life of an electrochemical cell, compared to a control electrochemical cell that does not include the first or the second passivating agents, all other factors being equal. However, the presence of the first and second passivating agents may increase cycle life of an electrochemical cell compared to the control electrochemical cell, and compared to the electrochemical cell including the first passivating agent but lacking the second passivating agent, all other factors being equal.

Furthermore, the second passivating agent (in combination with the first passivating agent) may allow for the use of the first passivating agent in high capacity electrochemical cells which would otherwise cause decomposition of the first passivating agent(s) upon operation. For example, the second passivating agent may allow for the use of the first passivating agent in combination with second electrodes (cathodes) which operate at voltages which would otherwise cause decomposition of the first passivating agent. Thus, use of the second passivating agent may enable the realization of the benefits of the first passivating agent in a larger variety of electrochemical cell types.

In another instance, an electrochemical cell may comprise two or more passivating agents referred to herein as first passivating agents without comprising any passivating agents referred to herein as second passivating agents. The two first passivating agents may interact synergistically to enhance one or more properties of the electrochemical cell to an extent beyond what would be expected from the effects on the electrochemical cell of either first passivating agent individually. Moreover, an electrochemical cell may comprise two or more passivating agents referred to herein as first passivating agents and comprise one or more passivating agents referred to herein as second passivating agents.

In another instance, an electrochemical cell may comprise two or more passivating agents referred to herein as second passivating agents without comprising any passivating agents referred to herein as first passivating agents. The two second passivating agents may interact synergistically to enhance one or more properties of the electrochemical cell to an extent beyond what would be expected from the effects on the electrochemical cell of either second passivating agent individually, Moreover, an electrochemical cell may comprise two or more passivating agents referred to herein as second passivating agents and comprise one or more passivating agents referred to herein as first passivating agents.

The first as well as the second passivating agent may be a part of any suitable component of the electrochemical cell. In some cases, one or both of the first and second passivating agents is/are present in the electrolyte (e.g. admixed to the electrolyte, or in dissolved and/or suspended form) of the electrochemical cell or of an article for production of or use in the electrochemical cell. In other cases, one or both of the first and second passivating agents is/are present in solid form (e.g., as one or more particles or as one or more solid structures) in the electrochemical cell or in an article for production of or use in the electrochemical cell. In some cases, one or both of the first and second passivating agents is/are at least initially present in the form of a layer in the electrochemical cell or in an article for production of or use in the electrochemical cell. The first passivating agent may be disposed adjacent any suitable layer within the electrochemical cell or within an article for production of or use in the electrochemical cell, and the second passivating agent may be disposed adjacent any suitable layer within the electrochemical cell or within an article for production of or use in the electrochemical cell.

Preferably the first as well as the second passivating agent are present in dissolved form in the electrolyte. However, especially in the case that the solution concentration of the first and/or the second passivating agent is low due to limited solubility, then it might be preferable that said first and/or the second passivating agent is present in solid form, i.e. on the form of particles or in the form of a layer, especially a layer adjacent to an electrode.

In some cases, the first passivating agent passivates the first surface by forming a first passivating layer adjacent to the first surface, and the second passivating agent passivates the second surface by forming a second passivating layer adjacent to the second surface and/or at other locations in the electrochemical cell.

In other cases, the first passivating agent passivates the first surface by forming a first passivating layer adjacent to the first surface while the second passivating layer passivates the second surface without forming a second passivating layer adjacent to the second surface, or the second passivating agent passivates the second surface by forming a second passivating layer adjacent to the second surface while the first passivating layer passivates the first surface without forming a first passivating layer adjacent to the first surface.

The chemical compositions of the first and/or second passivating layers may be analyzed using X-ray photoelectron spectroscopy (XPS).

FIG. 1A depicts an electrochemical cell 100 according the invention. Cell 100 comprises a first electrode 110 comprising a first electrode surface 120, a second electrode 130 comprising a second electrode surface 140, and an electrolyte 150. The electrochemical cell further comprises both a first passivating agent (e.g. first additive as defined in the claims, not shown) and a second passivating agent (e.g. second additive as defined in the claims, not shown). As described in more detail below, the first as well as the second passivating agent may be a part of any suitable component of the electrochemical cell. For instance, the first and/or second passivating agents are present in the electrolyte (e.g., electrolyte 150), and/or in the form of particles in a component of the cell, and/or in the form of a layer in the cell. Other configurations are also possible.

FIG. 1B depicts an electrochemical cell 200 according the invention in which the first surface 120 has been passivated by a first passivating agent 170. Although first passivating agent 170 is shown as having a relatively large size in FIG. 1B, it should be appreciated that this is for illustrative purposes only, and that the passivating agent may have any suitable form as described herein, such as in the form of a solvated salt. The electrochemical cell also includes a second passivating agent as described herein (not shown).

The first passivating agent may passivate the first surface by forming a passivating layer. FIG. 1C depicts an electrochemical cell 300 according the invention including a first passivating layer. Cell 300 comprises a first electrode 110, a first electrode surface 120, a first passivating layer 125 adjacent the first electrode surface, a second electrode 130, a second electrode surface 140, and an electrolyte 150. As shown illustratively in this figure, the first passivating layer may be formed when the first passivating agent reacts to form a first passivating layer directly adjacent the first electrode. The electrochemical cell also includes a second passivating agent as described herein (not shown).

FIG. 1D depicts an electrochemical cell 400 according the invention in which the first surface 120 has been passivated by a first passivating agent 170 and the second surface 140 has been passivated by a second passivating agent 160. Herein, the first passivating agent may passivate the first surface by forming a first passivating layer adjacent to the first surface (as shown in figure 1C) while the second passivating layer may passivate the second surface without forming a second passivating layer adjacent to the second surface.

In other cases, the second passivating agent passivates the second surface by forming a second passivating layer. FIG. 1E depicts an electrochemical cell 500 according to the invention including a first passivating layer and a second passivating layer. Cell 500 comprises a first electrode 110, a first electrode surface 120, a first passivating layer 125 adjacent the first electrode surface 120, a second electrode 130, a second passivating layer 135 adjacent a second electrode surface 140, and an electrolyte 150. As shown illustratively in this figure, the second passivating layer may be formed when a second passivating agent reacts to form a second passivating layer directly adjacent the second electrode (cathode).

In some cases, one or both of the first and second passivating agents is/are present in the electrolyte of the electrochemical cell or of an article for production of or use in the electrochemical cell.

The first passivating agent may be added to the electrolyte prior to, during or after formation of the electrochemical cell. The first passivating agent may be added at a concentration such that it fully dissolves in the electrolyte, or at a concentration at which it only partially dissolves in the electrolyte. Accordingly, the electrolyte may be unsaturated, saturated, or supersaturated in the first passivating agent after the addition step. The first passivating agent may be added to the electrolyte at a concentration that is in excess of its solubility limit in the electrolyte, and may be present in the electrolyte such that it is partially dissolved in the electrolyte and partially undissolved (e.g. suspended) in the electrolyte. In some cases, the first passivating agent is added to and at least partially dissolved within the electrolyte which is then added to the other components of the electrochemical cell or of an article for production of or use in the electrochemical cell. Herein, the first passivating agent is present in the electrolyte prior to cycling of the electrochemical cell. In other cases, the first passivating agent is added to the electrolyte after formation of the electrochemical cell (e.g., during cycling). Herein, the first passivating agent initially (upon formation of the electrochemical cell) may be part of a different component (i.e. different from the electrolyte) of the electrochemical cell or of an article for production of or use in the electrochemical cell, e.g., a part of the first electrode (e.g., anode), second electrode (e.g. cathode), and/or separator, so that minimal or no amount of the first passivating agent may be present in the electrolyte at this time. After a certain amount of time and/or upon use (e.g., first use or first discharge, subsequent use) of the electrochemical cell, all or portions of the first passivating agent may migrate into the electrolyte.

Likewise, the second passivating agent may be added to the electrolyte prior to, during or after formation of the electrochemical cell. The second passivating agent may be added at a concentration such that it fully dissolves in the electrolyte, or at a concentration at which it only partially dissolves in the electrolyte. Accordingly, the electrolyte may be unsaturated, saturated, or supersaturated in the second passivating agent after the addition step. The second passivating agent may be added to the electrolyte at a concentration that is in excess of its solubility limit in the electrolyte, and may be present in the electrolyte such that it is partially dissolved in the electrolyte and partially undissolved (e.g. suspended) in the electrolyte. In some cases, the second passivating agent is added to and at least partially dissolved within the electrolyte which is then added to the other components of the cell. Herein, the second passivating agent is present in the electrolyte prior to cycling of the cell. In other cases the second passivating agent is added to the electrolyte after formation of the electrochemical cell (e.g., during cycling). Herein, the second passivating agent initially (upon formation of the electrochemical cell) may be part of a different component (i.e. different from the electrolyte) of the electrochemical cell or of an article for production of or use in the electrochemical cell, e.g., a part of the first electrode (e.g., anode), second electrode (e.g. cathode), and/or separator, so that minimal or no amount of the second passivating agent may be present in the electrolyte at this time. After a certain amount of time and/or upon use (e.g., first use or first discharge, subsequent use) of the electrochemical cell, all or portions of the second passivating agent may migrate into the electrolyte.

In cases where the first passivating agent and/or second passivating agent is present in the electrolyte (e.g., in a range of weight percentages described herein), the first passivating agent and/or second passivating agent may be present in the electrolyte in solution for greater than or equal to 2 cycles of charge and discharge, for greater than or equal to 5 cycles of charge and discharge, for greater than or equal to 10 cycles of charge and discharge, or for greater than or equal to 25 cycles of charge and discharge. The first and/or second passivating agent may be present in the electrolyte in suspension (e.g., in a range of weight percentages described herein) for greater than or equal to 2 cycles of charge and discharge, for greater than or equal to 5 cycles of charge and discharge, for greater than or equal to 10 cycles of charge and discharge, or for greater than or equal to 25 cycles of charge and discharge.

In cases in which the first passivating agent and/or second passivating agent is present in the electrolyte (e.g., in a range of weight percentages described herein), the first passivating agent and/or second passivating agent may be present in solution in the electrolyte in an electrochemical cell that has been cycled fewer than 2 times, fewer than 5 times, fewer than 10 times, or fewer than 25 times. The first and/or second passivating agent may be present in the electrolyte in suspension (e.g., in a range of weight percentages described herein) in an electrochemical cell that has been cycled fewer than 2 times, fewer than 5 times, fewer than 10 times, or fewer than 25 times.

In other cases, one or both of the first and second passivating agents is/are present in solid form (e.g., as one or more particles or as one or more solid structures) in the electrochemical cell or in an article for production of or use in the electrochemical cell.

At least a portion of (or all of) the first passivating agent may be in solid form (e.g., as one or more particles or as one or more solid structures) in the electrochemical cell for at least one point in time in the life of the electrochemical cell (e.g., prior to first use or first discharge of the electrochemical cell). For example, the electrochemical cell or an article for production of or use in the electrochemical cell comprises a plurality of solid particles comprising the first passivating agent (e.g., in the electrolyte, in an electrode, in a layer, and/or in a separator). The solid comprising the first passivating agent may advantageously act as a reservoir of the first passivating agent such that the first passivating agent dissolves over time in the electrolyte (e.g., during charge/discharge of the electrochemical cell).

For example, as shown illustratively in FIG. 2A, an electrochemical cell 600 according to the invention includes a first electrode 110, a first electrode surface 120, a second electrode 130, a second electrode surface 140, an electrolyte 150, and included in said first electrode 110, a reservoir 170 comprising the first passivating agent. Herein, the first passivating agent may be in the form of one or more solid particles. The electrochemical cell also includes a second passivating agent as described herein (not shown).

At least a portion of (or all of) the second passivating agent may be in solid form (e.g., as one or more particles or as one or more solid structures) in the electrochemical cell for at least one point in time in the life of the electrochemical cell (e.g., prior to first use or first discharge of the electrochemical cell). For example, the electrochemical cell or an article for production of or use in the electrochemical cell comprises a plurality of solid particles comprising the second passivating agent (e.g., in the electrolyte, in an electrode, in a layer, and/or in a separator). The solid comprising the second passivating agent may advantageously act as a reservoir of the second passivating agent such that the second passivating agent dissolves over time in the electrolyte (e.g., during charge/discharge of the electrochemical cell).

For example, as shown illustratively in FIG. 2B, an electrochemical cell 700 according to the invention includes a first electrode 110, a first electrode surface 120, a second electrode 130, a second electrode surface 140, an electrolyte 150, and included in said second electrode 130, a reservoir 160 comprising the second passivating agent. Herein, the second passivating agent may be in the form of one or more solid particles. The electrochemical cell also includes a first passivating agent as described herein (not shown).

At least a portion of (or all of) both the first passivating agent and of the second passivating agent may be in solid form (e.g., as one or more particles or as one or more solid structures) in the electrochemical cell for at least one point in time in the life of the electrochemical cell (e.g., prior to first use or first discharge of the electrochemical cell). For example, the electrochemical cell or an article for production of or use in the electrochemical cell comprises a plurality of solid particles comprising the first passivating agent and a plurality of solid particles comprising the second passivating agent (e.g., in the electrolyte, in an electrode, in a layer, and/or in a separator). The solid comprising the first passivating agent may advantageously act as a reservoir of the first passivating agent such that the first passivating agent dissolves over time in the electrolyte (e.g., during charge/discharge of the electrochemical cell), and/or the solid comprising the second passivating agent may advantageously act as a reservoir of the second passivating agent such that the second passivating agent dissolves over time in the electrolyte (e.g., during charge/discharge of the electrochemical cell).

For example, as shown illustratively in FIG. 2C, an electrochemical cell 800 according to the invention includes a first electrode 110, a first electrode surface 120, a second electrode 130, a second electrode surface 140, an electrolyte 150, and, included in said second electrode 130, a reservoir 160 comprising the second passivating agent, and included in said first electrode 110, a reservoir 170 comprising the first passivating agent. Herein, the first passivating agent and/or the second passivating agent may be in the form of one or more solid particles.

If particles of the first passivating agent are present, the particles may have any suitable size. The average largest cross-sectional dimension of a plurality of solid particles comprising the first passivating agent may be less than or equal to 150 µm, less than or equal to 100 µm, less than or equal to 50 µm, less than or equal to 25 µm, less than or equal to 10 µm, less than or equal to 5 µm, less or equal to 2 µm, less than or equal to 1 µm, less than or equal to 800 nm, less than or equal to 500 nm, or less than or equal to 200 nm. The average largest cross-sectional dimension of the plurality of particles (comprising the first passivating agent) may independently be greater than or equal to 100 nm, greater than or equal to 200 nm, greater than or equal to 500 nm, greater than or equal to 800 nm, greater than or equal to 1 µm, greater than or equal to 2 µm, greater than or equal to 5 µm, greater than or equal to 10 µm, greater than or equal to 25 µm, or greater than or equal to 50 µm. Combinations of the above-referenced ranges are also possible (e.g., a largest cross-sectional dimension of less than 100 µm and greater than 100 nm).

If particles of the second passivating agent are present, the particles may have any suitable size. The average largest cross-sectional dimension of a plurality of solid particles comprising the second passivating agent may be less than or equal to 150 µm, less than or equal to 100 µm, less than or equal to 50 µm, less than or equal to 25 µm, less than or equal to 10 µm, less than or equal to 5 µm, less or equal to 2 µm, less than or equal to 1 µm, less than or equal to 800 nm, less than or equal to 500 nm, or less than or equal to 200 nm. The average largest cross-sectional dimension of the plurality of particles (comprising the second passivating agent) may independently be greater than or equal to 100 nm, greater than or equal to 200 nm, greater than or equal to 500 nm, greater than or equal to 800 nm, greater than or equal to 1 µm, greater than or equal to 2 µm, greater than or equal to 5 µm, greater than or equal to 10 µm, greater than or equal to 25 µm, or greater than or equal to 50 µm. Combinations of the above-referenced ranges are also possible (e.g., a largest cross-sectional dimension of less than 100 µm and greater than 100 nm).

The average largest cross-sectional dimension of a plurality of particles may be determined by imaging the particles with a scanning electron microscope (SEM). An image may be acquired at a magnification between 10X to 100,000X, depending on the overall dimensions of the plurality of particles. Those skilled in the art would be capable of selecting an appropriate magnification for imaging the sample. The average largest cross-sectional dimension of the plurality of particles can be determined by taking the longest cross-sectional dimension of each particle in the image and averaging the longest cross-sectional dimensions (e.g., averaging the longest cross-sectional dimensions for 50 particles).

In some cases, one or both of the first and second passivating agents is/are at least initially present in the form of a layer in the electrochemical cell or in an article for production of or use in the electrochemical cell. The first passivating agent may be disposed adjacent any suitable layer within the electrochemical cell or within an article for production of or use in the electrochemical cell, and the second passivating agent may be disposed adjacent any suitable layer within the electrochemical cell or within an article for production of or use in the electrochemical cell. For instance, a layer comprising the first passivating agent is adjacent the first electrode (e.g., an anode) and/or a layer comprising the second passivating agent is adjacent the second electrode (e.g., a cathode).

At least a portion of (or all of) the first passivating agent may be in solid form and deposited as a layer on or adjacent one or more layers in the electrochemical cell or in the article for production of or use in the electrochemical cell. Herein, the first passivating agent may dissolve within the electrolyte (e.g., during formation of the electrochemical cell or during cycling of the electrochemical cell). Herein, the first passivating layer may be adjacent the first electrode (comprising lithium), although the first passivating layer may be adjacent the second electrode in other cases. The first passivating layer includes the first passivating agent and any suitable optional components (e.g., a filler, a polymer, a metal, a ceramic, porous silica sol-gel). In certain cases, said optional component is a polymeric binder. Non-limiting examples of suitable polymeric binders include polyethylene oxide, polyethylene, and polyvinylidene fluoride. The optional component may be soluble with and/or may substantially dissolve in an electrolyte, or the optional component may swell in the presence of an electrolyte. The first passivating layer may be in direct contact with the electrolyte, or one or more intervening layer(s) may be present.

For example, as shown illustratively in FIG. 3A, an electrochemical cell 900 according to the invention includes a first electrode 110, a first electrode surface 120, a second electrode 130, a second electrode surface 140, an electrolyte 150, and a first passivating layer 190 disposed on or adjacent to at least a portion of the first electrode surface 120 (e.g., an anode). As shown illustratively in the figure, the first passivating layer may be in direct contact with the electrolyte. In other cases, one or more intervening layer(s) may be present (not shown). The electrochemical cell also includes a second passivating agent as described herein (not shown).

In cases in which the first passivating agent is initially present in the form of a layer on the first electrode, the first passivating agent may be present in the layer on the first electrode for greater than or equal to 2 cycles of charge and discharge, for greater than or equal to 5 cycles of charge and discharge, for greater than or equal to 10 cycles of charge and discharge, or for greater than or equal to 25 cycles of charge and discharge.

In cases in which the first passivating agent is initially present in the form of a layer on the first electrode, the first passivating agent may be present in the layer on the first electrode in an electrochemical cell that has been cycled fewer than 2 times, fewer than 5 times, fewer than 10 times, or fewer than 25 times.

At least a portion of (or all of) the second passivating agent may be in solid form and deposited as a layer on or adjacent one or more layers in the electrochemical cell or in the article for production of or use in the electrochemical cell. Herein, the second passivating agent may dissolve within the electrolyte (e.g., during formation of the electrochemical cell or during cycling of the electrochemical cell). Herein, the second passivating layer may be adjacent the second electrode, although the second passivating layer may be adjacent the first electrode (comprising lithium) in other cases. The second passivating layer includes the second passivating agent and any suitable optional components (e.g. a filler, a polymer, a metal, a ceramic, porous silica sol-gel). In certain cases, said optional component is a polymeric binder. Non-limiting examples of suitable polymeric binders include polyethylene oxide, polyethylene, and polyvinylidene fluoride. The optional component may be soluble with and/or may substantially dissolve in an electrolyte, or the optional component may swell in the presence of an electrolyte. The second passivating layer may be in direct contact with the electrolyte, or one or more intervening layer(s) may be present.

For example, as shown illustratively in FIG. 3B, an electrochemical cell 1000 according to the invention includes a first electrode 110, a first electrode surface 120, a second electrode 130, a second electrode surface 140, an electrolyte 150, and a second passivating layer 180 disposed on or adjacent to at least a portion of the second electrode surface 140 (e.g., a cathode). As shown illustratively in the figure, the second passivating layer may be in direct contact with the electrolyte, or one or more intervening layer(s) may be present (not shown). The electrochemical cell also includes a first passivating agent as described herein (not shown).

In certain cases, the second passivating agent may be in solid form and deposited such that it forms layers at two or more locations within the electrochemical cell of the article for production of or use in the electrochemical cell. For instance, a second passivating layer is disposed on or adjacent to at least a portion of the second electrode surface, and a further second passivating layer is disposed on or adjacent to at least a portion of the first electrode surface. Each of said second passivating agent layers includes the second passivating agent and any suitable optional components (e.g. a filler, a polymer, a metal, a ceramic, porous silica sol-gel). In certain cases, said optional component is a polymeric binder. Non-limiting examples of suitable polymeric binders include polyethylene oxide, polyethylene, and polyvinylidene fluoride. The optional component may be soluble with and/or may substantially dissolve in an electrolyte, or the optional component may swell in the presence of an electrolyte. The second passivating agent layers each may be in direct contact with the electrolyte, or one or more intervening layer(s) may be present.

For example, as shown illustratively in FIG. 3C, an electrochemical cell 1000 according to the invention includes a first electrode 110, a first electrode surface 120, a second electrode 130, a second electrode surface 140, an electrolyte 150, a second passivating layer 180 disposed on or adjacent to at least a portion of the second electrode surface 140, and a further second passivating layer 182 disposed on or adjacent to at least a portion of the first electrode surface 120. As shown illustratively in the figure, the second passivating layer may be in direct contact with the electrolyte, or one or more intervening layer(s) may be present (not shown). The electrochemical cell also includes a first passivating agent as described herein (not shown).

In other cases, the second passivating agent may be in a solid form and deposited as a layer adjacent to a first passivating agent layer. The first passivating layer includes the first passivating agent and any suitable optional components (e.g., a filler, a polymer, a metal, a ceramic, porous silica sol-gel). In certain cases, said optional component is a polymeric binder. Non-limiting examples of suitable polymeric binders include polyethylene oxide, polyethylene, and polyvinylidene fluoride. The optional component may be soluble with and/or may substantially dissolve in an electrolyte, or the optional component may swell in the presence of an electrolyte The second passivating layer include the second passivating agent and any suitable optional components (e.g., a filler, a polymer, a metal, a ceramic, porous silica sol-gel). In certain cases, said optional component is a polymeric binder. Non-limiting examples of suitable polymeric binders include polyethylene oxide, polyethylene, and polyvinylidene fluoride. The optional component may be soluble with and/or may substantially dissolve in an electrolyte, or, the optional component may swell in the presence of an electrolyte. Herein, the second passivating agent may be deposited both as a layer adjacent to the first passivating layer and as a layer adjacent to the second electrode. The second passivating layer or layers may be in direct contact with the electrolyte, or one or more intervening layer(s) may be present.

For example, as shown illustratively in FIG. 3D, an electrochemical cell 1000 according to the invention includes a first electrode 110, a first electrode surface 120, a second electrode 130, a second electrode surface 140, an electrolyte 150, a first passivating layer 190, and a second passivating layer 180 disposed on or adjacent to at least a portion of the first passivating layer 190. Herein, the second passivating agent may be deposited both as a layer adjacent to the first passivating agent layer (shown in FIG. 3D) and as a layer adjacent to the second electrode (not shown). As shown illustratively in the figure, the second passivating layer or layers may be in direct contact with the electrolyte, or one or more intervening layer(s) may be present (not shown).

In cases in which the second passivating agent is initially present in the form of a layer (e.g. as a layer adjacent to the first passivating layer, see e.g. figure 3D and/or as a layer adjacent to the second electrode, see e.g. figure 3C), the second passivating agent may be present in said layer for greater than or equal to 2 cycles of charge and discharge, for greater than or equal to 5 cycles of charge and discharge, for greater than or equal to 10 cycles of charge and discharge, or for greater than or equal to 25 cycles of charge and discharge.

In cases in which the second passivating agent is initially present in the form of a layer (e.g. as a layer adjacent to the first passivating layer, see e.g. figure 3D and/or as a layer adjacent to the second electrode, see e.g. figure 3C), the second passivating agent may be present in said layer in an electrochemical cell that has been cycled fewer than 2 times, fewer than 5 times, fewer than 10 times, or fewer than 25 times.

In certain cases, the electrochemical cell or the article for production of or use in the electrochemical cell comprises a separator and a first and/or second passivating layer may be deposited on at least a portion of a surface of the separator, or within the separator. For instance, at least a portion of the passivating layer may be present in the pores of the separator. The first and second passivating layer may simultaneously be present on one or more surfaces of the separator. The first and/or second passivating layer may advantageously serve as a reservoir such that the first and/or second passivating agent(s) dissolves over time in the electrolyte (e.g., during charge/discharge of the electrochemical cell).

For example, as shown illustratively in FIG. 4A, an electrochemical cell 1100 according to the invention includes a first electrode 110, a first electrode surface 120, a second electrode 130, a second electrode surface 140, an electrolyte 150, and a separator 702. The electrochemical cell comprises a passivating layer 185 (comprising a first and/or a second passivating agent) disposed on at least a portion of the separator at separator surface 704. It should be appreciated that while passivating layer 185 is shown on a side of the separator closer to the first electrode, in other cases the passivating layer may present on a side of the separator closer to the second electrode. Moreover, at least a portion of the passivating layer may be present in the pores of the separator.

Generally, the electrochemical cell or the article for production of or use in the electrochemical cell may comprise a separator, a first passivating layer, and a second passivating agent layer, wherein the first passivating layer may be disposed adjacent any suitable layer within the electrochemical cell or within the article for production of or use in the electrochemical cell, and the second passivating layer may be disposed adjacent any suitable layer within the electrochemical cell or within the article for production of or use in the electrochemical cell. For instance, the first passivating layer is adjacent the first electrode (e.g., anode) and the second passivating layer is adjacent the second electrode (e.g., cathode). In other cases, the first passivating layer is adjacent the first electrode and the second passivating agent is adjacent the separator. In yet other cases, the first passivating layer is adjacent the separator and the second passivating layer is adjacent the first electrode. In yet other cases, the first passivating layer is adjacent the separator and the second passivating layer is adjacent the second electrode. In yet other cases, the first passivating layer is adjacent the second electrode and the second passivating layer is adjacent the separator. In yet other cases, both passivating layers are adjacent the separator.

An electrochemical cell according to the invention may comprise a protective layer adjacent an electrode. For example, as shown illustratively in FIG. 4B, an electrochemical cell 1200 includes a first electrode 110, a first electrode surface 120, a second electrode 130, a second electrode surface 140, an electrolyte 150, and a protective layer 902 disposed on the first electrode. Additionally or alternatively, an electrochemical cell may include a protective layer disposed on the second electrode (not shown). Electrochemical cells according to the invention comprising one or more protective layer(s) further comprise a first passivating agent and/or a second passivating agent in any form described herein (e.g., in the form of a passivating agent layer, dissolved in the electrolyte, suspended in the electrolyte, etc.). It should also be understood that electrochemical cells may comprise one or more protective layers and may comprise a separator.

An electrochemical cell may comprise both a protective layer and a passivating agent layer. A first and/or second passivating agent layer may be deposited on at least a portion of a surface of the protective layer, or within the protective layer. For instance, as shown in Fig. 4C, electrochemical cell 1300 includes a first electrode 110, a first electrode surface 120, a second electrode 130, a second electrode surface 140, an electrolyte 150, and a protective layer 902 disposed on the first electrode. The cell further comprises a passivating agent layer 904 (e.g., a first passivating agent layer and/or a second passivating agent layer) disposed on at least a portion of the protective layer at protective layer surface 906. The first and/or second passivating agent layer may simultaneously be present on one or more surfaces of the protective layer. The first and/or second passivating agent layer may advantageously serve as a reservoir such that the first and/or second passivating agent(s) dissolves over time in the electrolyte (e.g., during charge/discharge of the electrochemical cell). It should be appreciated that while passivating agent layer 904 is shown illustratively on a side of the protective layer closer to the electrolyte 150 in FIG. 4C, in other cells the passivating agent layer may present on a side of the protective layer closer to the electrode on which it is disposed (e.g., the first electrode 110 in FIG. 4C). At least a portion of the passivating agent layer may be present in one or more pores in a protective layer.

An electrochemical cell according to the invention may comprise a protective layer, a first passivating agent layer, and a second passivating agent layer. The first passivating agent layer may be disposed adjacent any suitable layer within the cell and the second passivating agent layer may be disposed adjacent any suitable layer within the cell. For instance, the first passivating agent layer is adjacent the first electrode (e.g., an anode) and the second passivating agent layer is adjacent the second electrode (e.g., a cathode). In another example the first passivating agent layer is adjacent the first electrode and the second passivating agent layer is adjacent the protective layer. In yet another example, the first passivating agent layer is adjacent the protective layer and the second passivating agent layer is adjacent the first electrode. In yet another example. the first passivating agent layer is adjacent the protective layer and the second passivating agent layer is adjacent the second electrode. In yet another example, the first passivating agent layer is adjacent the second electrode and the second passivating agent layer is adjacent the protective layer. In yet another example, the first passivating agent layer is adjacent the protective layer and the second passivating agent layer is adjacent the separator. In yet another example, the first passivating agent layer is adjacent the separator and the second passivating agent layer is adjacent the protective layer. In yet another example, both passivating agent layers are adjacent the protective layer.

In some cases, one of the passivating agents is in the form of a layer and the other passivating agent is in the form of solid particles.

In certain cases, the first passivating agent is the form of solid particles and the second passivating agent is in the form of a layer. For example, the first passivating agent is in the form of solid particles and the second passivating agent is in the form of a layer disposed adjacent the first surface. In another example, the first passivating agent is in the form of solid particles and the second passivating agent is in the form of a layer disposed adjacent the second surface. In yet another example, the first passivating agent is in the form of solid particles and the second passivating agent is in the form of a layer disposed adjacent the separator. In yet another example, the first passivating agent is in the form of solid particles and the second passivating agent is in the form of a layer disposed adjacent the protective layer.

In certain other cases the first passivating agent is in the form of a layer and the second passivating agent is the form of solid particles. For example, the first passivating agent is in the form of a layer disposed adjacent the first surface and the second passivating agent is in the form of solid particles. In another example, the first passivating agent is in the form of a layer disposed adjacent the second surface and the second passivating agent is in the form of solid particles. In yet another example, the first passivating agent is in the form of a layer disposed adjacent the separator and the second passivating agent is in the form of solid particles. In yet another example, first passivating agent is in the form of a layer disposed adjacent the protective layer and the second passivating agent is in the form of solid particles.

In some cases, the first and/or second passivating agent are incorporated into the first or second electrode. Herein, the electrode may comprise electroactive particles dispersed within a porous matrix, and the first and/or second passivating agent may coat either or both of the electrode surface and the electroactive particle surfaces. The first and/or second passivating agent may be incorporated into the electrode by being added (e.g., in solid form) to a slurry comprising an electroactive material prior to the formation of the electrode. A slurry comprising a first passivating agent and/or a second passivating agent may also comprise a polymer, optionally in the form of a polymer gel. The polymer may comprise one or more of polyvinylidene fluoride (PVDF), polyurethane, polyethyleneoxide, polyacrylonitrile, polymethylacrylate, polyacrylamide, polyvinylacetate, polyvinylpyrrolidone, polytetraethylene glycol diacrylate, copolymers thereof, and/or combinations thereof. Such a slurry may contact the surface of the first or second electrode and/or permeate pores within the first or second electrode.

In other cases, the first and/or second passivating agent may be added to a fully formed electrode by being impregnated into a porous electrode in the form of a solution or slurry. The first and/or second passivating agent may be incorporated throughout the electrode in addition to being added at the electrode surface (e.g., the second passivating agent may be present throughout a porous cathode).

The first and/or second passivating agent may encapsulate particles of the electroactive material, e.g., throughout the thickness of the electrode. For instance, a second electrode (e.g., a cathode) comprises particles of electroactive material that are coated with a second passivating agent in this manner.

The second passivating agent may be present on the surface of the second electrode. For example, the second passivating agent may be disposed on the surface of the second electrode in the form of a layer. The second passivating agent may be present in the form of a monolayer on the surface of the second electrode. The monolayer covers at least a portion of the surface of the second electrode. The monolayer is substantially continuous across the surface of the second electrode, or the monolayer is substantially discontinuous across the surface of the second electrode; for example, islands of the monolayer may be formed on the surface of the second electrode, where some islands are disconnected with other islands. In other cases, the second passivating agent is present in the form of a multilayer on the surface of the second electrode. The multilayer covers at least a portion of the surface of the second electrode. The multilayer is substantially continuous across the surface of the second electrode, or the multilayer is substantially discontinuous across the surface of the second electrode; for example, islands of the multilayer may be formed on the surface of the second electrode where some islands are disconnected with other islands. When the second passivating agent takes the form of a layer on the second electrode, it may be bonded to the second electrode by any suitable means. For example, the second passivating agent is covalently bonded to the surface of the second electrode. Other types of bonding may be present (e.g., van der Waals interactions). As will be described in more detail below, in certain cases the second passivating agent is a silane which is chemically bonded to the surface of the second electrode. Herein, the second passivating agent may be a silane that is covalently bonded to the surface of the second electrode, or a silane that is bonded through van der Waals interactions to the surface of the second electrode. In specific cases, the second passivating agent may be a silane which is both covalently bonded and bonded through van der Waals interactions to the surface of the second electrode.

The second passivating agent may be present on at least a portion of the active particle surfaces of the second electrode. For example, the second passivating agent may be disposed on at least a portion of the active particle surfaces of the second electrode in the form of a layer. The second passivating agent may be present in the form of a monolayer on at least a portion of the active particle surfaces of the second electrode. The monolayer covers at least a portion of the surface of the active particle surfaces of the second electrode. The monolayer is substantially continuous across the active particle surfaces of the second electrode, or the monolayer is substantially discontinuous across the active particle surfaces of the second electrode; for example, islands of the monolayer may be formed on the surface where some islands are disconnected with other islands. In other cases, the second passivating agent may be present in the form of a multilayer on at least a portion of the active particle surfaces of the second electrode. The multilayer covers at least a portion of the active particle surfaces of the second electrode. The multilayer is substantially continuous across the active particle surfaces of the second electrode, or the multilayer is substantially discontinuous across the active particle surfaces of the second electrode; for example, islands of the multilayer may be formed on the surface where some islands are disconnected with other islands. When the second passivating agent takes the form of a layer on at least a portion of the active particle surfaces of the second electrode, it may be bonded to the active particle surfaces by any suitable means. For example, the second passivating agent is covalently bonded to the active particle surfaces of the second electrode. Other types of bonding may be present (e.g., van der Waals interactions). As is described in more detail herein, in certain cases the second passivating agent is a silane which is covalently bonded to the active particle surfaces of the second electrode. In specific cases, the second passivating agent may be a silane which is both covalently bonded and bonded through van der Waals interactions to the active particle surfaces of the second electrode.

The second passivating agent may be present on the surface of the first electrode. For example, the second passivating agent may be disposed on the surface of the first electrode in the form of a layer. The second passivating agent may be present in the form of a monolayer on the surface of the first electrode. The monolayer covers at least a portion of the surface of the first electrode. The monolayer is substantially continuous across the surface of the first electrode, or the monolayer is substantially discontinuous across the surface of the first electrode, for example, islands of the monolayer may be formed on the surface of the first electrode, where some islands are disconnected with other islands. In other cases, the second passivating agent may be present in the form of a multilayer on the surface of the first electrode. The multilayer covers at least a portion of the surface of the first electrode. The multilayer is substantially continuous across the surface of the first electrode, or the multilayer is substantially discontinuous across the surface of the first electrode; for example, islands of the multilayer may be formed on the surface of the first electrode, where some islands are disconnected with other islands. When the second passivating agent takes the form of a layer on the first electrode, it may be bonded to the first electrode by any suitable means. For example, the second passivating agent is covalently bonded to the surface of the first electrode. Other types of bonding may be present (e.g., van der Waals interactions), e.g. the second passivating agent may be a passivating agent which is both covalently bonded and bonded through van der Waals interactions to the surface of the first electrode. As will be described in more detail below, in certain cases the second passivating agent is a silane which is covalently bonded to the surface of the first electrode. In specific cases, the second passivating agent comprises both at least one type of silane molecule which is bonded to the surface of the first electrode and at least one type of silane molecule which is bonded to either or both of the surface of the second electrode and the active particle surfaces of the second electrode.

In certain cases, the second passivating agent is present on the surface of the first passivating layer. For example, the second passivating agent is disposed on the surface of the first passivating layer in the form of a layer. The second passivating agent may be present in the form of a monolayer on the surface of the first passivating layer. The monolayer covers at least a portion of the surface. The monolayer is substantially continuous, or the monolayer is substantially discontinuous. In other cases, the second passivating agent is present in the form of a multilayer on the surface of the first passivating layer. The multilayer may cover at least a portion of the surface. The multilayer is substantially continuous, or the multilayer is substantially discontinuous. When the second passivating agent takes the form of a layer on the first passivating layer, it may be bonded to the first passivating layer by any suitable means. For example, the second passivating agent is covalently bonded to the surface of the first passivating layer. Other types of bonding may be present (e.g., van der Waals interactions). As is described in more detail herein, in certain cases the second passivating agent is a silane which is covalently bonded to the first passivating layer. In specific cases, the second passivating agent is a silane which is both covalently bonded and bonded through van der Waals interactions to the surface of the first passivating layer. In specific cases, the second passivating agent comprises both at least one type of silane molecule which is bonded to the surface of the first passivating layer and a second type of silane molecule, which is bonded to either or both of the surface of the second electrode and the active particle surfaces of the second electrode.

The second passivating agent may be disposed on the surface of the second electrode (or disposed on at least a portion of the active particle surfaces of the second electrode) prior to cell cycling and may remain on the surface of the second electrode (or on the active particle surfaces of the second electrode) after the cell has undergone a certain number of cycles. For instance, the second passivating agent may remain on the surface of the second electrode (or on the active particle surfaces of the second electrode) after at least 2 cycles of charge and discharge, at least 5 cycles of charge and discharge, at least 10 cycles of charge and discharge, or at least 25 cycles of charge and discharge. For instance, the second passivating agent may be present on the surface of the second electrode (or on the active particle surfaces of the second electrode) in an electrochemical cell that has been cycled fewer than 2 times, fewer than 5 times, fewer than 10 times, or fewer than 25 times.

The first and/or second passivating agent may initially be present in the first and/or second electrode but one or both of the first and/or second passivating agent(s) may be released from the first and/or second electrode after electrochemical cell assembly (e.g., during cycling). For example, the first passivating agent is present in the first electrode and the second passivating agent is present in the second electrode. In other cases, both the first and second passivating agent are present in the first electrode. In yet other cases, both the first and second passivating agents may be present in the second electrode. Combinations of passivating agents in an electrode and in another component of the electrochemical cell or an article for production of or use in the electrochemical cell (e.g., the electrolyte, the separator) are also possible.

When the first passivating agent is initially present in the first electrode and/or second electrode, the first passivating agent may be present in the first and/or second electrode for greater than or equal to 2 cycles of charge and discharge, for greater than or equal to 5 cycles of charge and discharge, for greater than or equal to 10 cycles of charge and discharge, or for greater than or equal to 25 cycles of charge and discharge. After release from the first and/or second electrode, the first passivating agent may react to form a first passivating layer adjacent the surface of the first electrode.

When the first passivating agent is initially present in the first electrode and/or second electrode, the first passivating agent may be present in the first and/or second electrode in an electrochemical cell that has been cycled fewer than 2 times, fewer than 5 times, fewer than 10 times, or fewer than 25 times. After release from the first and/or second electrode, the first passivating agent may react to form a first passivating layer adjacent the surface of the first electrode.

In certain cases, the second passivating agent is initially present in the first electrode and/or second electrode but may be released from the first and/or second electrode after electrochemical cell assembly. Releasing the second passivating agent from the first and/or second electrode may be completed after 2 cycles of charge and discharge, after 5 cycles of charge and discharge, after 10 cycles of charge and discharge, or after 25 cycles of charge and discharge. After release from the first and/or second electrode, the second passivating agent may passivate the second electrode (e.g., by a mechanism described herein). In some cases, a second passivating layer adjacent the surface of the second electrode may be formed. In other cases, no such second passivating layer is formed on the second electrode.

When the second passivating agent is initially present in the first electrode and/or second electrode, the second passivating agent may be present in the first and/or second electrode in an electrochemical cell that has been cycled fewer than 2 times, fewer than 5 times, fewer than 10 times, or fewer than 25 times. After release from the first and/or second electrode, the second passivating agent may passivate the second electrode (e.g., by a mechanism described herein).

In cases where the first passivating agent (e.g. first additive as defined in the claims) is initially present in the electrochemical cell, the first passivating agent may be present in the electrochemical cell for greater than or equal to 2 cycles of charge and discharge, for greater than or equal to 5 cycles of charge and discharge, for greater than or equal to 10 cycles of charge and discharge, for greater than or equal to 25 cycles of charge and discharge, or for greater than or equal to 50 cycles of charge and discharge. The first passivating agent may be initially present in the electrochemical cell for a range of cycles of charge and discharge noted above and in an amount specified herein (e.g., greater than or equal to 0.5 wt% and less than or equal to 20 wt% with respect to the total weight of the electrolyte, or greater than or equal to 0.5 wt% and less than or equal to 20 wt% with respect to the total weight of the electroactive material within the first electrode, in each case including any ranges therebetween).

In cases where the first passivating agent (e.g. first additive as defined in the claims) is initially present in the electrochemical cell, the first passivating agent may be present in an electrochemical cell that has been cycled fewer than 2 times, that has been cycled fewer than 5 times, that has been cycled fewer than 10 times, that has been cycled fewer than 25 times, or that has been cycled fewer than 50 times. The first passivating agent may be present in the electrochemical cell that has been cycled greater than or equal to a number of times noted above and in an amount specified herein (e.g., greater than or equal to 0.5 wt% and less than or equal to 20 wt% with respect to the total weight of the electrolyte or greater than or equal to 0.5 wt% and less than or equal to 20 wt% with respect to the total weight of the electroactive material within the first electrode, including any ranges therebetween).

In case where the second passivating agent (e.g. second additive as defined in the claims) is initially present in the electrochemical cell, the second passivating agent may be present in the electrochemical cell for greater than or equal to 2 cycles of charge and discharge, for greater than or equal to 5 cycles of charge and discharge, for greater than or equal to 10 cycles of charge and discharge, for greater than or equal to 25 cycles of charge and discharge, or for greater than or equal to 50 cycles of charge and discharge. The second passivating agent may be initially present in the electrochemical cell for a range of cycles of charge and discharge noted above and in an amount specified herein (e.g., greater than or equal to 0.5 wt% and less than or equal to 20 wt% with respect to the total weight of the electrolyte, or greater than or equal to 0.5 wt% and less than or equal to 20 wt% with respect to the total weight of the electroactive material within the second electrode, in each case including any ranges therebetween).

In case where the second passivating agent (e.g. second additive as defined in the claims) is initially present in the electrochemical cell, the second passivating agent may be present in an electrochemical cell that has been cycled fewer than 2 times, that has been cycled fewer than 5 times, that has been cycled fewer than 10 times, that has been cycled fewer than 25 times, or that has been cycled fewer than 50 times. The second passivating agent may be present in an electrochemical cell that has been cycled greater than or equal to a number of times noted above and in an amount specified herein (e.g., greater than or equal to 0.5 wt% and less than or equal to 20 wt% with respect to the total weight of the electrolyte or greater than or equal to 0.5 wt% and less than or equal to 20 wt% with respect to the total weight of the electroactive material within the second electrode, including any ranges therebetween).

In some cases, the first passivating agent is a non-solvent. As used herein, a non-solvent is a material that does not solvate other materials in the electrochemical cell. In some cases, the first passivating agent is a compound that does not dissolve in the electrolyte, i.e., it is not soluble in the electrolyte or is soluble at a level of less than 0.5 wt% (that is, the first passivating agent makes up less than 0.5 wt% of the electrolyte, i.e. less than 0.5 wt.% of the solution in which said first passivating agent is included). In other cases, the first passivating agent is a compound that is configured to dissolve and/or capable of dissolving at least slightly in the electrolyte. Herein, the first passivating agent may be sparingly soluble, or configured to dissolve and/or capable of dissolving at a level of from 0.5 wt% to 4 wt%, or the first passivating agent may be soluble in the electrolyte, or configured to dissolve and/or capable of dissolving at a level of at least 4 wt%.

Preferably, said first passivating agent (e.g. first additive as defined in the claims) is soluble in or miscible with said electrolyte.

In some cases, the first passivating agent has a structure according to Formula (II): 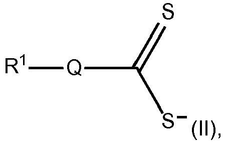 wherein Q is selected from the group consisting of Se, O, S, PR², NR², CR²₂, and SiR²₂, and each R¹ and R² can be the same or different, optionally connected. R¹ and R² may each independently comprise one or more of hydrogen (wherein it is preferred that R¹ does not consist of hydrogen); oxygen; sulfur; halogen; nitrogen; phosphorus; substituted or unsubstituted, branched or unbranched aliphatic; substituted or unsubstituted cyclic; substituted or unsubstituted, branched or unbranched acyclic; substituted or unsubstituted, branched or unbranched heteroaliphatic; substituted or unsubstituted, branched or unbranched acyl; substituted or unsubstituted aryl; and substituted or unsubstituted heteroaryl. R¹ may be bonded to Q through a carbon-Q bond. For instance, R¹ may be CH₃, CH₂OCH₃, CH₂SCH₃, CH₂CF₃, CH₂N(CH₃)₂, or CH₂P(CH₃)₂. The structure shown in Formula (II) may be present in an amount described herein for a first passivating agent.

In certain cases, Q is selected from the group consisting of Se, O, S, PR², CR²₂, and SiR²₂, and each R¹ and R² can be the same or different, optionally connected. R¹ and R² may each independently comprise one or more of hydrogen (wherein it is preferred that R¹ does not consist of hydrogen); oxygen; sulfur; halogen; nitrogen; phosphorus; substituted or unsubstituted, branched or unbranched aliphatic; substituted or unsubstituted cyclic; substituted or unsubstituted, branched or unbranched acyclic; substituted or unsubstituted, branched or unbranched heteroaliphatic; substituted or unsubstituted, branched or unbranched acyl; substituted or unsubstituted aryl; and substituted or unsubstituted heteroaryl. R¹ may be bonded to Q through a carbon-Q bond. For instance, R¹ is an alkyl group, such as an alkyl group with fewer than five carbons. For instance, R² is an alkyl group, such as an alkyl group with fewer than five carbons. For instance, both R¹ and R² are alkyl groups, and/or both R¹ and R² are alkyl groups with fewer than five carbons. R¹ may be selected from the group consisting of CH₃, CH₂OCH₃, CH2SCH3, CH₂CF₃, CH₂N(CH₃)₂, and CH₂P(CH₃)₂.

In certain cases, Q is selected from the group consisting of Se, O, S, NR², PR², CR²₂, and SiR²₂. For instance, Q is O or NR². If Q is NR², both R¹ and R² in formula (II) may be alkyl groups, such as alkyl groups with fewer than five carbons. If Q is O, R¹ may be an alkyl group, such as an alkyl group with fewer than five carbons.

In a particular case Q is sulfur. In another particular case, the first passivating agent is a xanthate salt, i.e. Q is oxygen. The xanthate salt may be present in an amount described herein for a first passivating agent. In yet another particular case, the first passivating agent is a dithiocarbamate salt such that Q is NR². The dithiocarbamate salt may be present in an amount described herein for a first passivating agent.

In a specific case, the first passivating agent has a structure as in Formula (II) wherein Q is oxygen and R¹ is C₂H₅. In another specific case, the first passivating agent has a structure as in Formula (II) wherein Q is sulfur and R¹ is C₂H₅. In yet another specific case, the first passivating agent has a structure as in Formula (II) wherein Q is NR², and R¹ and R² are each C₂H₅. In a third specific case, the first passivating agent has a structure as in Formula (II) where Q is oxygen and R¹ is a tert-butyl group.

In certain cases, the first passivating agent comprises a tert-butyl xanthate anion or a triazole-dithiocarbamate anion.

A first passivating agent having a structure as in Formula (II) further comprises a cation. In certain cases, the cation is selected from the group consisting of Li⁺, Na⁺, K⁺, Cs⁺, Rb⁺, Ca⁺², Mg⁺², substituted and unsubstituted ammonium, and organic cations such as guanidinium or imidazolium. In some cases, the first passivating agent having a structure as in Formula (II) may be polyanionic (an anion in the form of a polymer carrying one or more negative charges).

Preferably, the first passivating agent having a structure as in Formula (II) is selected from the group consisting of lithium xanthate, potassium xanthate, lithium ethyl xanthate, potassium ethyl xanthate, lithium isobutyl xanthate, potassium isobutyl xanthate, lithium tert-butyl xanthate, potassium tert-butyl xanthate, lithium dithiocarbamate, potassium dithiocarbamate, lithium diethyldithiocarbamate, and potassium diethyldithiocarbamate and lithium N,N-dimethyldithiocarbamate.

In certain cases, R¹ is a repeat unit of a polymer and Q is oxygen, so that the first passivating agent is a polymer which comprises xanthate functional groups. Suitable polymers which comprise xanthate functional groups comprise one or more monomers with a xanthate functional group. Said polymers may be copolymers which comprise two or more monomers, at least one of which comprises a xanthate functional group.

In some cases, the first passivating agent precursor has a structure according to Formula (IV): 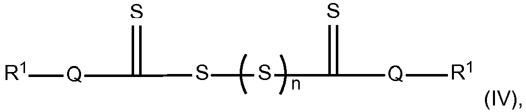 wherein each Q is independently selected from the group consisting of Se, O, S, PR², NR², CR²₂, and SiR²₂, and each R¹ and R² can be the same or different, optionally connected. R¹ and/or R² may each independently comprise one or more of hydrogen (wherein it is preferred that R¹ does not consist of hydrogen); oxygen; sulfur; halogen; nitrogen; phosphorus; substituted or unsubstituted, branched or unbranched aliphatic; substituted or unsubstituted cyclic; substituted or unsubstituted, branched or unbranched acyclic; substituted or unsubstituted, branched or unbranched heteroaliphatic; substituted or unsubstituted, branched or unbranched acyl; substituted or unsubstituted aryl; and substituted or unsubstituted heteroaryl. R¹ may be bonded to Q through a carbon-Q bond. For instance, R¹ may be selected from the group consisting of CH₃, CH₂OCH₃, CH₂SCH₃, CH₂CF₃, CH₂N(CH₃)₂ and CH₂P(CH₃)₂. In certain cases, each occurrence of Q is independently selected from the group consisting of Se, O, S, NR², PR², CR²₂, and SiR²₂. The structure shown in Formula (IV) may be present in an amount described herein for a first passivating agent.

In some cases, each Q is the same or different, and is selected from the group consisting of oxygen, sulfur, and NR². In a particular case, each Q is the same and is sulfur. In another particular case, each Q is the same and is NR². In yet another particular case, each Q is the same and is oxygen.

In a specific case the first passivating agent precursor has a structure as in Formula (IV) wherein each Q is the same and is oxygen and R¹ is C₂H₅. In another specific case, the first passivating agent precursor has a structure as in Formula (IV) wherein each Q is the same and is sulfur and R¹ is C₂H₅. In yet another specific case, the first passivating agent precursor has a structure as in Formula (IV) wherein each Q is the same and is NR², wherein R¹ and R² are each C₂H₅.

In some cases, n is 1 (such that the first passivating agent precursor comprises a disulfide bridge). In other cases, n is 2-6 (such that the first passivating agent precursor is a polysulfide). For example, n is 1, 2, 3, 4, 5, 6, or combination thereof (e.g., 1-3, 2-4, 3-5, 4-6, 1-4, or 1-6).

The first passivating agents (e.g. first additives as defined in the claims) may be present in an electrochemical cell resp. in an article for production of or use in an electrochemical cell in any suitable amount. It should be understood that when more than one first passivating agent (e.g. first additive as defined in the claims) is present, the total weight of the first passivating agent should be understood to refer to the sum of the weights of each first passivating agent (e.g. each first additive as defined in the claims) present in the electrochemical cell resp. in the article for production of or use in an electrochemical cell.

The first passivating agent (e.g. first additive as defined in the claims) may be present in the electrochemical cell resp. in the article for production of or use in an electrochemical cell in an amount less than or equal to 20 wt% versus the total weight of the electrolyte (including any dissolved or added components such as the first passivating agent and the second passivating agent). The total weight of the first passivating agent present in the electrochemical cell resp. in the article for production of or use in the electrochemical cell may be less than or equal to 20 wt%, less than or equal to 18 wt%, less than or equal to 15 wt%, less than or equal to 12 wt%, less than or equal to 10 wt%, less than or equal to 8 wt%, less than or equal to 6 wt%, less than or equal to 5 wt%, less than or equal to 4 wt%, less than or equal to 3 wt%, less than or equal to 2 wt%, or less than or equal to 1 wt% versus the total weight of the electrolyte. The total weight of the first passivating agent present in the electrochemical cell resp. in the article for production of or use in an electrochemical cell may be greater than 0.1 wt%, greater than 0.2 wt%, greater than 0.5 wt%, greater than 1 wt%, greater than 2 wt%, less than or equal to 3 wt%, greater than 4 wt%, greater than 6 wt%, greater than 8 wt%, greater than 10 wt%, or greater than 15 wt% versus the total weight of the electrolyte. Combinations of the above-referenced ranges are also possible (e.g., between 0.1 wt% and 20 wt%, between 0.5 wt% and 20 wt%, between 0.5 wt% and 4 wt%, between 1 wt% and 8 wt%, between 4 wt% and 10 wt%, between 6 wt% and 15 wt%, between 8 wt% and 20 wt%). Other ranges are also possible.

It should be understood that the total weight of the electrolyte refers to the sum of the weights of any electrolyte solvents present, any electrolyte polymers present (e.g., in the case of gel electrolytes or solid state electrolytes), any salts dissolved or suspended in the electrolyte (e.g., in the electrolyte solvent), and any first and/or second passivating agents dissolved and/or suspended in the electrolyte (e.g., in the electrolyte solvent).

The first passivating agent (e.g. first additive as defined in the claims) may be present in the electrochemical cell resp. in the article for production of or use in an electrochemical cell in an amount less than or equal to 100 wt% versus the total weight of the electroactive material within the first electrode. The total weight of the first passivating agent present in the electrochemical cell may be less than or equal to 100 wt%, less than or equal to 80 wt%, less than or equal to 60 wt%, less than or equal to 40 wt%, less than or equal to 20 wt%, less than or equal to 18 wt%, less than or equal to 15 wt%, less than or equal to 12 wt%, less than or equal to 10 wt%, less than or equal to 8 wt%, less than or equal to 6 wt%, less than or equal to 5 wt%, less than or equal to 4 wt%, less than or equal to 3 wt%, less than or equal to 2 wt%, or less than or equal to 1 wt% versus the total weight of the electroactive material within the first electrode. The total weight of the first passivating agent present in the electrochemical cell resp. in the article for production of or use in an electrochemical cell may be greater than 0.5 wt%, greater than 1 wt%, greater than 2 wt%, less than or equal to 3 wt%, greater than 4 wt%, greater than 6 wt%, greater than 8 wt%, greater than 10 wt%, greater than 15 wt%, greater than 20 wt%, greater than 40 wt%, greater than 60 wt%, or greater than or equal to 80 wt% versus the total weight of the electroactive material within the first electrode. Combinations of the above-referenced ranges are also possible (e.g., between 0.5 wt% and 20 wt%, between 1 wt% and 8 wt%, between 4 wt% and 10 wt%, between 6 wt% and 15 wt%, between 8 wt% and 20 wt%, between 20 wt% and 100 wt%). Other ranges are also possible.

In some cases, the wt% of first passivating agent is measured prior to first use or first discharge of the electrochemical cell using known amounts of the components of the electrolyte (in cases where the wt.-% of the first passivating agent is based on the weight of the electrolyte as defined above) resp. of the electroactive material within the first electrode (in cases where the wt.-% of the first passivating agent is based on the weight of the electroactive material within the first electrode as defined above).

In other cases, the wt% of the first passivating agent is measured at a point in time during the cycle life of the cell. Herein, the cycling of an electrochemical cell may be stopped and the wt% of the first passivating agent in the electrolyte may be determined using, for example, gas chromatography-mass spectrometry. Other methods such as NMR, inductively coupled plasma mass spectrometry (ICP-MS), and elemental analysis can also be used.

In some cases, the second passivating agent is a non-solvent. As used herein, a non-solvent is a material that does not solvate other materials in the electrochemical cell. In some cases, the second passivating agent is a compound that does not dissolve in the electrolyte, i.e., it is not soluble in the electrolyte or is soluble at a level of less than 0.5 wt% (that is, the second passivating agent makes up less than 0.5 wt% of the electrolyte). In other cases, the second passivating agent is a compound that is configured to dissolve and/or capable of dissolving at least slightly in the electrolyte. Herein, the second passivating agent may be sparingly soluble, or configured to dissolve and/or capable of dissolving at a level of from 0.5 wt% to 4 wt%, or the second passivating agent may be soluble in the electrolyte, or configured to dissolve and/or capable of dissolving at a level of at least 4 wt%.

The second passivating agent comprises an (oxalato)borate group. The (oxalato)borate group may be the bis(oxalato) borate anion and/or the difluoro(oxalato)borate anion. In some cases, the boron-containing compound is a salt, in particular a salt comprising a lithium cation. For example, the lithium salt is lithium bis(oxalato)borate (LiBOB) and/or lithium difluoro(oxalato)borate. Most preferably, the lithium salt is LiBOB.

In other cases, the second passivating agent is a material which is not a salt (a non-salt compound).

An electrochemical cell as described herein resp. an article for production of or use in an electrochemical cell may comprise more than one type of second passivating agent. For instance, the electrochemical cell may comprise an (oxalato)borate-containing compound (e.g., LiBOB and/or lithium difluoro(oxalato)borate) and a compound configured to undergo and/or capable of undergoing a polymerization reaction to form a passivating layer on the second surface, or an (oxalato)borate-containing compound (e.g., LiBOB and/or lithium difluoro(oxalato)borate) and a compound that does not comprise a vinyl group when it is added to the cell but forms a vinyl group during cell cycling. The electrochemical cell resp. the article for production of or use in an electrochemical cell may comprise both an (oxalato)borate-containing compound (e.g., LiBOB and/or lithium difluoro(oxalato)borate) and fluoroethylene carbonate, or both an (oxalato)borate-containing compound (e.g., LiBOB and/or lithium difluoro(oxalato)borate) and difluoroethylene carbonate. The electrochemical cell resp. the article for production of or use in an electrochemical cell may comprise each of an (oxalato)borate-containing compound (e.g., LiBOB and/or lithium difluoro(oxalato)borate), fluoroethylene carbonate, and difluoroethylene carbonate. Other combinations of second passivating agents are also possible. It should also be understood that any type of the second passivating agents described above may be used alone or in combination with any of the other types second passivating agents described above.

The second passivating agent(s) (e.g. second additives as defined in the claims) may be present in an electrochemical cell resp. in an article for production of or use in an electrochemical in any suitable amount. It should be understood that when more than one second passivating agent (e.g. second additive as defined in the claims) is present, the total weight of the second passivating agent should be understood to refer to the sum of the weights of each second passivating agent (e.g. each second additive as defined in the claims) present in the electrochemical cell resp. in the article for production of or use in an electrochemical cell.

The second passivating agent (e.g. second additive as defined in the claims) may be present in the electrochemical cell resp. in the article for production of or use in an electrochemical cell in an amount less than or equal to 30 wt% versus the total weight of the electrolyte (including any dissolved or added components such as the first passivating agent and the second passivating agent). The total weight of the second passivating agent present in the electrochemical cell resp. in the article for production of or use in the electrochemical cell may be less than or equal to 30 wt%, less than or equal to 28 wt%, less than or equal to 25 wt%, less than or equal to 22 wt%, less than or equal to 20 wt%, less than or equal to 18 wt%, less than or equal to 15 wt%, less than or equal to 12 wt%, less than or equal to 10 wt%, less than or equal to 8 wt%, less than or equal to 6 wt%, less than or equal to 5 wt%, less than or equal to 4 wt%, less than or equal to 3 wt%, less than or equal to 2 wt%, or less than or equal to 1 wt% versus the total weight of the electrolyte. The total weight of the second passivating agent present in the electrochemical cell resp. in the article for production of or use in the electrochemical cell is greater than 0.2 wt%, and may be greater than 0.5 wt%, greater than 1 wt%, greater than 2 wt%, less than or equal to 3 wt%, greater than 4 wt%, greater than 6 wt%, greater than 8 wt%, greater than 10 wt%, greater than 15 wt%, greater than or equal to 18 wt%, greater than or equal to 20 wt%, greater than or equal to 22 wt%, greater than or equal to 25 wt%, or greater than or equal to 28 wt% versus the total weight of the electrolyte. Combinations of the above-referenced ranges are also possible (e.g., between 0.2 wt% and 30 wt%, between 0.5 wt% and 30 wt%, between 0.2 wt% and 20 wt%, between 0.5 wt% and 20 wt%, between 1 wt% and 8 wt%, between 4 wt% and 10 wt%, between 6 wt% and 15 wt%, between 8 wt% and 20 wt%).

It should be understood that the total weight of the electrolyte refers to the sum of the weights of any electrolyte solvents present, any electrolyte polymers present (e.g., in the case of gel electrolytes or solid state electrolytes), any salts dissolved or suspended in the electrolyte (e.g., in the electrolyte solvent), and any first and/or second passivating agents dissolved and/or suspended in the electrolyte (e.g., in the electrolyte solvent).

The second passivating agent(s) is one or more species with an (oxalato)borate group (e.g., LiBOB, lithium difluoro(oxalato)borate). The total weight of the species with an (oxalato)borate group in the electrochemical cell may be less than or equal to 30 wt%, less than or equal to 28 wt%, less than or equal to 25 wt%, less than or equal to 22 wt%, less than or equal to 20 wt%, less than or equal to 18 wt%, less than or equal to 15 wt%, less than or equal to 12 wt%, less than or equal to 10 wt%, less than or equal to 8 wt%, less than or equal to 6 wt%, less than or equal to 5 wt%, less than or equal to 4 wt%, less than or equal to 3 wt%, less than or equal to 2 wt%, or less than or equal to 1 wt% versus the total weight of the electrolyte. The total weight of the species with an (oxalato)borate group in the electrochemical cell is greater than 0.2 wt%, and may be greater than 0.5 wt%, greater than 1 wt%, greater than 2 wt%, less than or equal to 3 wt%, greater than 4 wt%, greater than 6 wt%, greater than 8 wt%, greater than 10 wt%, or greater than 15 wt% greater than 18 wt%, greater than 20 wt%, greater than 22 wt%, greater than 25 wt%, or greater than 28 wt% versus the total weight of the electrolyte. Combinations of the above-referenced ranges are also possible (e.g., between 0.2 wt% and 20 wt%, between 0.5 wt% and 20 wt%, between 1 wt% and 8 wt%, %, between 1 wt% and 6 wt%, between 4 wt% and 10 wt%, between 6 wt% and 15 wt%, between 8 wt% and 20 wt%).

The second passivating agent may be present in the electrochemical cell in an amount less than or equal to 20 wt% versus the total weight of the electroactive material within the second electrode. The total weight of the second passivating agent present in the electrochemical cell may be less than or equal to 20 wt%, less than or equal to 18 wt%, less than or equal to 15 wt%, less than or equal to 12 wt%, less than or equal to 10 wt%, less than or equal to 8 wt%, less than or equal to 6 wt%, less than or equal to 5 wt%, less than or equal to 4 wt%, less than or equal to 3 wt%, less than or equal to 2 wt%, or less than or equal to 1 wt% versus the total weight of the electroactive material within the second electrode. The total weight of the second passivating agent present in the electrochemical cell may be greater than 0.2 wt%, greater than 0.5 wt%, greater than 1 wt%, greater than 2 wt%, less than or equal to 3 wt%, greater than 4 wt%, greater than 6 wt%, greater than 8 wt%, greater than 10 wt%, or greater than 15 wt% versus the total weight of the electroactive material within the second electrode. Combinations of the above-referenced ranges are also possible (e.g., between 0.2 wt% and 20 wt%, between 0.5 wt% and 20 wt%, between 1 wt% and 8 wt%, between 4 wt% and 10 wt%, between 6 wt% and 15 wt%, between 8 wt% and 20 wt%). Other ranges are also possible.

The second passivating agent(s) is one or more species with an (oxalato)borate group (e.g., LiBOB, lithium difluoro(oxalato)borate). The total weight of the species with an (oxalato)borate group in the electrochemical cell resp. in the article for production of or use in the electrochemical cell may be less than or equal to 20 wt%, less than or equal to 18 wt%, less than or equal to 15 wt%, less than or equal to 12 wt%, less than or equal to 10 wt%, less than or equal to 8 wt%, less than or equal to 6 wt%, less than or equal to 5 wt%, less than or equal to 4 wt%, less than or equal to 3 wt%, less than or equal to 2 wt%, or less than or equal to 1 wt% versus the total weight of the electroactive material within the second electrode. The total weight of species with an (oxalato)borate group in the electrochemical cell resp. in the article for production of or use in the electrochemical cell may be greater than 0.2 wt%, greater than 0.5 wt%, greater than 1 wt%, greater than 2 wt%, less than or equal to 3 wt%, greater than 4 wt%, greater than 6 wt%, greater than 8 wt%, greater than 10 wt%, or greater than 15 wt% versus the total weight of the electroactive material within the second electrode. Combinations of the above-referenced ranges are also possible (e.g., between 0.2 wt% and 20 wt%, between 0.5 wt% and 20 wt%, between 1 wt% and 8 wt%, between 4 wt% and 10 wt%, between 6 wt% and 15 wt%, between 8 wt% and 20 wt%). Other ranges are also possible.

In some cases, the wt% of the second passivating agent is measured prior to first use or first discharge of the electrochemical cell using known amounts of the components of the electrolyte (in cases where the wt.-% of the second passivating agent is based on the weight of the electrolyte as defined above) resp. of the electroactive material within the second electrode (in cases where the wt.-% of the second passivating agent is based on the weight of the electroactive material within the second electrode as defined above).

In other cases, the wt% of the second passivating is measured at a point in time during the cycle life of the cell. Herein, the cycling of an electrochemical cell may be stopped and the wt% of the second passivating agent in the electrolyte may be determined using, for example, gas chromatography-mass spectrometry. Other methods such as NMR, inductively coupled plasma mass spectrometry (ICP-MS), and elemental analysis can also be used.

The ratio of the total weight of the first passivating agent (e.g. first additive as defined in the claims) to the total weight of the second passivating agent (e.g. second additive as defined in the claims) in the electrochemical cell resp. in the article for production of or use in an electrochemical cell may be any suitable value. The ratio of the total weight of the first passivating agent (sum of the weights of each first passivating agent, e.g. each first additive as defined in the claims) to the total weight of the second passivating agent (sum of the weights of each second passivating agent, e.g. each second additive as defined in the claims) may be greater than or equal to 0.25, greater than or equal to 0.5, greater than or equal to 0.75, greater than or equal to 1, greater than or equal to 1.25, greater than or equal to 1.5, greater than or equal to 1.75, greater than or equal to 2, or greater than or equal to 2.5. The ratio of the total weight of the first passivating agent (sum of the weights of each first passivating agent, e.g. each first additive as defined in the claims) to the total weight of the second passivating agent (sum of the weights of each second passivating agent, e.g. each second additive as defined in the claims) is less than or equal to 3, less than or equal to 2.5, less than or equal to 2, less than or equal to 1.75, less than or equal to 1.5, less than or equal to 1.25, less than or equal to 1, or less than or equal to 0.75, less than or equal to 0.5. Combinations of the above-referenced ranges are also possible (e.g., greater than or equal to 0.5 and less than or equal to 2).

As explained above, in some cases, the second passivating reduces or prevents decomposition of the first passivating agent and/or of a component of the electrolyte during electrochemical cell cycling. Decomposition of the first passivating agent and/or of electrolyte component(s) can be measured by any suitable means, such as cyclic voltammetry and/or gas analysis. Cyclic voltammetry experiments usually display peaks at voltages where electrochemical cell components decompose ("decomposition peaks"). When subject to cyclic voltammetry, an electrochemical cell comprising a second passivating agent (e.g. second additive as defined above resp. in the claims) may show a decomposition peak having a smaller magnitude or not show a decomposition peak which would be present in an otherwise identical cell which lacks the second passivating agent. Gas analysis may be used to verify evolution of gases indicative of decomposition of a component of the electrochemical cell at these voltages. An electrochemical cell comprising a second passivating agent (as defined above resp. in the claims) may emit fewer gases during electrochemical cell cycling than an otherwise identical cell which lacks the second passivating agent.

As described above, an electrochemical cell may comprise a protective layer disposed on an electrode, such as a protective layer disposed on a first electrode and/or an anode. When present, the protective layer may protect the electrode on which it is disposed. For instance, the protective layer may shield the electrode from the electrolyte such that the electrode interacts with the electrolyte to a reduced degree (e.g., a substantially reduced degree) and/or such that it does not interact with the electrolyte at all. The protective layer may shield the electrode from one or more electrolyte components (e.g., a species in the electrolyte that may decompose and/or undergo a deleterious reaction thereon) such that the electrode interacts with the electrolyte component(s) to a substantially reduced degree and/or such that it does not interact with the electrolyte component(s) at all.

When present, the protective layer may be porous. Without wishing to be bound by any particular theory, it is believed that protective layers with certain desirable pore morphologies may allow the electrode on which they are disposed to interact favorably with certain favorable electrolyte components. As an example, certain porous protective layers may allow the electrode on which they are disposed to interact with one or more passivating agents configured to passivate that electrode. Then, the protective layer may protect a passivated electrode. Such protective layers may, in certain cases, also reduce or eliminate interactions between the electrode and other unfavorable electrolyte components. The protective layer may have a porosity of at least 25%, at least 50%, at least 75%, at least 80%, at least 90%, at least 95%, at least 97%, at least 98%, at least 99%, or at least 99.5%. The protective layer may have a porosity of less than or equal to 99.9%, less than or equal to 99.5%, less than or equal to 99%, less than or equal to 98%, less than or equal to 97%, less than or equal to 95%, less than or equal to 90%, less than or equal to 80%, less than or equal to 75%, or less than or equal to 50%. Combinations of the above-referenced ranges are also possible (e.g., at least 25% and less than or equal to 99.9%, at least 25% and less than or equal to 80%). Other ranges are also possible. Porosity and pore size distribution can be determined by means of the Brunauer-Emmett-Teller method.

In other cases, a protective layer may be non-porous, or may include pores that have a structure that does not allow interaction of the electrode on which it is disposed with one or more passivating agent(s) for that electrode. Herein, the presence of passivating agents in the electrochemical cell may still be beneficial. Such passivating agents may be configured to passivate any portions of the surface of the electrode that are exposed to the electrolyte due to imperfections in the protective layer and/or due to damage of the protective layer during electrochemical cell operation. For instance, the passivating agent may passivate any portions of the electrode surface exposed to the electrolyte by pinholes in the protective layer, and/or to any portions of the electrode surface exposed to electrolyte by cracks that develop in the protective layer during electrochemical cell cycling.

The protective layer (or the material used to form the protective layer, i.e., a protective layer material) may be conductive to lithium ions. The lithium ion conductivity of the protective layer (or the material used to form the protective layer, i.e., a protective layer material) may be greater than or equal to 10⁻¹⁰ S/cm, greater than or equal to 10⁻⁹ S/cm, greater than or equal to 10⁻⁸ S/cm, greater than or equal to 10⁻⁷ S/cm, greater than or equal to 10⁻⁶ S/cm, greater than or equal to 10⁻⁵ S/cm, greater than or equal to 10⁻⁴ S/cm, greater than or equal to 10⁻³ S/cm, greater than or equal to 10⁻² S/cm, or greater than or equal to 10⁻¹ S/cm. The lithium ion conductivity of the protective layer (or the material used to form the protective layer, i.e., a protective layer material) may be less than or equal to 1 S/cm, less than or equal to 10⁻¹ S/cm, less than or equal to 10⁻² S/cm, less than or equal to 10⁻³ S/cm, less than or equal to 10⁻⁴ S/cm, less than or equal to 10⁻⁵ S/cm, less than or equal to 10⁻⁶ S/cm, less than or equal to 10⁻⁷ S/cm, less than or equal to 10⁻⁸ S/cm, or less than or equal to 10⁻⁹ S/cm. Combinations of the above-referenced ranges are also possible (e.g., greater than or equal to 10⁻¹⁰ S/cm and less than or equal to 1 S/cm, or greater than or equal to 10⁻⁵ S/cm and less than or equal to 1 S/cm). Other ranges are also possible. The average ion conductivity of the protective layer can be determined by employing a conductivity bridge (i.e., an impedance measuring circuit) operating at 1 kHz on a separator pressed between two copper cylinders at a pressure of up to 3 tons/cm². The average ion conductivity (i.e., the inverse of the average resistivity) can be measured at 500 kg/cm² increments. The pressure may be increased until changes in average ion conductivity are no longer observed in the sample.

In some cases, the material used to form the protective layer (i.e., a protective layer material) is substantially non-ionically conductive (e.g., not substantially conductive to lithium ions).

In some cases, a protective layer is electrically insulating. The protective layer may allow a relatively large amount of lithium ion transport therethrough while allowing a relatively small amount of electron transport therethrough.

When present, the protective layer may comprise one or more glasses, ceramics, glassy-ceramics, and/or polymers. An electrochemical cell may comprise a protective layer having a chemical composition and/or one or more properties of certain of the protective layers described in one or more of following:
U.S. Patent Publication No. 2016/0344067, U.S. Patent No. 9,825,328, US. Patent Publication No. 2017/0338475, and U.S. Provisional Application No. 62/510,430.

The electroactive active material of the first electrode (anode active electrode species in the anode of an electrochemical cell described herein) is lithium metal such as lithium foil and lithium deposited onto a substrate, and lithium alloys (e.g., lithium-aluminum alloys and lithium-tin alloys). Suitable lithium alloys are alloys of lithium and one or more selected from the group consisting of aluminum, magnesium, silicium (silicon), indium, silver, and tin. Lithium can be contained as one film or as several films, optionally separated by a protective material such as a ceramic material or an ion conductive material described herein. Suitable ceramic materials include silica, alumina, or lithium containing glassy materials such as lithium phosphates, lithium aluminates, lithium silicates, lithium carbonates, lithium oxides, lithium phosphorous oxynitrides, lithium tantalum oxide, lithium aluminosulfides, lithium titanium oxides, lithium silcosulfides, lithium germanosulfides, lithium aluminosulfides, lithium borosulfides, and lithium phosphosulfides, and combinations of two or more of the preceding. The first electrode may comprise one or more binder materials (e.g., polymers, etc.).

The thickness of the first electrode may vary from 1 to 200 µm. The first electrode may have a thickness of less than 200 µm, less than 100 µm, less than 50 µm, less than 25 µm, less than 10 µm, or less than 5 µm. The first electrode may have a thickness of greater than or equal to 1 µm, greater than or equal to 5 µm, greater than or equal to 10 µm, greater than or equal to 25 µm, greater than or equal to 50 µm, greater than or equal to 100 µm, or greater than or equal to 150 µm. Combinations of the above-referenced ranges are also possible (e.g., between 1 µm and 200 µm, between 1 µm and 100 µm, between 5 µm and 50 µm, between 5 µm and 25 µm, between 10 µm and 25 µm). Other ranges are also possible. The choice of the thickness may depend on cell design parameters such as the excess amount of lithium desired, cycle life, and the thickness of the second electrode.

The electroactive material within the second electrode (cathode active electrode species in the cathode of an electrochemical cell described herein) comprises electroactive transition metal chalcogenides, electroactive conductive polymers, and/or electroactive sulfur-containing materials, and combinations thereof.

As used herein, the term "chalcogenides" pertains to compounds that contain one or more of the elements of oxygen, sulfur, and selenium. Examples of suitable transition metal chalcogenides include, but are not limited to, the electroactive oxides, sulfides, and selenides of transition metals selected from the group consisting of Mn, V, Cr, Ti, Fe, Co, Ni, Cu, Y, Zr, Nb, Mo, Ru, Rh, Pd, Ag, Hf, Ta, W, Re, Os, and Ir. In certain cases, the transition metal chalcogenide is selected from the group consisting of the electroactive oxides of nickel, manganese, cobalt, and vanadium, and the electroactive sulfides of iron.

The second electrode can comprise electroactive conductive polymers as electroactive species (cathode active electrode species in the cathode of the electrochemical cells described herein). Examples of suitable electroactive conductive polymers include, but are not limited to, electroactive and electronically conductive polymers selected from the group consisting of polypyrroles, polyanilines, polyphenylenes, polythiophenes, and polyacetylenes. In some cases it is preferred to use polypyrroles, polyanilines, and/or polyacetylenes as conductive polymers.

The second electrode may be an intercalation electrode (e.g., a lithium-intercalation cathode). Non-limiting examples of suitable materials that may intercalate ions of an electroactive material (e.g., alkaline metal ions, especially lithium) include metal oxides, metal phosphates, titanium sulfide, and iron sulfide. In some cases, the second electrode comprises an intercalation electrode that comprises a lithium transition metal oxide or a lithium transition metal phosphate. Examples of lithium transition metal oxides and lithium transition metal phosphates are LiₓCoO₂ (e.g., Li_{1.1}CoO₂), LiₓNiO₂, LiₓMnO₂, LiₓMn₂O₄ (e.g., Li_{1.05}Mn₂O₄), LiₓCoPO₄, LiₓMnPO₄, LiCoₓNi₍₁₋ₓ₎O₂, and LiCoₓNi_{y}Mn_{(1-x-y)}O₂ (e.g., LiNi_{1/3}Mn_{1/3}Co_{1/3}O₂, LiNi_{3/5}Mn_{1/5}Co_{1/5}O₂, LiNi_{4/5}Mn_{1/10}Co_{1/10}O₂, LiNi_{1/2}Mn_{3/10}Co_{1/5}O₂). The value of x may be greater than or equal to 0 and less than or equal to 2. Typically, x is greater than or equal to 1 and less than or equal to 2 when the electrochemical cell is fully discharged, and less than 1 when the electrochemical cell is fully charged. Herein, a fully charged electrochemical cell may have a value of x that is greater than or equal to 1 and less than or equal to 1.05, greater than or equal to 1 and less than or equal to 1.1, or greater than or equal to 1 and less than or equal to 1.2. Further examples include LiₓNiPO₄, where 0 < x ≤ 1, LiMnₓNi_{y}O₄ where x + y = 2 (e.g., LiMn_{1.5}Ni_{0.5}O₄), LiNiₓCo_{y}Al_{z}O₂ where x + y + z =1, LiFePO₄, and combinations thereof. Examples of lithium transition metal phosphates are LiₓNiPO₄, where 0 < x ≤ 1 and LiFePO₄. Lithium transition metal phosphates can be substituted with borates and/or silicates.

In specific cases, an electrochemical cell described herein is designed to include a second electrode with an electroactive material (cathode active electrode species in the cathode of an electrochemical cell described herein) having a moderate voltage with respect to lithium metal. The voltage of an electroactive material with respect to lithium metal may be measured by first cycling an electrochemical cell comprising a first electrode comprising lithium metal and a second electrode comprising the electroactive material at least four times (e.g., 5 times, 6 times, 8 times, 10 times) at a rate of C/5, then discharging the electrochemical cell at a rate of C/5 and measuring the voltage as the cell discharges. The average voltage measured over the discharge process is then determined, and this value is considered to be the voltage with respect to lithium metal. The electroactive material within the second electrode may have a voltage with respect to lithium metal of greater than or equal to 2.8 V, greater than or equal to 3 V, greater than or equal to 3.2 V, greater than or equal to 3.4 V, greater than or equal to 3.6 V, greater than or equal to 3.8 V, greater than or equal to 4.0 V, greater than or equal to 4.2 V, or greater than or equal to 4.4 V. The electroactive material within the second electrode may have a voltage with respect to lithium metal of less than or equal to 4.5 V, less than or equal to 4.2 V, less than or equal to 4.0 V, less than or equal to 3.8 V, less than or equal to 3.6 V, less than or equal to 3.4 V, less than or equal to 3.2 V, or less than or equal to 3 V. Combinations of the above-referenced ranges are also possible (e.g., greater than or equal to 2.8 V and less than or equal to 4.5 V). Other ranges are also possible.

In specific cases, an electrochemical cell described herein is designed to include a second electrode with an electroactive material (cathode active electrode species in the cathode of an electrochemical cell described herein) having a moderate open circuit voltage with respect to lithium metal. The open circuit voltage of an electroactive material with respect to lithium metal may be measured by determining the open circuit voltage of a battery comprising a first electrode comprising lithium metal and a second electrode comprising the electroactive material when the battery is charged to half its capacity. This may be accomplished by first cycling the battery to determine its capacity. The battery can then be charged to half of its measured capacity and allowed to rest for two minutes. After these steps, the open circuit voltage may be measured. The electroactive material within the second electrode may have an open circuit voltage with respect to lithium metal of greater than or equal to 2.8 V, greater than or equal to 3 V, greater than or equal to 3.2 V, greater than or equal to 3.4 V, greater than or equal to 3.6 V, greater than or equal to 3.8 V, greater than or equal to 4.0 V, greater than or equal to 4.2 V, or greater than or equal to 4.4 V. The electroactive material within the second electrode may have an open circuit voltage with respect to lithium metal of less than or equal to 4.5 V, less than or equal to 4.2 V, less than or equal to 4.0 V, less than or equal to 3.8 V, less than or equal to 3.6 V, less than or equal to 3.4 V, less than or equal to 3.2 V, or less than or equal to 3 V. Combinations of the above-referenced ranges are also possible (e.g., greater than or equal to 2.8 V and less than or equal to 4.5 V). Other ranges are also possible.

Characteristics of electroactive materials (for the second electrode) other than their voltages and open circuit voltages with respect to lithium may also be relevant in some cases. For example, an electrochemical cell may include a second electrode comprising an electroactive material (cathode active electrode species in a cathode of an electrochemical cell described herein) that exhibits one or more plateaus in the value of voltage with respect to lithium as a function of cycle life during charging and/or discharging, and the value of the plateau(s) may be one or more of the values described above in relation to the voltage of the material with respect to lithium metal. As used herein, an electroactive material exhibits a voltage plateau when it shows a constant or substantially constant voltage (e.g., varying by less than or equal to 10%, or less than or equal to 5%) with respect to lithium during at least some portion of a charging and/or discharging procedure. The voltage at which a plateau occurs for an electroactive material (i.e., a plateau voltage) may be determined by employing the same procedure used to determine the voltage of an electroactive material with respect to lithium metal, evaluating whether any regions consistent with plateaus are observed, and determining the average voltage in those region(s) if present. The electroactive material within the second electrode may have a plateau voltage with respect to lithium metal of greater than or equal to 2.8 V, greater than or equal to 3 V, greater than or equal to 3.2 V, greater than or equal to 3.4 V, greater than or equal to 3.6 V, greater than or equal to 3.8 V, greater than or equal to 4.0 V, greater than or equal to 4.2 V, or greater than or equal to 4.4 V. The electroactive material within the second electrode may have a plateau voltage with respect to lithium metal of less than or equal to 4.5 V, less than or equal to 4.2 V, less than or equal to 4.0 V, less than or equal to 3.8 V, less than or equal to 3.6 V, less than or equal to 3.4 V, less than or equal to 3.2 V, or less than or equal to 3 V. Combinations of the above-referenced ranges are also possible (e.g., greater than or equal to 2.8 V and less than or equal to 4.5 V). Other ranges are also possible.

As another example, the electrochemical cell may include a second electrode comprising an electroactive material that would be suitable for charging to less than 5 V, less than 4.5 V, less than 4 V, or less than 3.5 V under normal operating conditions (e.g., if one were to charge the second electrode to, e.g., 5 V, 4.5 V, 4 V, or 3.5 V or higher, respectively, it would typically be considered an abuse test, would not be recommended by the manufacturer, and/or would present safety concerns).

One or more of the voltages measured during the charge and/or discharge process in a cell comprising a lithium metal electrode may have one or more of the values described above in relation to the average voltage. For instance, one or more of maximum voltage, minimum voltage, median voltage (i.e. the voltage for which half of the measured voltages are higher and half of the measured voltages are lower) and modal voltage (the voltage that is most common over the course of the measurement) have one or more of the values described above in relation to the average voltage.

The electroactive material within the second electrode may have a maximum voltage with respect to lithium metal of greater than or equal to 2.8 V, greater than or equal to 3 V, greater than or equal to 3.2 V, greater than or equal to 3.4 V, greater than or equal to 3.6 V, greater than or equal to 3.8 V, greater than or equal to 4.0 V, greater than or equal to 4.2 V, or greater than or equal to 4.4 V. The electroactive material within the second electrode may have a maximum voltage with respect to lithium metal of less than or equal to 4.5 V, less than or equal to 4.2 V, less than or equal to 4.0 V, less than or equal to 3.8 V, less than or equal to 3.6 V, less than or equal to 3.4 V, less than or equal to 3.2 V, or less than or equal to 3 V. Combinations of the above-referenced ranges are also possible (e.g., greater than or equal to 2.8 V and less than or equal to 4.5 V). Other ranges are also possible.

The electroactive material within the second electrode may have a minimum voltage with respect to lithium metal of greater than or equal to 2.8 V, greater than or equal to 3 V, greater than or equal to 3.2 V, greater than or equal to 3.4 V, greater than or equal to 3.6 V, greater than or equal to 3.8 V, greater than or equal to 4.0 V, greater than or equal to 4.2 V, or greater than or equal to 4.4 V. The electroactive material within the second electrode may have a minimum voltage with respect to lithium metal of less than or equal to 4.5 V, less than or equal to 4.2 V, less than or equal to 4.0 V, less than or equal to 3.8 V, less than or equal to 3.6 V, less than or equal to 3.4 V, less than or equal to 3.2 V, or less than or equal to 3 V. Combinations of the above-referenced ranges are also possible (e.g., greater than or equal to 2.8 V and less than or equal to 4.5 V). Other ranges are also possible.

The electroactive material within the second electrode may have a median voltage with respect to lithium metal of greater than or equal to 2.8 V, greater than or equal to 3 V, greater than or equal to 3.2 V, greater than or equal to 3.4 V, greater than or equal to 3.6 V, greater than or equal to 3.8 V, greater than or equal to 4.0 V, greater than or equal to 4.2 V, or greater than or equal to 4.4 V. The electroactive material within the second electrode has a median voltage with respect to lithium metal of less than or equal to 4.5 V, less than or equal to 4.2 V, less than or equal to 4.0 V, less than or equal to 3.8 V, less than or equal to 3.6 V, less than or equal to 3.4 V, less than or equal to 3.2 V, or less than or equal to 3 V. Combinations of the above-referenced ranges are also possible (e.g., greater than or equal to 2.8 V and less than or equal to 4.5 V). Other ranges are also possible.

The electroactive material within the second electrode may have a modal voltage with respect to lithium metal of greater than or equal to 2.8 V, greater than or equal to 3 V, greater than or equal to 3.2 V, greater than or equal to 3.4 V, greater than or equal to 3.6 V, greater than or equal to 3.8 V, greater than or equal to 4.0 V, greater than or equal to 4.2 V, or greater than or equal to 4.4 V. The electroactive material within the second electrode has a modal voltage with respect to lithium metal of less than or equal to 4.5 V, less than or equal to 4.2 V, less than or equal to 4.0 V, less than or equal to 3.8 V, less than or equal to 3.6 V, less than or equal to 3.4 V, less than or equal to 3.2 V, or less than or equal to 3 V. Combinations of the above-referenced ranges are also possible (e.g., greater than or equal to 2.8 V and less than or equal to 4.5 V). Other ranges are also possible.

Table 1, below, shows the voltage with respect to lithium metal of several cathode materials.

**Table 1**

| Material | Voltage (V) |
|---|---|
| FeS | 1.2-1.5 |
| FeS2 | 1.4-1.6 |
| BiPb₂O₅ | 1.5 |
| Bi₂O₃ | 1.5 |
| CuO | 1.5 |
| CuS | 1.5 |
| PbCuS | 1.5 |
| Electroactive conductive polymers | <2 - 3.7 |
| Transition metal sulfides and selenides | 1.2-2.1 |
| Sulfur | 2.1-2.2 |
| Ag₂V₄O₁₁ | 2.5 (first plateau); 1.5 (second plateau) |
| I₂ | 2.8 |
| SO₂ | 2.85 |
| MnO₂ | 3 |
| (CF)ₓ | 3 |
| Ag₂CrO₄ | 3.1 (first plateau); 2.6 (second plateau) |
| LiFePO₄ | 3.3 |
| V₂O₅ | 3.3 (first plateau); 2.4 (second plateau) |
| CuCl₂ | 3.3 (first plateau); 2.9 (second plateau); 2.5 (third plateau) |
| SOCl₂ | 3.5 (3.7 - 3.8 in the presence of BrCI) |
| SO₂Cl₂ | 3.7 |
| CoO₂ | 4 |
| LiNiₓMn_{y}Co_{z}O₂ where x+y+z=1 | 4.0 |
| LiNiO₂ | 4.0 |
| LiMn₂O₄ | 4.1 (first plateau); 3.9 (second plateau) |
| LiₓMnPO₄ | 4.1 |
| LiCoO₂ | 4.2 |
| LiMn_{3/2}Ni_{1/2}O₄ | 4.7-5.1 |
| LiCoPO₄ | 4.8 |
| LiₓNiPO₄ | 5.1 |

Without wishing to be bound by any theory, the use of electrodes comprising electroactive materials with moderate voltages as a second electrode (cathode) may be beneficial because it may result in the battery having a higher theoretical energy density, compared to the use of electrodes comprising electroactive materials with relatively lower voltages. However, moderate voltage electrodes may also have enhanced reactivity towards one or more electrolyte components, which may cause chemical reactions having negative effects on battery performance, such as lower cycle life. For example, a moderate voltage electrode may react with certain species in the electrolyte (e.g., a first passivating agent as defined above resp. in the claims), which may cause the generation of gaseous byproducts and/or a reduction in the cycle life of the cell. For instance, certain first passivating agents may have minimal or no reactivity towards a cathode having a relatively lower voltage with respect to lithium metal, but may have significant reactivity (e.g., higher reactivity) towards a cathode having a moderate voltage with respect to lithium metal. The battery including a cathode having a relatively lower voltage with respect to lithium metal may have a lower theoretically energy density but longer cycle life compared to a battery including a cathode having a moderate voltage with respect to lithium metal, all other factors being equal. When a second passivating agent described herein is present in the battery, however, it may passivate the second electrode, thereby reducing the reactivity of the second electrode with the first passivating agent. Therefore, the presence of a second passivating agent in addition to a first passivating agent may have a beneficial effect on cell performance, when the electrochemical cell comprises a moderate voltage electrode as second electrode (cathode). For instance, the battery including a cathode having a moderate voltage with respect to lithium metal may have both a higher theoretically energy density and a comparable cycle life compared to the battery including a cathode having a relatively lower voltage with respect to lithium metal, when first and second passivating agents are included in each of the batteries. As used herein, moderate voltage electrodes/cathodes are electrodes/cathodes with a voltage with respect to lithium metal of greater than or equal to 2.8 V and less than or equal to 4.5 V.

It should be appreciated, however, that other benefits may arise from the use of first and second passivating agents as described herein (e.g. first and second additives as defined in the claims), and that such combinations of first and second passivating agents may be used with other second electrodes than the moderate voltage electrodes described above.

The second electrode can comprise electroactive sulfur-containing materials as electroactive species (cathode active electrode species in the cathode of the electrochemical cells described herein). Such electrochemical cells are commonly referred to as lithium-sulfur electrochemical cells. "Electroactive sulfur-containing materials", as used herein, relates to electroactive materials which comprise the element sulfur in any form, wherein the electrochemical activity involves the oxidation or reduction of sulfur atoms or moieties. The nature of the electroactive sulfur-containing materials useful in the practice of this invention may vary widely, as known in the art. For example, the electroactive sulfur-containing material comprises elemental sulfur, or a mixture of elemental sulfur and a sulfur-containing polymer. Thus, suitable electroactive sulfur-containing materials may include, but are not limited to, elemental sulfur and organic materials comprising sulfur atoms and carbon atoms, which may or may not be polymeric. Suitable organic materials include those further comprising heteroatoms, conductive polymer segments, composites, and conductive polymers.

The sulfur-containing material (e.g., in an oxidized form) may comprise a polysulfide moiety, Sₘ, selected from the group consisting of covalent Sₘ moieties, ionic Sₘ moieties (especially ionic Sₘ²⁻ moieties), wherein m is an integer equal to or greater than 3. For instance, m of the polysulfide moiety Sₘ of the sulfur-containing polymer is an integer equal to or greater than 6 or an integer equal to or greater than 8. In some cases, the sulfur-containing material may be a sulfur-containing polymer. In some cases, the sulfur-containing polymer has a polymer backbone chain and the polysulfide moiety Sₘ is covalently bonded by one or both of its terminal sulfur atoms as a side group to the polymer backbone chain, or the sulfur-containing polymer has a polymer backbone chain and the polysulfide moiety Sₘ is incorporated into the polymer backbone chain by covalent bonding of the terminal sulfur atoms of the polysulfide moiety.

The electroactive sulfur-containing material may comprise more than 50% by weight of sulfur, or more than 75% by weight of sulfur (e.g., more than 90% by weight of sulfur).

As will be known by those skilled in the art, the nature of the electroactive sulfur-containing materials described herein may vary widely. The electroactive sulfur-containing material may comprise elemental sulfur, or a mixture of elemental sulfur and a sulfur-containing polymer.

For instance, an electrochemical cell as described herein comprises one or more cathodes (second electrodes) comprising sulfur, e.g. elemental sulfur, as an electroactive electrode species.

In certain cases, it is advantageous to apply an anisotropic force to the electrochemical cells described herein during charge and/or discharge. The electrochemical cells and/or the electrodes described herein can be configured to withstand an applied anisotropic force (e.g., a force applied to enhance the morphology of an electrode within the cell) while maintaining their structural integrity. A passivating layer as described herein (e.g., a passivating layer disposed on a first electrode such as an anode, a passivating layer disposed on a second electrode such as a cathode) may be configured to withstand an applied anisotropic force while maintaining its structural integrity. The application of force to an electrochemical cell comprising one or more passivating agents may cause the formation of a passivating layer with beneficial properties (e.g., in comparison to the passivating layer that would form in the absence of force) and/or may enhance the ability of the passivating agent(s) to passivate the electrode(s). The application of force to a passivating layer disposed on an electrode may enhance the ability of the passivating layer to passivate the electrode on which it is disposed.

Any of the electrodes described herein can be part of an electrochemical cell that is constructed and arranged such that, during at least one period of time during charge and/or discharge of the cell, an anisotropic force with a component normal to the active surface of an electrode within the electrochemical cell (e.g., an anode comprising lithium metal and/or a lithium alloy) is applied to the cell. Any of the passivating layers described herein may be part of an electrochemical cell that is constructed and arranged such that, during at least one period of time during charge and/or discharge of the cell, an anisotropic force with a component normal to the active surface of an electrode within the electrochemical cell (e.g., an anode comprising lithium metal and/or a lithium alloy) is applied to the cell. For instance, the applied anisotropic force is selected to enhance the morphology of an electrode (e.g., an anode such as a lithium metal and/or a lithium alloy anode), and/or a passivating layer (e.g., a passivating layer disposed on an anode such as lithium metal and/or a lithium alloy anode).

An "anisotropic force" is given its ordinary meaning in the art and means a force that is not equal in all directions. A force equal in all directions is, for example, internal pressure of a fluid or material within the fluid or material, such as internal gas pressure of an object. Examples of forces not equal in all directions include forces directed in a particular direction, such as the force on a table applied by an object on the table via gravity. Another example of an anisotropic force includes a force applied by a band arranged around a perimeter of an object. For example, a rubber band or turnbuckle can apply forces around a perimeter of an object around which it is wrapped. However, the band may not apply any direct force on any part of the exterior surface of the object not in contact with the band. In addition, when the band is expanded along a first axis to a greater extent than a second axis, the band can apply a larger force in the direction parallel to the first axis than the force applied parallel to the second axis.

The anisotropic force may comprise a component normal to an active surface of an electrode within an electrochemical cell. As used herein, the term "active surface" is used to describe a surface of an electrode at which electrochemical reactions may take place. For example, referring to FIG. 4D, electrochemical cell 9210 comprises a second electrode 9212 including an active surface 9218 and a first electrode 9216 including an active surface 9220. Electrochemical cell 9210 further comprises an electrolyte 9214. In FIG. 4D, a component 9251 of an anisotropic force 9250 is normal to both the active surface of the second electrode and the active surface of the first electrode.

The anisotropic force may comprise a component normal to a surface of a passivating layer in contact with an electrolyte.

A force with a "component normal" to a surface is given its ordinary meaning as would be understood by those of ordinary skill in the art and includes, for example, a force which at least in part exerts itself in a direction substantially perpendicular to the surface. For example, in the case of a horizontal table with an object resting on the table and affected only by gravity, the object exerts a force essentially completely normal to the surface of the table. If the object is also urged laterally across the horizontal table surface, then it exerts a force on the table which, while not completely perpendicular to the horizontal surface, includes a component normal to the table surface. Those of ordinary skill can understand other examples of these terms, especially as applied within the description of this document. In the case of a curved surface (for example, a concave surface or a convex surface), the component of the anisotropic force that is normal to an active surface of an electrode may correspond to the component normal to a plane that is tangent to the curved surface at the point at which the anisotropic force is applied. The anisotropic force may be applied at one or more pre-determined locations, optionally distributed over the active surface of the anode and/or over a surface of a passivating layer. The anisotropic force may be applied uniformly over the active surface of the anode and/or uniformly over a surface of a passivating layer in contact with an electrolyte.

Any of the electrochemical cell properties and/or performance metrics described herein may be achieved, alone or in combination with each other, while an anisotropic force is applied to the electrochemical cell (e.g., during charge and/or discharge of the cell) during charge and/or discharge. The anisotropic force applied to the electrode, to the passivating layer, and/or to the electrochemical cell (e.g., during at least one period of time during charge and/or discharge of the cell) can include a component normal to an active surface of an electrode (e.g., an anode such as a lithium metal and/or lithium alloy anode within the electrochemical cell). The component of the anisotropic force that is normal to the active surface of the electrode may define a pressure of at least 1 kg/cm², at least 2 kg/cm², at least 4 kg/cm², at least 6 kg/cm², at least 8 kg/cm², at least 10 kg/cm², at least 12 kg/cm², at least 14 kg/cm², at least 16 kg/cm², at least 18 kg/cm², at least 20 kg/cm², at least 22 kg/cm², at least 24 kg/cm², at least 26 kg/cm², at least 28 kg/cm², at least 30 kg/cm², at least 32 kg/cm², at least 34 kg/cm², at least 36 kg/cm², at least 38 kg/cm², at least 40 kg/cm², at least 42 kg/cm², at least 44 kg/cm², at least 46 kg/cm², or at least 48 kg/cm². The component of the anisotropic force normal to the active surface may, for example, define a pressure of less than 50 kg/cm², less than 48 kg/cm², less than 46 kg/cm², less than 44 kg/cm², less than 42 kg/cm², less than 40 kg/cm², less than 38 kg/cm², less than 36 kg/cm², less than 34 kg/cm², less than 32 kg/cm², less than 30 kg/cm², less than 28 kg/cm², less than 26 kg/cm², less than 24 kg/cm², less than 22 kg/cm², less than 20 kg/cm², less than 18 kg/cm², less than 16 kg/cm², less than 14 kg/cm², less than2 kg/cm², less than 10 kg/cm², less than 8 kg/cm², less than 6 kg/cm², less than 4 kg/cm², or less than 2 kg/cm². Combinations of the above-referenced ranges are also possible (e.g., at least 1 kg/cm² and less than 50 kg/cm², at least 1 kg/cm² and less than 40 kg/cm², at least 1 kg/cm² and less than 30 kg/cm², at least 1 kg/cm² and less than 20 kg/cm², or at least 10 kg/cm² and less than 20 kg/cm²). Other ranges are also possible.

The anisotropic force applied to the electrode, to the passivating layer, and/or to the electrochemical cell (e.g., during at least one period of time during charge and/or discharge of the cell) can include a component normal to a surface of a passivating layer in contact with an electrolyte (e.g., a passivating layer disposed on an anode such as a lithium metal and/or lithium alloy anode within the electrochemical cell). The component of the anisotropic force that is normal to the active surface of the passivating layer in contact with the electrolyte may define a pressure of at least 1 kg/cm², at least 2 kg/cm², at least 4 kg/cm², at least 6 kg/cm², at least 8 kg/cm², at least 10 kg/cm², at least 12 kg/cm², at least 14 kg/cm², at least 16 kg/cm², or at least 18 kg/cm². The component of the anisotropic force normal to the surface of the passivating layer in contact with the electrolyte may define a pressure of less than 20 kg/cm², less than 18 kg/cm², less than 16 kg/cm², less than 14 kg/cm², less than 12 kg/cm², less than 10 kg/cm², less than 8 kg/cm², less than 6 kg/cm², less than 4 kg/cm², or less than 2 kg/cm². Combinations of the above-referenced ranges are also possible (e.g., at least 1 kg/cm² and less than 20 kg/cm², or at least 10 kg/cm² and less than 20 kg/cm²). Other ranges are also possible.

The anisotropic forces applied during charge and/or discharge as described herein may be applied using any method known in the art. For instance, the force is applied using compression springs. Forces may be applied using other elements (either inside or outside a containment structure) including, but not limited to Belleville washers, machine screws, pneumatic devices, and/or weights, among others. In some cases, cells may be pre-compressed before they are inserted into containment structures, and, upon being inserted to the containment structure, they may expand to produce a net force on the cell. Suitable methods for applying such forces are described in detail, for example, in U.S. Patent No. 9,105,938, .

In an electrochemical cell as described herein, the electrolyte may be a non-aqueous electrolyte. Suitable non-aqueous electrolytes include organic electrolytes such as liquid electrolytes, gel polymer electrolytes, and solid polymer electrolytes. These electrolytes may optionally include one or more ionic electrolyte salts (e.g., to provide or enhance ionic conductivity) as described below.

In some cases, the non-aqueous electrolyte comprises one or more solvents. Examples of useful non-aqueous liquid electrolyte solvents include, but are not limited to, non-aqueous organic solvents, such as, for example, N-methyl acetamide, acetonitrile, acetals, ketals, esters (e.g., esters of carbonic acid), carbonates (e.g., dimethyl carbonate, diethyl carbonate, ethyl methyl carbonate, propylene carbonate, ethylene carbonate, fluoroethylene carbonate, difluoroethylene carbonate), sulfones, sulfites, sulfolanes, suflonimidies (e.g., bis(trifluoromethane)sulfonimide lithium salt), aliphatic ethers, acyclic ethers, cyclic ethers, glymes, polyethers, phosphate esters (e.g., hexafluorophosphate), siloxanes, dioxolanes, N-alkylpyrrolidones, nitrate containing compounds, substituted forms of the foregoing, and blends thereof. Examples of acyclic ethers that may be used include, but are not limited to, diethyl ether, dipropyl ether, dibutyl ether, dimethoxymethane, trimethoxymethane, 1,2-dimethoxyethane, diethoxyethane, 1,2-dimethoxypropane, and 1,3-dimethoxypropane. Examples of cyclic ethers that may be used include, but are not limited to, tetrahydrofuran, tetrahydropyran, 2-methyltetrahydrofuran, 1,4-dioxane, 1,3 dioxolane, and trioxane. Examples of polyethers that may be used include, but are not limited to, diethylene glycol dimethyl ether (diglyme), triethylene glycol dimethyl ether (triglyme), tetraethylene glycol dimethyl ether (tetraglyme), higher glymes, ethylene glycol divinyl ether, diethylene glycol divinyl ether, triethylene glycol divinyl ether, dipropylene glycol dimethyl ether, and butylene glycol ethers. Examples of sulfones that may be used include, but are not limited to, sulfolane, 3-methyl sulfolane, and 3-sulfolene. Fluorinated derivatives of the foregoing are also useful as liquid electrolyte solvents.

Mixtures of the solvents described herein may also be used. Mixtures of solvents may be selected from the group consisting of 1,3-dioxolane and dimethoxyethane, 1,3-dioxolane and diethyleneglycol dimethyl ether, 1,3-dioxolane and triethyleneglycol dimethyl ether, and 1,3-dioxolane and sulfolane. For example, the mixture of solvents comprises dimethyl carbonate and ethylene carbonate, or the mixture of solvents comprises ethylene carbonate and ethyl methyl carbonate. The weight ratio of the two solvents in the mixtures may range from 5 wt% : 95 wt% to 95 wt% : 5 wt%. For example, the electrolyte comprises a 50 wt% : 50 wt% mixture of dimethyl carbonate : ethylene carbonate, or a 30 wt% : 70 wt% mixture of ethylene carbonate : ethyl methyl carbonate. In another example, the mixture of solvents comprises fluoroethylene carbonate and dimethyl carbonate. The weight ratio of fluoroethylene carbonate to dimethyl carbonate may range from 20 wt% : 80 wt% to 25 wt% : 75wt%.

Preferred solvents selected from the group consisting of dimethyl carbonate, diethyl carbonate, ethyl methyl carbonate, propylene carbonate, dioxolanes, dimethoxyethane, ethylene carbonate, fluoroethylene carbonate and difluoroethylene carbonate.

Non-limiting examples of suitable gel polymer electrolytes include polyethylene oxides, polypropylene oxides, polyacrylonitriles, polysiloxanes, polyimides, polyphosphazenes, polyethers, sulfonated polyimides, perfluorinated membranes (NAFION resins), polydivinyl polyethylene glycols, polyethylene glycol diacrylates, polyethylene glycol dimethacrylates, derivatives of the foregoing, copolymers of the foregoing, cross-linked and network structures of the foregoing, and blends of the foregoing.

Non-limiting examples of suitable solid polymer electrolytes include polyethers, polyethylene oxides, polypropylene oxides, polyimides, polyphosphazenes, polyacrylonitriles, polysiloxanes, derivatives of the foregoing, copolymers of the foregoing, cross-linked and network structures of the foregoing, and blends of the foregoing.

As described above, in some cases the passivating agent(s) (e.g., first passivating agent and/or second passivating agent as described herein resp. as defined in the claims) is at least partially soluble in the electrolyte. In some cases, the passivating agent is substantially soluble in the electrolyte. The passivating agent may have a solubility in the electrolyte of at least 1 wt%, at least 2 wt%, at least 5 wt%, at least 10 wt%, or at least 15 wt%. The passivating agent may have a solubility in the electrolyte of less than or equal to 20 wt%, less than or equal to 15 wt%, less than or equal to 10 wt%, less than or equal to 5 wt%, or less than or equal to 2 wt%. Combinations of the above-referenced ranges are also possible (e.g., at least 1 wt% and less than or equal to 20 wt%). Other ranges are also possible. Solubility, as used herein, is measured at 25 °C and 1 atm.

In an electrochemical cell as described herein, an electrolyte may be in the form of a layer having a particular thickness. An electrolyte layer may have a thickness of at least 1 µm, at least 5 µm, at least 10 µm, at least 15 µm, at least 20 µm, at least 25 µm, at least 30 µm, at least 40 µm, at least 50 µm, at least 70 µm, at least 100 µm, at least 200 µm, at least 500 µm, or at least 1 mm. An electrolyte layer may have a thickness of less than or equal to 1 mm, less than or equal to 500 µm, less than or equal to 200 µm, less than or equal to 100 µm, less than or equal to 70 µm, less than or equal to 50 µm, less than or equal to 40 µm, less than or equal to 30 µm, less than or equal to 20 µm, less than or equal to 10 µm, or less than or equal to 50 µm. Other values are also possible. Combinations of the above-noted ranges are also possible.

As mentioned above, the electrolyte may comprise one or more ionic electrolyte salts, preferably in the form of lithium salts. For example, said lithium salts are selected from the group consisting of LiSCN, LiBr, Lil, LiSO₃CH₃, LiNO₃, LiPF₆, LiBF₄, LiB(Ph)₄, LiClO₄, LiAsF₆, Li₂SiF₆, LiSbF₆, LiAlCl₄, lithium bis(oxalato)borate, LiCF₃SO₃, LiN(SO₂F)₂, LiN(SO₂CF₃)₂, and (CₙF₂ₙ₊₁SO₂)ₘXLi with n being an integer in the range of from 1 to 20, m being 1 when X is selected from oxygen or sulfur, m being 2 when X is selected from nitrogen or phosphorus, and m being 3 when X is selected from carbon or silicon, for example LiC(CₙF₂ₙ₊₁SO₂)₃, wherein n is an integer in the range of from 1 to 20.

Preferred lithium salts are selected from the group consisting of lithium perchlorate, lithium hexafluoroarsenate, lithium tetrafluoroborate, lithium trifluromethanesulfonate, and lithium bis(trifluoromethanesulfonyl)imide, and lithium hexafluorophosphate.

When present, a lithium salt may be present in the electrolyte in any suitable concentration. The lithium salt may be present in the electrolyte at a concentration of greater than or equal to 0.01 M, greater than or equal to 0.02 M, greater than or equal to 0.05 M, greater than or equal to 0.1 M, greater than or equal to 0.2 M, greater than or equal to 0.5 M, greater than or equal to 1 M, greater than or equal to 2 M, or greater than or equal to 5 M. The lithium salt may be present in the electrolyte at a concentration of less than or equal to 10 M, less than or equal to 5 M, less than or equal to 2 M, less than or equal to 1 M, less than or equal to 0.5 M, less than or equal to 0.2 M, less than or equal to 0.1 M, less than or equal to 0.05 M, or less than or equal to 0.02 M. Combinations of the above-referenced ranges are also possible (e.g., greater than or equal to 0.01 M and less than or equal to 10 M, or greater than or equal to 0.01 M and less than or equal to 5 M). Other ranges are also possible.

An electrolyte may comprise LiPF₆ in any suitable concentration. The electrolyte may comprise LiPF₆ at a concentration of greater than or equal to 0.01 M, greater than or equal to 0.02 M, greater than or equal to 0.05 M, greater than or equal to 0.1 M, greater than or equal to 0.2 M, greater than or equal to 0.5 M, greater than or equal to 1 M, or greater than or equal to 2 M. The electrolyte may comprise LiPF₆ at a concentration of less than or equal to 5 M, less than or equal to 2 M, less than or equal to 1 M, less than or equal to 0.5 M, less than or equal to 0.2 M, less than or equal to 0.1 M, less than or equal to 0.05 M, or less than or equal to 0.02 M. Combinations of the above-referenced ranges are also possible (e.g., greater than or equal to 0.01 M and less than or equal to 5 M). Other ranges are also possible.

An electrolyte may comprise several species together that are particularly beneficial in combination. For instance, the electrolyte comprises fluoroethylene carbonate, dimethyl carbonate, and LiPF₆. The weight ratio of fluoroethylene carbonate to dimethyl carbonate may range from 20 wt%:80 wt% to 25 wt%:75 wt% and the concentration of LiPF₆ in the electrolyte may range from 0.05 M and 2 M), e.g.1 M. The electrolyte may further comprise lithium bis(oxalato)borate (e.g., at a concentration of from 0.1 wt% to 6 wt%, from 0.5 wt% to 6 wt%, or from 1 wt% to 6 wt% in the electrolyte), and/or lithium tris(oxalato)phosphate (e.g., at a concentration of from 1 wt% to 6 wt% in the electrolyte).

An electrochemical cell may include an electrolyte as described in the previous paragraph (e.g., comprising fluoroethylene carbonate, dimethyl carbonate, LiPF₆, and, optionally, lithium bis(oxalato)borate and/or lithium tris(oxalato)phosphate) and a protective layer. The protective layer may be porous, and/or may be under an anisotropic force. The porosity of the protective layer may be 25% or higher. The anisotropic force may have a magnitude of at least 10 kg/cm² and less than 20 kg/cm².

An electrochemical cell as described herein may include a separator. The separator may comprise a polymeric material (e.g., polymeric material that does or does not swell upon exposure to electrolyte). Usually, the separator is located between the electrolyte and an electrode e.g., the first electrode (anode) resp. the second electrode (cathode).

The separator can be configured to inhibit (e.g., prevent) physical contact between a first electrode and a second electrode, which could result in short circuiting of the electrochemical cell. Herein, the separator can be configured to be substantially electronically non-conductive. For instance, all or portions of the separator can be formed of a material with a bulk electronic resistivity of at least 10⁴, at least 10⁵, at least 10¹⁰, at least 10¹⁵, or at least 10²⁰ Ohm*m. Bulk electronic resistivity may be measured at room temperature (e.g., 25 °C).

The separator can be ionically conductive. The average ionic conductivity of the separator may be at least 10⁻⁷ S/cm, at least 10⁻⁶ S/cm, at least 10⁻⁵ S/cm, at least 10⁻⁴ S/cm, at least 10⁻² S/cm, at least 10⁻¹ S/cm. The average ionic conductivity of the separator may be less than or equal to 1 S/cm, less than or equal to 10⁻¹ S/cm, less than or equal to 10⁻² S/cm, less than or equal to 10⁻³ S/cm, less than or equal to 10⁻⁴ S/cm, less than or equal to 10⁻⁵ S/cm, less than or equal to 10⁻⁶ S/cm, less than or equal to 10⁻⁷ S/cm, or less than or equal to 10⁻⁸ S/cm. Combinations of the above-referenced ranges are also possible (e.g., an average ionic conductivity of at least 10⁻⁸ S/cm and less than or equal to 10⁻¹ S/cm). Other values of ionic conductivity are also possible. Conductivity may be measured at room temperature (e.g., 25 °C).

The average ion conductivity of the separator can be determined using a conductivity bridge (i.e., an impedance measuring circuit) operating at 1 kHz by pressing the separator between two copper cylinders at a pressure of up to 3 tons/cm². Herein, the average ion conductivity (i.e., the inverse of the average resistivity) can be measured at 500 kg/cm² increments using a conductivity bridge (i.e., an impedance measuring circuit) operating at 1 kHz. Herein, the pressure may be increased until changes in average ion conductivity are no longer observed in the sample.

In other cases, the separator is substantially ionically non-conductive.

The separator can be a solid. The separator may be porous to allow an electrolyte solvent to pass through it. In some cases, e.g. in case of a separator in the form of a gel, the separator does not substantially include a solvent, except for solvent that may pass through or reside in the pores of the separator. In other cases, the separator may be in the form of a gel.

A separator can be made of a variety of materials. The separator may be polymeric in some instances, or formed of an inorganic material (e.g., glass fiber filter papers) in other instances. Examples of suitable separator materials include, but are not limited to, polyolefins (e.g., polyethylenes, poly(butene-1), poly(n-pentene-2), polypropylene, polytetrafluoroethylene), polyamines (e.g., poly(ethylene imine) and polypropylene imine (PPI)); polyamides (e.g., polyamide (Nylon), poly(ε-caprolactam) (Nylon 6), poly(hexamethylene adipamide) (Nylon 66)), polyimides (e.g., polyimide, polynitrile, and poly(pyromellitimide-1,4-diphenyl ether) (Kapton^{®}) (NOMEX^{®}) (KEVLAR^{®})); polyether ether ketone (PEEK); vinyl polymers (e.g., polyacrylamide, poly(2-vinyl pyridine), poly(N-vinylpyrrolidone), poly(methylcyanoacrylate), poly(ethylcyanoacrylate), poly(butylcyanoacrylate), poly(isobutylcyanoacrylate), poly(vinyl acetate), poly(vinyl alcohol), poly(vinyl chloride), poly(vinyl fluoride), poly(2-vinyl pyridine), vinyl polymer, polychlorotrifluoro ethylene, and poly(isohexylcynaoacrylate)); polyacetals; polyesters (e.g., polycarbonate, polybutylene terephthalate, polyhydroxybutyrate); polyethers (poly(ethylene oxide) (PEO), poly(propylene oxide) (PPO), poly(tetramethylene oxide) (PTMO)); vinylidene polymers (e.g., polyisobutylene, poly(methyl styrene), poly(methylmethacrylate) (PMMA), poly(vinylidene chloride), and poly(vinylidene fluoride)); polyaramides (e.g., poly(imino-1,3-phenylene iminoisophthaloyl) and poly(imino-1,4-phenylene iminoterephthaloyl)); polyheteroaromatic compounds (e.g., polybenzimidazole (PBI), polybenzobisoxazole (PBO) and polybenzobisthiazole (PBT)); polyheterocyclic compounds (e.g., polypyrrole); polyurethanes; phenolic polymers (e.g., phenol-formaldehyde); polyalkynes (e.g., polyacetylene); polydienes (e.g., 1,2-polybutadiene, cis or trans-1,4-polybutadiene); polysiloxanes (e.g., poly(dimethylsiloxane) (PDMS), poly(diethylsiloxane) (PDES), polydiphenylsiloxane (PDPS), and polymethylphenylsiloxane (PMPS)); and inorganic polymers (e.g., polyphosphazene, polyphosphonate, polysilanes, polysilazanes). More specifically, the polymer may be selected from poly(n-pentene-2), polypropylene, polytetrafluoroethylene, polyamides (e.g., polyamide (Nylon), poly(ε-caprolactam) (Nylon 6), poly(hexamethylene adipamide) (Nylon 66)), polyimides (e.g., polynitrile, and poly(pyromellitimide-1,4-diphenyl ether) (Kapton^{®}) (NOMEX^{®}) (KEVLAR^{®})), polyether ether ketone (PEEK), and combinations thereof.

The mechanical and electronic properties (e.g., conductivity, resistivity) of these polymers are known. Accordingly, those of ordinary skill in the art can choose suitable materials based on their mechanical and/or electronic properties (e.g., ionic and/or electronic conductivity/resistivity), and/or can modify such polymers to be ionically conducting (e.g., conductive towards single ions) based on knowledge in the art, in combination with the description herein. For example, the polymer materials listed above and herein may be combined with salts, for example, lithium salts (e.g., LiSCN, LiBr, Lil, LiSO₃CH₃, LiNO₃, LiPF₆, LiBF₄, LiB(Ph)₄, LiClO₄, LiAsF₆, Li₂SiF₆, LiSbF₆, LiAlCl₄, lithium bis(oxalato)borate, LiCF₃SO₃, LiN(SO₂F)₂, LiN(SO₂CF₃)₂, LiC(CₙF₂ₙ₊₁SO₂)₃, wherein n is an integer in the range of from 1 to 20, and (CₙF₂ₙ₊₁SO₂)ₘXLi with n being an integer in the range of from 1 to 20, m being 1 when X is selected from oxygen or sulfur, m being 2 when X is selected from nitrogen or phosphorus, and m being 3 when X is selected from carbon or silicon) and/or others described herein, to enhance ionic conductivity, if desired.

The separator may be porous. The separator pore size may be less than 5 µm. The separator pore size may be between 50 nm and 5 µm, between 50 nm and 500 nm, between 100 nm and 300 nm, between 300 nm and 1 µm, between 500 nm and 5 µm. The pore size may be less than or equal to 5 µm, less than or equal to 1 µm, less than or equal to 500 nm, less than or equal to 300 nm, less than or equal to 100 nm, or less than or equal to 50 nm. The pore size may be greater than 50 nm, greater than 100 nm, greater than 300 nm, greater than 500 nm, or greater than 1 µm. Other values are also possible. Combinations of the above-noted ranges are also possible (e.g., a pore size of less than 300 nm and greater than 100 nm).

In certain cases, the separator is substantially non-porous.

An electrochemical cell described herein may comprise at least one current collector. Materials for the current collector may be selected from metals (e.g., copper, nickel, aluminum, passivated metals, and other appropriate metals), metallized polymers, electrically conductive polymers, polymers comprising conductive particles dispersed therein, and other appropriate materials. The current collector is deposited onto the electrode layer using physical vapor deposition, chemical vapor deposition, electrochemical deposition, sputtering, doctor blading, flash evaporation, or any other appropriate deposition technique for the selected material. In other cases, the current collector is formed separately and bonded to the electrode structure. It should be appreciated, however, that in some cases a current collector separate from the electroactive layer is not needed or present.

Another aspect of the present application relates to the formation of electrode slurries, in particular to electrode slurries which maintain fluid-like properties over the time period between formation of the slurry and application of the slurry to a current collector. These slurries may be easier to process (e.g., easier to mix, easier to apply, easier to apply uniformly) than slurries that do not maintain fluid-like properties (e.g., slurries that have at least a portion gelled and/or solidified). The slurry may comprise a particulate electroactive material and a liquid. The slurry may further comprise a binder and/or one or more further constituents, e.g. electronically conductive materials. The particulate electroactive material within the slurry may have one or more features that tend to promote gelation (e.g., it may have a small average particle size, it may comprise certain amounts of nickel), but still be a component of a slurry with fluid-like properties. Herein, one or more reactive groups present on the surface of the particulate electroactive material (e.g., -OH groups, -COOH groups) may be passivated prior to slurry formation (e.g., by exposure to a second passivating agent as described herein, by exposure to a silane compound).

As used herein, slurries are typically (but not always) compositions which comprise at least one liquid component and at least one solid component. The solid component may be at least partially suspended in the liquid and/or at least partially dissolved within the liquid.

According to the above-defined aspect, there is provided a slurry, comprising:
a particulate electroactive material, wherein the particulate electroactive material comprises a lithium ion intercalation cathode material, and wherein the particulate electroactive material has a mean particle diameter of less than or equal to 8 µm;
a binder; and
a liquid,
wherein the loss modulus of the slurry is greater than the storage modulus of the slurry for at least one frequency when the slurry is subject to an oscillating shear strain at a frequency of between 0.01 s⁻¹ and 100 s⁻¹.

According to the above-defined aspect, there is further provided a slurry, comprising:
a particulate electroactive material, wherein the particulate electroactive material comprises nickel in an amount of at least 25 wt%, and wherein the particulate electroactive material has a mean particle diameter of less than or equal to 20 µm;
a binder; and
a liquid,
wherein the loss modulus of the slurry is greater than the storage modulus of the slurry for at least one frequency when the slurry is subject to an oscillating shear strain at a frequency of between 0.01 s⁻¹ and 100 s⁻¹.

According to the above-defined aspect, there is further provided a method, comprising:
exposing a particulate electroactive material to a silane;
adding the electroactive material to a liquid comprising a binder to form a slurry,
wherein, for at least 1 hour, the loss modulus of the slurry is greater than the storage modulus of the slurry for at least one frequency when the slurry is subject to an oscillating shear strain at a frequency of between 0.01 s⁻¹ and 100 s⁻¹.

FIGs. 5A-5C show one non-limiting example of a method for forming a slurry comprising fluid-like properties. In FIG. 5A, an electroactive material 210 is exposed to a passivating agent 220 (e.g., a silane compound). The passivating agent may react with one or more groups on the surface of the electroactive material (e.g., -OH groups, -COOH groups) in a manner that causes them to be modified such that they have a reduced tendency to gel or solidify (e.g., by removing or modifying one or more surface groups, by forming a silane coating on the surface of the electroactive material). FIG. 5B shows the addition of a passivated electroactive material 212 to a fluid comprising a binder 230 and a liquid 240. At the conclusion of this step, fluid-like slurry 2000 is formed, as shown illustratively in FIG. 5C. Although not shown in FIGs. 5B or 5C, a slurry may comprise one or more further constituents (e.g. electronically conductive materials).

As described above, a slurry may have fluid-like properties. That is, the loss modulus is greater than the storage modulus for at least one frequency (or within a range of frequencies) when subject to an oscillating shear strain. The loss modulus may be greater than the storage modulus for at least one frequency (or within a range of frequencies) when the slurry is subject to an oscillating shear strain at a frequency of greater than or equal to 0.001 s⁻¹, greater than or equal to 0.01 s⁻¹, greater than or equal to 0.1 s⁻¹, greater than or equal to 1 s⁻¹, greater than or equal to 10 s⁻¹, or greater than or equal to 100 s⁻¹. The loss modulus may be greater than the storage modulus for at least one frequency (or within a range of frequencies) when the slurry is subject to an oscillating shear strain at a frequency of less than or equal to 1000 s⁻¹, less than or equal to 100 s⁻¹, less than or equal to 10 s⁻¹, less than or equal to 1 s⁻¹, less than or equal to 0.1 s⁻¹, or less than or equal to 0.01 s⁻¹. Combinations of the above-referenced ranges are also possible (e.g., greater than or equal to 0.01 s⁻¹ and less than or equal to 100 s⁻¹, or greater than or equal to 0.1 s⁻¹ and less than or equal to 10 s⁻¹). Other ranges are also possible. The loss modulus and storage modulus of a slurry may be determined by subjecting the slurry to oscillatory shear rheology at 25 °C using a concentric cylinder rheometer with a cone angle of 1°. The slurry may be subject to strain in the linear viscoelastic regime at increasing angular frequencies from 0.1 to 1000 rad/s.

The loss modulus may be greater than the storage modulus for each frequency when the slurry is subject to an oscillating shear strain at a frequency of greater than or equal to 0.001 s⁻¹, greater than or equal to 0.01 s⁻¹, greater than or equal to 0.1 s⁻¹, greater than or equal to 1 s⁻¹, greater than or equal to 10 s⁻¹, or greater than or equal to 100 s⁻¹.The loss modulus may be greater than the storage modulus for each frequency (or within a range of frequencies) when the slurry is subject to an oscillating shear strain at a frequency of less than or equal to 1000 s⁻¹, less than or equal to 100 s⁻¹, less than or equal to 10 s⁻¹, less than or equal to 1 s⁻¹, less than or equal to 0.1 s⁻¹, or less than or equal to 0.01 s⁻¹. Combinations of the above-referenced ranges are also possible (e.g., greater than or equal to 0.01 s⁻¹ and less than or equal to 100 s⁻¹, or greater than or equal to 0.1 s⁻¹ and less than or equal to 10 s⁻¹). Other ranges are also possible.

Herein, a slurry may have a loss modulus that is substantially higher than the storage modulus. For instance, when subject to an oscillating shear strain (e.g., at a frequency of between 0.01 s⁻¹ and 100 s⁻¹, at a frequency of between 0.1 s⁻¹ and 100 s⁻¹), the ratio of the loss modulus to the storage modulus for at least one frequency (or a range of frequencies) may be greater than or equal to 2, greater than or equal to 5, greater than or equal to 10, greater than or equal to 20, greater than or equal to 50, greater than or equal to 100, greater than or equal to 200, greater than or equal to 500, greater than or equal to 1000, greater than or equal to 2000, or greater than or equal to 5000. For instance, when subject to an oscillating shear strain (e.g., at a frequency of between 0.01 s⁻¹ and 100 s⁻¹, at a frequency of between 0.1 s⁻¹ and 100 s⁻¹), the ratio of the loss modulus to the storage modulus for at least one frequency (or a range of frequencies) may be less than or equal to 10,000, less than or equal to 5000, less than or equal to 2000, less than or equal to 1000, less than or equal to 500, less than or equal to 200, less than or equal to 100, less than or equal to 50, less than or equal to 20, less than or equal to 10, or less than or equal to 5. Combinations of the above-referenced ranges are also possible (e.g., greater than or equal to 2 and less than or equal to 10,000). Other ranges are also possible. The above-referenced ranges of ratios are also possible when the slurry is subjected to other ranges of oscillating frequencies.

For instance, when subject to an oscillating shear strain (e.g., at a frequency of between 0.01 s⁻¹ and 100 s⁻¹, at a frequency of between 0.1 s⁻¹ and 100 s⁻¹), the ratio of the loss modulus to the storage modulus for each frequency may be greater than or equal to 2, greater than or equal to 5, greater than or equal to 10, greater than or equal to 20, greater than or equal to 50, greater than or equal to 100, greater than or equal to 200, greater than or equal to 500, greater than or equal to 1000, greater than or equal to 2000, or greater than or equal to 5000. For instance, when subject to an oscillating shear strain (e.g., at a frequency of between 0.01 s⁻¹ and 100 s⁻¹, at a frequency of between 0.1 s⁻¹ and 100 s⁻¹), the ratio of the loss modulus to the storage modulus for each frequency may be less than or equal to 10,000, less than or equal to 5000, less than or equal to 2000, less than or equal to 1000, less than or equal to 500, less than or equal to 200, less than or equal to 100, less than or equal to 50, less than or equal to 20, less than or equal to 10, or less than or equal to 5. Combinations of the above-referenced ranges are also possible (e.g., greater than or equal to 2 and less than or equal to 10,000). Other ranges are also possible. The above-referenced ranges of ratios are also possible when the slurry is subjected to other ranges of oscillating frequencies.

A slurry may have a loss modulus that is greater than its storage modulus (e.g., in one or more ranges of ratios described above) over a period of time (e.g., a period of time after combining all of the components of the slurry). The loss modulus of the slurry may be greater than the storage modulus of the slurry (e.g., when the slurry is subject to an oscillating shear strain at a frequency of between 0.01 s⁻¹ and 100 s⁻¹, when the slurry is subject to an oscillating shear strain at a frequency of between 0.1 s⁻¹ and 10 s⁻¹) for at least one frequency (or a range of frequencies) for a period of time of at least 1 hour, at least 2 hours, at least 6 hours, at least 12 hours, for at least 1 day, or for at least 1 week. The loss modulus of the slurry may be greater than the storage modulus of the slurry (e.g., when the slurry is subject to an oscillating shear strain at a frequency of between 0.01 s⁻¹ and 100 s⁻¹, when the slurry is subject to an oscillating shear strain at a frequency of between 0.1 s⁻¹ and 10 s⁻¹) for at least one frequency for a period of time of at most 1 month, at most 1 week, at most 1 day, at most 12 hours, at most 6 hours, or at most 2 hours.

Combinations of the above-referenced ranges are also possible (e.g., at least 1 hour and at most 1 month). Other ranges are also possible. The slurry may have a loss modulus that is greater than its storage modulus over the above-referenced time periods when the slurry is subjected to other ranges of oscillating frequencies.

The loss modulus of the slurry may be greater than the storage modulus of the slurry (e.g., when the slurry is subject to an oscillating shear strain at a frequency of between 0.01 s⁻¹ and 100 s⁻¹, when the slurry is subject to an oscillating shear strain at a frequency of between 0.1 s⁻¹ and 100 s⁻¹) for each frequency for a period of time of at least 1 hour, at least 2 hours, at least 6 hours, at least 12 hours, for at least 1 day, or for at least 1 week. The loss modulus of the slurry may be greater than the storage modulus of the slurry (e.g., when the slurry is subject to an oscillating shear strain at a frequency of between 0.01 s⁻¹ and 100 s⁻¹, when the slurry is subject to an oscillating shear strain at a frequency of between 0.1 s⁻¹ and 100 s⁻¹) for each frequency for a period of time of at most 1 month, at most 1 week, at most 1 day, at most 12 hours, at most 6 hours, or at most 2 hours. Combinations of the above-referenced ranges are also possible (e.g., at least 1 hour and at most 1 month). Other ranges are also possible. The slurry may have a loss modulus that is greater than its storage modulus over the above-referenced time periods when the slurry is subjected to other ranges of oscillating frequencies.

A slurry as described herein may have a relatively low viscosity. The viscosity of the slurry may be less than or equal to 10⁸ MPa*seconds, less than or equal to 5*10⁷ MPa* seconds, less than or equal to 10⁷ MPa*seconds, less than or equal to 5*10⁶ MPa*seconds, less than or equal to 10⁶ MPa*seconds, less than or equal to 5*10⁵ MPa*seconds, less than or equal to 10⁵ MPa*seconds, or less than or equal to 5*10⁴ MPa*seconds. The viscosity of the slurry may be greater than or equal to 10⁴ MPa*seconds, greater than or equal to 5*10⁴ MPa*seconds, greater than or equal to 10⁵ MPa*seconds, greater than or equal to 5*10⁵ MPa*seconds, greater than or equal to 10⁶ MPa*seconds, greater than or equal to 5*10⁶ MPa*seconds, greater than or equal to 10⁷ MPa*seconds, or greater than or equal to 5*10⁷ MPa*seconds. Combinations of the above-referenced ranges are also possible (e.g., greater than or equal to 10⁴ MPa*s and less than or equal to 10⁸ MPa*s). Other ranges are also possible. The viscosity can be determined by using a Ford viscosity cup.

A slurry as described herein may maintain a relatively constant viscosity over a period of time (e.g., the period of time between slurry formation and application to a current collector).The viscosity of the slurry may increase by less than or equal to 1000%, less than or equal to 500%, less than or equal to 200%, less than or equal to 100%, less than or equal to 50%, or less than or equal to 25% over a period of time of greater than or equal to 1 hour, greater than or equal to 2 hours, greater than or equal to 4 hours, greater than or equal to 8 hours, greater than or equal to 12 hours, greater than or equal to 1 day, or greater than or equal to 1 week and less than or equal to 1 month. The viscosity of the slurry may increase by greater than or equal to 10%, greater than or equal to 25%, greater than or equal to 50%, greater than or equal to 100%, greater than or equal to 200%, or greater than or equal to 500% over a period of time of greater than or equal to 1 hour, greater than or equal to 2 hours, greater than or equal to 4 hours, greater than or equal to 8 hours, greater than or equal to 12 hours, greater than or equal to 1 day, or greater than or equal to 1 week and less than or equal to 1 month. Combinations of the above-referenced ranges are also possible (e.g., greater than or equal to 10% and less than or equal to 1000% over a period of time of greater than or equal to 1 hour and less than or equal to 1 month). Other ranges are also possible.

A slurry as described herein may comprise a particulate electroactive material. The particulate electroactive material may comprise one or more of the materials described herein as being suitable for use in the first electrode or the second electrode. The particulate electroactive material for the second electrode may be a lithium ion intercalation material as mentioned above. Non-limiting examples of suitable materials that may intercalate ions of an electroactive material (e.g., alkaline metal ions, especially lithium) include metal oxides, metal phosphates, titanium sulfide, and iron sulfide. In some cases, the second electrode comprises an intercalation electrode that comprises a lithium transition metal oxide or a lithium transition metal phosphate. Examples of lithium transition metal oxides are LiₓCoO₂, LiₓNiO₂, LiₓMnO₂, LiₓMn₂O₄, LiₓCoPO₄, LiₓMnPO₄, LiCoₓNi₍₁₋ₓ₎O₂, LiCoₓNi_{y}Mn_{z}O₂ where x + y + z = 1 (e.g., LiNi_{1/3}Mn_{1/3}Co_{1/3}O₂, LiNi_{3/5}Mn_{1/5}Co_{1/5}O₂, LiNi_{4/5}Mn_{1/10}Co_{1/10}O₂, LiNi_{1/2}Mn_{3/10}Co_{1/5}O₂), LiMnₓNi_{y}O₄ where x + y = 2 (e.g., LiMn_{1.5}Ni_{0.5}O₄), LiNiₓCo_{y}Al_{z}O₂ where (x + y + z =1). Examples of lithium transition metal phosphates are LiₓNiPO₄, where (0 < x ≤ 1) and LiFePO₄. Lithium transition metal phosphates can be substituted with borates and/or silicates.

In certain cases, a particulate electroactive material as described herein may comprise nickel. The nickel content of the particulate electroactive material may be greater than or equal to 20 w%, greater than or equal to 25 wt%, greater than or equal to 30 wt%, greater than or equal to 35 wt%, greater than or equal to 40 wt%, greater than or equal to 45 wt%, greater than or equal to 50 wt%, greater than or equal to 55 wt%, greater than or equal to 60 wt%, greater than or equal to 65 wt%, greater than or equal to 70 wt%, or greater than or equal to 75 wt%. The nickel content of the particulate electroactive material may be less than or equal to 80 wt%, less than or equal to 75 wt%, less than or equal to 70 wt%, less than or equal to 65 wt%, less than or equal to 60 wt%, less than or equal to 55 wt%, less than or equal to 50 wt%, less than or equal to 45 wt%, or less than or equal to 40 wt%. Combinations of the above-referenced ranges are also possible (e.g., greater than or equal to 33 wt% and less than or equal to 80 wt%). Other ranges are also possible. Without wishing to be bound by any theory, particulate electroactive materials with higher nickel content may have a higher specific discharge capacity, but may have enhanced reactivity with an electrolyte present in an electrochemical cell.

A particulate electroactive material of a slurry may have a relatively small mean particle diameter. The mean particle diameter of the particulate electroactive material may be less than or equal to 20 µm, less than or equal to 15 µm, less than or equal to 13 µm, less than or equal to 10 µm, less than or equal to 8 µm, less than or equal to 4 µm, less than or equal to 2 µm, less than or equal to 1 µm, less than or equal to 500 nm, or less than or equal to 200 nm. The mean particle diameter of the particulate electroactive material may be greater than or equal to 100 nm, greater than or equal to 200 nm, greater than or equal to 500 nm, greater than or equal to 1 µm, greater than or equal to 2 µm, greater than or equal to 4 µm, greater than or equal to 8 µm, greater than or equal to 10 µm, greater than or equal to 10 µm, greater than or equal to 13 µm, or greater than or equal to 15 µm. Combinations of the above-referenced ranges are also possible (e.g., greater than or equal to 100 nm and less than or equal to 20 µm, greater than or equal to 100 nm and less than or equal to 8 µm, or greater than or equal to 13 µm and less than or equal to 15 µm). Other ranges are also possible. The average particle diameter of the particulate electroactive material may be determined by SEM.

Without wishing to be bound by any theory, it is believed that particulate electroactive materials that comprise moderate or high amounts of nickel and/or have a relatively low mean particle diameter may have an enhanced tendency to form gelled slurries in comparison to particulate electroactive materials that do not have either of these properties. Thus, methods for forming slurries comprising particulate electroactive materials with either or both of these properties, wherein said slurries have fluid-like properties may have particular utility.

A particulate electroactive material may make up any suitable weight percent of a slurry. The particulate electroactive material may make up greater than or equal to 2 wt% of the slurry, greater than or equal to 5 wt% of the slurry, greater than or equal to 10 wt% of the slurry, greater than or equal to 15 wt% of the slurry, greater than or equal to 20 wt% of the slurry, greater than or equal to 25 wt% of the slurry, greater than or equal to 30 wt% of the slurry, greater than or equal to 35 wt% of the slurry, greater than or equal to 40 wt% of the slurry, greater than or equal to 45 wt% of the slurry, greater than or equal to 50 wt% of the slurry, or greater than or equal to 55 wt% of the slurry. The particulate electroactive material may make up less than or equal to 60 wt% of the slurry, less than or equal to 55 wt% of the slurry, less than or equal to 50 wt% of the slurry, less than or equal to 45 wt% of the slurry, less than or equal to 40 wt% of the slurry, less than or equal to 45 wt% of the slurry, less than or equal to 30 wt% of the slurry, less than or equal to 25 wt% of the slurry, less than or equal to 20 wt% of the slurry, less than or equal to 15 wt% of the slurry, less than or equal to 10 wt% of the slurry, or less than or equal to 5 wt% of the slurry. Combinations of the above-referenced ranges are also possible (e.g., greater than or equal to 2 wt% and less than or equal to 60 wt% of the slurry, or greater than or equal to 2 wt% and less than or equal to 30 wt% of the slurry). Other ranges are also possible.

As described above a particulate electroactive material present in a slurry may have a surface that has been passivated and/or a surface that comprises relatively few groups (e.g., functional groups) that promote gelation of the slurry. The surface of the particulate electroactive material may be treated in any suitable manner. For instance, the particulate electroactive material may be passivated by exposure to a second passivating agent as described above. The surface of the particulate electroactive material may be treated (e.g., prior to incorporation into a slurry, or after being incorporated into a slurry) by exposure to a silane compound, or the surface of the particulate electroactive material may be coated by a silane compound. The silane compound (or silicon-containing compound) may be capable of reacting (e.g., configured to react) with residual -OH and/or -COOH groups present at the particulate electroactive material surface. For instance, the silane compound (or silicon-containing compound) may have reactive groups that are reactive with residual -OH and/or -COOH groups present at the particulate electroactive material surface. The silane compound (or silicon-containing compound) may comprise one or more functional groups suitable for reacting with -OH and -COOH groups, such as leaving groups. The leaving groups may comprise alkoxy groups and/or halogen groups. Non-limiting examples of suitable alkoxy groups include linear alkoxy groups such as methoxy, ethoxy, propoxy, and butoxy groups as well as branched alkoxy groups such as tertbutoxy groups. Non-limiting examples of suitable halogen groups include fluorine, chlorine, bromine, iodine, and astatine groups. Leaving groups may be capable of reacting with other leaving groups in addition to being capable of reacting with -OH and -COOH groups.

Treatment with a silane compound may result in a decrease in the number of -OH groups at the surface of the particulate electroactive material. The silane compound may react with the particulate electroactive material such that, after exposure to the silane, the particulate electroactive material contains at most 95%, at most 90%, at most 85%, at most 80%, at most 70%, at most 60%, at most 50%, at most 40%, at most 30%, at most 20%, or at most 10% of the -OH groups that it contained prior to silane exposure. The silane compound may react with the particulate electroactive material such that, after exposure to the silane, the particulate electroactive material contains at least 5%, at least 10%, at least 20%, at least 40%, at least 60%, or at least 80% of the -OH groups that it contained prior to silane exposure. Combinations of the above-referenced ranges are also possible (e.g., at least 5% and at most 95%). Other ranges are also possible.

Treatment with a silane compound may result in a decrease in the number of -COOH groups at the surface of the particulate electroactive material. The silane compound may react with the particulate electroactive material such that, after exposure to the silane, the particulate electroactive material contains at most 95%, at most 90%, at most 85%, at most 80%, at most 70%, at most 60%, at most 50%, at most 40%, at most 30%, at most 20%, or at most 10% of the -COOH groups that it contained prior to silane exposure. The silane compound may react with the particulate electroactive material such that, after exposure to the silane, the particulate electroactive material contains at least 5%, at least 10%, at least 20%, at least 40%, at least 60%, or at least 80% of the -COOH groups that it contained prior to silane exposure. Combinations of the above-referenced ranges are also possible (e.g., at least 5% and at most 95%). Other ranges are also possible.

The silane compound (or silicon-containing compound) may comprise any suitable number of leaving groups. In some cases, the silane compound has one leaving group (i.e., the silane molecule comprises exactly one group that is a leaving group and the other functional groups on the silane molecule are not leaving groups). Such silane compounds which bond to the surface of the particulate electroactive material may be incapable of undergoing any further bonding to other species present in the slurry. Silane compounds having a single leaving group may react with the surface of the particulate electroactive material to form a monolayer. The monolayer covers at least a portion of the surface of the particulate electroactive material. The monolayer is substantially continuous, or the monolayer is substantially discontinuous. The monolayer, or any other suitable layer including the silane or silicon-containing compound, may be formed (e.g., on a surface of the particulate electroactive material) prior to cell assembly.

In other cases, the silane compound (or silicon-containing compound) has two leaving groups or three leaving groups (i.e., the silane molecule comprises two or three groups that are leaving groups and the other functional group(s) on the silane molecule are not leaving groups). The silane compound (or silicon-containing compound) may be configured to bond and/or may be capable of bonding to the surface of the particulate electroactive material by a reaction of a single leaving group; the other one or two leaving groups may then be available for binding to species, e.g., to other silane molecules. Silane compounds comprising two or three leaving groups may react with each other (and possibly with the particulate electroactive material surface) to form a multilayer at the surface. The multilayer may be formed (e.g., on a surface of the particulate electroactive material) prior to slurry formation. The silane compound may have more than one leaving group but may only have one type of leaving group (i.e., each leaving group may have the same chemical structure). For example, one type of leaving group may be a halogen group or an alkoxy group as described above. The silane compound may comprise at least two types of leaving groups, at least three types of leaving groups, or at least four types of leaving groups.

The silane compound (or silicon-containing compound) may have at least one surface-reactive group, or a functional group that is not a leaving group but is a group which is capable of reacting with or interacting with residual -OH and/or -COOH groups present at the surface of the particulate electroactive material such that the surface of the particulate electroactive material is passivated. Such a surface-reactive group may form covalent and/or van der Waals bonds with -OH and/or -COOH groups. Non-limiting examples of surface-reactive groups which are not leaving groups include amino groups, linear and branched alkylamino groups, linear and branched arylamino groups such as aminopropyl groups, siloxy groups, mercapto groups, acids, linear and branched aryloxy groups, hydroxyl groups, phosphate groups, and sulfate groups. Monolayers and/or multilayers may be formed by silane compounds comprising at least one surface-reactive group. Monolayers and/or multilayers may be formed by silane compounds comprising at least one surface-reactive group and containing no leaving groups.

The silane compound (or silicon-containing compound) may have at least one functional group which is not a leaving group and not a surface-reactive group. Non-limiting examples of such groups include linear and branched alkyl groups and linear and branched aryl groups.

Non-limiting examples of suitable silane compounds include chlorotrimethylsilane, tetraethylorthosilicate, aminopropyltriethoxy silane, trichlorooctadecyl silane, hexamethyldisilazane, (3-mercaptopropyl)-trimethoxy silane, and dimethyloctadecyl((3-(trimethoxysilyl)propyl)ammonium chloride.

As described above, certain slurries as described herein may comprise a liquid (e.g., an organic liquid). For instance, the slurry comprises N-methyl-2-pyrrolidone and/or N-ethyl-2-pyrrolidone.

A slurry may comprise any suitable amount of liquid. The liquid may make up greater than or equal to 40 wt% of the slurry, greater than or equal to 45 wt% of the slurry, greater than or equal to 50 wt% of the slurry, greater than or equal to 55 wt% of the slurry, greater than or equal to 60 wt% of the slurry, greater than or equal to 65 wt% of the slurry, greater than or equal to 70 wt% of the slurry, greater than or equal to 75 wt% of the slurry, greater than or equal to 80 wt% of the slurry, greater than or equal to 85 wt% of the slurry, greater than or equal to 90 wt% of the slurry, or greater than or equal to 95 wt% of the slurry. The liquid may make up less than or equal to 98 wt% of the slurry, less than or equal to 95 wt% of the slurry, less than or equal to 90 wt% of the slurry, less than or equal to 85 wt% of the slurry, less than or equal to 80 wt% of the slurry, less than or equal to 75 wt% of the slurry, less than or equal to 70 wt% of the slurry, less than or equal to 65 wt% of the slurry, less than or equal to 60 wt% of the slurry, less than or equal to 55 wt% of the slurry, less than or equal to 50 wt% of the slurry, or less than or equal to 45 wt% of the slurry. Combinations of the above-referenced ranges are also possible (e.g., greater than or equal to 40 wt% of the slurry and less than or equal to 98 wt% of the slurry, or greater than or equal to 70 wt% of the slurry and less than or equal to 98 wt% of the slurry). Other ranges are also possible.

A slurry as described herein may comprise a binder. The binder may be any material that is capable of holding the particulate electroactive material together in the final electrode such that it forms a unified structure. The binder may comprise a polymer, such as one or more of poly(vinylidene fluoride), a poly(vinylidene fluoride copolymer) such as a copolymer with hexafluorophosphate, a poly(styrene)-poly(butadiene) copolymer, a poly(styrene)-poly(butadiene) rubber, carboxymethyl cellulose, and poly(acrylic acid). The binder may make up less than or equal to 20 wt%, less than or equal to 10 wt%, less than or equal to 5 wt%, or less than or equal to 2 wt% of the slurry. The binder may make up greater than or equal to 1 wt%, greater than or equal to 2 wt%, greater than or equal to 5 wt%, or greater than or equal to 10 wt% of the slurry. Combinations of the above ranges are also possible (e.g., greater than or equal to 1 wt% and less than or equal to 10 wt%). Other ranges are also possible.

A slurry may comprise one or more further constituents (i.e., a constituent that is not a particulate electroactive material, a liquid, or a binder). Non-limiting examples of such further constituents include electronically conductive materials, such as carbonaceous materials like carbon nanotubes, carbon black and/or graphite.

When present, further constituents may make up any suitable portion of a slurry. Further constituents may make up less than or equal to 20 wt%, less than or equal to 10 wt%, less than or equal to 5 wt%, or less than or equal to 2 wt% of the slurry. Further constituents may make up greater than or equal to 1 wt%, greater than or equal to 2 wt%, greater than or equal to 5 wt%, or greater than or equal to 10 wt% of the slurry. Combinations of the above ranges are also possible (e.g., greater than or equal to 1 wt% and less than or equal to 10 wt%). Other ranges are also possible.

For convenience, certain terms employed in the specification, examples, and appended claims are listed here. Definitions of specific functional groups and chemical terms are described in more detail below. For purposes of this invention, the chemical elements are identified in accordance with the Periodic Table of the Elements, CAS version, Handbook of Chemistry and Physics, 75th Ed., inside cover, and specific functional groups are generally defined as described therein. Additionally, general principles of organic chemistry, as well as specific functional moieties and reactivity, are described in Organic Chemistry, Thomas Sorrell, University Science Books, Sausalito: 1999.

The term "aliphatic," as used herein, includes both saturated and unsaturated, nonaromatic, straight chain (i.e., unbranched), branched, acyclic, and cyclic (i.e., carbocyclic) hydrocarbons, which are optionally substituted with one or more functional groups. As will be appreciated by one of ordinary skill in the art, "aliphatic" is intended herein to include, but is not limited to, alkyl, alkenyl, alkynyl, cycloalkyl, cycloalkenyl, and cycloalkynyl moieties. Thus, as used herein, the term "alkyl" includes straight, branched and cyclic alkyl groups. An analogous convention applies to other generic terms such as "alkenyl", "alkynyl", and the like. Furthermore, as used herein, the terms "alkyl", "alkenyl", "alkynyl", and the like encompass both substituted and unsubstituted groups. As used herein, "aliphatic" is used to indicate those aliphatic groups (cyclic, acyclic, substituted, unsubstituted, branched or unbranched) having 1-20 carbon atoms. Aliphatic group substituents include, but are not limited to, any of the substituents described herein, that result in the formation of a stable moiety (e.g., aliphatic, alkyl, alkenyl, alkynyl, heteroaliphatic, heterocyclic, aryl, heteroaryl, acyl, oxo, imino, thiooxo, cyano, isocyano, amino, azido, nitro, hydroxyl, thiol, halo, aliphaticamino, heteroaliphaticamino, alkylamino, heteroalkylamino, arylamino, heteroarylamino, alkylaryl, arylalkyl, aliphaticoxy, heteroaliphaticoxy, alkyloxy, heteroalkyloxy, aryloxy, heteroaryloxy, aliphaticthioxy, heteroaliphaticthioxy, alkylthioxy, heteroalkylthioxy, arylthioxy, heteroarylthioxy, acyloxy, and the like, each of which may or may not be further substituted).

The term "alkyl" refers to the radical of saturated aliphatic groups, including straight-chain alkyl groups, branched-chain alkyl groups, cycloalkyl (alicyclic) groups, alkyl substituted cycloalkyl groups, and cycloalkyl substituted alkyl groups. The alkyl groups may be optionally substituted, as described more fully below. Examples of alkyl groups include, but are not limited to, methyl, ethyl, propyl, isopropyl, butyl, isobutyl, tert-butyl, 2-ethylhexyl, cyclopropyl, cyclobutyl, cyclopentyl, cyclohexyl, and the like. "Heteroalkyl" groups are alkyl groups wherein at least one atom is a heteroatom (e.g., oxygen, sulfur, nitrogen, phosphorus, etc.), with the remainder of the atoms being carbon atoms. Examples of heteroalkyl groups include, but are not limited to, alkoxy, poly(ethylene glycol)-, alkyl-substituted amino, tetrahydrofuranyl, piperidinyl, morpholinyl, etc.

The terms "alkenyl" and "alkynyl" refer to unsaturated aliphatic groups analogous to the alkyl groups described above, but containing at least one double or triple bond respectively. The "heteroalkenyl" and "heteroalkynyl" refer to alkenyl and alkynyl groups as described herein in which one or more atoms is a heteroatom (e.g., oxygen, nitrogen, sulfur, and the like).

The term "aryl" refers to an aromatic carbocyclic group having a single ring (e.g., phenyl), multiple rings (e.g., biphenyl), or multiple fused rings in which at least one is aromatic (e.g., 1,2,3,4-tetrahydronaphthyl, naphthyl, anthryl, or phenanthryl), all optionally substituted. "Heteroaryl" groups are aryl groups wherein at least one ring atom in the aromatic ring is a heteroatom, with the remainder of the ring atoms being carbon atoms. Examples of heteroaryl groups include furanyl, thienyl, pyridyl, pyrrolyl, N lower alkyl pyrrolyl, pyridyl N oxide, pyrimidyl, pyrazinyl, imidazolyl, indolyl and the like, all optionally substituted.

The terms "amine" and "amino" refer to both unsubstituted and substituted amines, e.g., a moiety that can be represented by the general formula: N(R')(R")(R‴) wherein R', R", and R‴ each independently represent a group permitted by the rules of valence.

The terms "acyl," "carboxyl group," or "carbonyl group" are recognized in the art and can include such moieties as can be represented by the general formula: 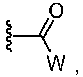 wherein W is H, OH, O-alkyl, O-alkenyl, or a salt thereof. Where W is O-alkyl, the formula represents an "ester." Where W is OH, the formula represents a "carboxylic acid." In general, where the oxygen atom of the above formula is replaced by sulfur, the formula represents a "thiolcarbonyl" group. Where W is a S-alkyl, the formula represents a "thiolester." Where W is SH, the formula represents a "thiolcarboxylic acid." On the other hand, where W is alkyl, the above formula represents a "ketone" group. Where W is hydrogen, the above formula represents an "aldehyde" group.

As used herein, the term "heteroaromatic" or "heteroaryl" means a monocyclic or polycyclic heteroaromatic ring (or radical thereof) comprising carbon atom ring members and one or more heteroatom ring members (such as oxygen, sulfur or nitrogen). Typically, the heteroaromatic ring has from 5 to 14 ring members in which at least 1 ring member is a heteroatom selected from oxygen, sulfur, and nitrogen. For instance, the heteroaromatic ring is a 5 or 6 membered ring and may contain from 1 to 4 heteroatoms, or the heteroaromatic ring system has a 7 to 14 ring members and may contain from 1 to 7 heteroatoms. Representative heteroaryls include pyridyl, furyl, thienyl, pyrrolyl, oxazolyl, imidazolyl, indolizinyl, thiazolyl, isoxazolyl, pyrazolyl, isothiazolyl, pyridazinyl, pyrimidinyl, pyrazinyl, triazinyl, triazolyl, pyridinyl, thiadiazolyl, pyrazinyl, quinolyl, isoquinolyl, indazolyl, benzoxazolyl, benzofuryl, benzothiazolyl, indolizinyl, imidazopyridinyl, isothiazolyl, tetrazolyl, benzimidazolyl, benzoxazolyl, benzothiazolyl, benzothiadiazolyl, benzoxadiazolyl, carbazolyl, indolyl, tetrahydroindolyl, azaindolyl, imidazopyridyl, qunizaolinyl, purinyl, pyrrolo[2,3]pyrimidyl, pyrazolo[3,4]pyrimidyl, benzo(b)thienyl, and the like. These heteroaryl groups may be optionally substituted with one or more substituents.

The term "substituted" is contemplated to include all permissible substituents of organic compounds, "permissible" being in the context of the chemical rules of valence known to those of ordinary skill in the art. In some cases, "substituted" may generally refer to replacement of a hydrogen with a substituent as described herein. However, "substituted," as used herein, does not encompass replacement and/or alteration of a key functional group by which a molecule is identified, e.g., such that the "substituted" functional group becomes, through substitution, a different functional group. For example, a "substituted phenyl" must still comprise the phenyl moiety and cannot be modified by substitution, in this definition, to become, e.g., a heteroaryl group such as pyridine. In a broad aspect, the permissible substituents include acyclic and cyclic, branched and unbranched, carbocyclic and heterocyclic, aromatic and nonaromatic substituents of organic compounds. Illustrative substituents include, for example, those described herein. The permissible substituents can be one or more and the same or different for appropriate organic compounds. For purposes of this invention, the heteroatoms such as nitrogen may have hydrogen substituents and/or any permissible substituents of organic compounds described herein which satisfy the valencies of the heteroatoms. This invention is not intended to be limited in any manner by the permissible substituents of organic compounds.

Examples of substituents include, but are not limited to, alkyl, aryl, aralkyl, cyclic alkyl, heterocycloalkyl, hydroxy, alkoxy, aryloxy, perhaloalkoxy, aralkoxy, heteroaryl, heteroaryloxy, heteroarylalkyl, heteroaralkoxy, azido, amino, halogen, alkylthio, oxo, acyl, acylalkyl, carboxy esters, carboxyl, carboxamido, nitro, acyloxy, aminoalkyl, alkylaminoaryl, alkylaryl, alkylaminoalkyl, alkoxyaryl, arylamino, aralkylamino, alkylsulfonyl, carboxamidoalkylaryl, carboxamidoaryl, hydroxyalkyl, haloalkyl, alkylaminoalkylcarboxy, aminocarboxamidoalkyl, alkoxyalkyl, perhaloalkyl, arylalkyloxyalkyl, and the like.

### EXAMPLES

### Examples 1-3 and Comparative Examples 1-7 (not falling under the claims)

In Examples 1-3 and Comparative Examples 1-7, unless otherwise stated, the electrochemical cells were prepared by the following methods: the first electrode (anode) was vacuum deposited Li (thickness 15 or 25 µm) positioned on a 200 nm thick-copper current collector disposed on a polyethylene terephthalate (PET) substrate. The porous separator was a 25 µm-thick polyolefin film (Celgard 2325), and the second electrode (cathode) was nickel manganese cobalt (BASF NCM622) coated on a 20 µm-thick aluminum substrate current collector with an active cathode material (ACM) loading of approximately 19.3 mg/cm² on each side of the current collector. The above components were assembled in a stacked layered structure of anode/separator/cathode/separator/anode. The total active cathode surface area was 100 cm². After sealing the cell components in a foil pouch, appropriate amount of electrolyte was added (typically, 0.55 mL was used for 25µm lithium cells and 0.6 mL was used for 15 µm lithium cells). The cell package was then vacuum sealed. These cells were allowed to soak in the electrolyte for 24 hours unrestrained.

**Comparative Example 1:** the above cell was prepared with an electrolyte containing 1M lithium hexafluorophosphate (LiPF6) in a 50 wt% : 50 wt% mixture of dimethyl carbonate (DMC) and ethylene carbonate (EC) (BASF LP30).

**Comparative Example 2:** the electrochemical cell was identical to the cell of Comparative Example 1 except that electrolyte was 1M LiPF6 in a 30 wt% : 70 wt% mixture of EC and ethyl methyl carbonate (EMC) (BASF LP57).

**Comparative Example 3:** The electrochemical cell was identical to the cell of Comparative Example 1, except that the electrolyte further contained 4 wt% LiNO₃ in the form of a suspension.

**Comparative Example 4:** The electrochemical cell was identical to the cell of Comparative Example 2, except that the electrolyte further contained 4 wt% LiNO₃ in the form of a suspension.

**Comparative Example 5:** The electrochemical cell was identical to the cell of Comparative Example 1, except that the electrolyte further contained 4wt% of LiBOB

**Comparative Example 6:** The electrochemical cell was identical to the cell of Comparative Example 2, except that the electrolyte further contained 4 wt% LiBOB.

**Comparative Example 7:** The electrochemical cell was identical to the cell of Comparative Example 2, except that the electrolyte further contained 1 wt% LiBOB.

**Example 1:** The electrochemical cell was identical to the cell of Comparative Example 3 except that the electrolyte further contained LiBOB at a concentration of 4 wt%.

**Example 2:** The electrochemical cell was identical to the cell of Comparative Example 4 except that the electrolyte further contained LiBOB at a concentration of 4 wt%.

After the cells were soaked in the electrolyte, 10 kg/cm² pressure was applied to the cells and the cells were cycled under this pressure. Charge and discharge cycling was performed under the following condition: C/3 (100 mA) charge to 4.35V, followed by taper at 4.35V to 3 mA; C (100 mA) discharge to 3.2V. As shown in Table 2, batteries comprising both LiNO₃ and LiBOB in the electrolyte (as in Examples 1 and 2) showed significant improvement in cycle life over batteries comprising only one of LiNO₃ and LiBOB alone, or neither of LiNO₃ and LiBOB (as in the Comparative Examples).

**Table 2**

| Example | Base Electrolyte | Passivating Agents | No. of Cycles to 80% Capacity |
|---|---|---|---|
| Comparative Example 1 | LP30 | None | 27 |
| Comparative Example 2 | LP57 | None | 3 |
| Comparative Example 3 | LP30 | 4 wt% LiNO₃ suspension | 19 |
| Comparative Example 4 | LP57 | 4 wt% LiNO₃ suspension | 22 |
| Comparative Example 5 | LP30 | 4 wt% LiBOB solution | 73 |
| Comparative Example 6 | LP57 | 4 wt% LiBOB solution | 26 |
| Comparative Example 7 | LP57 | 1 wt% LiBOB solution | 9 |
| Example 1 | LP30 | 4 wt% LiBOB + 4 wt% LiNO₃ suspension | 96 |
| Example 2 | LP57 | 4% LiBOB + 4% LiNO₃ suspension | 111 |

Further analyses were conducted on selected electrochemical cells as described above. In one experiment, the cells were soaked in the electrolyte for one day and then 10kg/cm² pressure was applied to the cells. Then, the cells underwent 5 cycles at C/8 charge and C/5 discharge, then float charged to 4.35 V for 72 hours at 6^{th} cycle. Table 3 shows the CO₂ emission, N₂ emission, and N₂O emission from such analyses.

**Table 3**

| Example | Base Electrolyte | Passivating Agents | CO₂ emission (µL) | N2 emission (µL) | N₂O emission (µL) |
|---|---|---|---|---|---|
| Comparative Example 1 | LP30 | None | 508 | 196 | 0 |
| Comparative Example 3 | LP30 | 4 wt% LiNO₃ suspension | 469 | 287 | 41 |
| Comparative Example 5 | LP30 | 4 wt% LiBOB solution | 649 | 79 | 0 |
| Example 1 | LP30 | 4 wt% LiBOB + 4% LiNO₃ suspension | 699 | 167 | 11 |

Gas analyses were also conducted on the electrochemical cells of Comparative Example 1, Comparative Example 3, Comparative Example 5, and Example 1 after the cells had undergone charging and discharging. In these examples, cells were soaked in the electrolyte for one day and then 10 kg/cm² pressure was applied to the cells. Then the cells then underwent five cycles of C/8 charge and C/5 discharge. After this step, the cells were untouched for nine days and then charged to C/3 charge and C discharge for an additional 20 cycles. Table 4 shows the amounts of CO₂, N₂, and N₂O gas emission of these cells. It should be noted that cells comprising LP30 with a 4 wt% LiNO₃ suspension reached the low capacity cut off at the 13^{th} cycle.

**Table 4**

| Example | Base Electrolyte | Passivating Agents | CO₂ emission (µL) | N2 emission (µL) | N₂O emission (µL) |
|---|---|---|---|---|---|
| Comparative Example 1 | LP30 | None | 0 | 155 | 0 |
| Comparative Example 3 | LP30 | 4 wt% LiNO₃ suspension | 57 | 429 | 50 |
| Comparative Example 5 | LP30 | 4 wt% LiBOB suspension | 579 | 155 | 0 |
| Example 1 | LP30 | 4 wt% LiBOB + 4% LiNO₃ suspension | 589 | 228 | 24 |

These results show that LiBOB, the second passivating agent, suppressed the decomposition of LiNO₃, the first passivating agent, as indicated by the reduced amounts of N₂O, and N₂, the main decomposition products from LiNO₃.

It should also be noted that increased amounts of CO₂ in the presence of LiBOB suggests that LiBOB may oxidize to form a film on the cathode. One possible process for LiBOB oxidation is 1-electron oxidation, which may cause the release of CO₂ and the generation of borate radicals. The borate radicals may then subsequently couple, propagate and cross-link to form a passivating film on the surface of the cathode. For samples where the formation of CO₂ was accompanied by the presence of LiBOB, it is therefore possible that the CO₂ formation was due to LiBOB oxidation instead of solvent degradation.

**Example 3:** Two electrochemical cells were constructed which were identical to the cell of Comparative Example 1 except that the electrolyte further comprised either 4 wt% LiNO₃ or 4 wt% fluoroethylene carbonate (FEC). One electrochemical cell was constructed which was identical to the cell of Comparative Example 1 except that it was prepared with an electrolyte containing 1M LiPF₆ in DMC and comprised 4 wt% LiNO₃ and 18 wt% FEC. The cells were soaked in the electrolytes for one day, and then 10 kg/cm² pressure was applied to the cells. Then, the cells underwent C/8 charge, C/5 discharge for the first three cycles, and C/3 charge, C discharge for subsequent cycles. These three cells and the cell of Comparative Example 1 were cycled. FIG. 6 shows the discharge capacity as a function of the number charge/discharge cycles of these cells, indicating that cells comprising both LiNO₃ and FEC exhibit significantly enhanced discharge capacity retention compared to cells containing only one or the other.

### Examples 4-7 and Comparative Example 8

**Example 4:** Approximately 37 g of a nickel manganese cobalt cathode (NCM523, received from BASF) in powder form was dried overnight in vacuum oven at 125 °C. 17 g of this dried powder was then stirred in 100 mL of 0.5 M tetraethylorthosilicate (TEOS) in dimethyl carbonate (DMC) and held at 35 °C overnight. After this step, the solution was allowed to settle for a few hours and the supernatant was decanted. The remaining powder was rinsed with DMC and was dried overnight in vacuum oven at 125 °C. Then, the powder was used to form a cathode slurry. The slurry exhibited fluid-like properties and did not form a gel after 6 hours.

**Example 5:** Approximately 17 g of dried NCM523 powder was processed as described in Example 4, except 0.5M mercaptopropyltrimethoxysilane (MPTS) was added instead of instead of TEOS. Then, the powder was used to form a cathode slurry. The slurry exhibited fluid-like properties and did not form a gel.

**Example 6:** Three NCM 622 cathodes with dimensions of 45 cm x 43.45 cm and containing an active material density of 2.5 g/cm³ were dried overnight in a vacuum oven held at 120 °C. These cathodes were submersed in 50 mL of a 0.1 M solution of (3-mercaptoproplyl)triethoxysilane (MPTS) (95%, Sigma Aldrich) in anhydrous dimethyl carbonate (DMC) (>99%, Sigma Aldrich) overnight at 40 °C. Then, the cathodes were rinsed well with DMC and dried overnight in a vacuum oven held at 120 °C.

**Example 7:** Three NCM 622 cathodes with dimensions of 45 cm x 43.45 cm and containing an active material density of 2.5 g/cm³ were dried overnight in a vacuum oven held at 120 °C. These cathodes were submersed in 50 mL of a 0.1 M solution of Trichlorododecylsilane (TCODS) (95%, Sigma Aldrich) in anhydrous dimethyl carbonate (DMC) (>99%, Sigma Aldrich) overnight at 40 °C. Then, the cathodes were rinsed well with DMC and dried overnight in a vacuum oven held at 120 °C.

**Comparative Example 8:** Three NCM 622 cathodes with dimensions of 45 cm x 43.45 cm and containing an active material density of 2.5 g/cm³ were dried overnight in a vacuum oven held at 120 °C. These cathodes were submersed in anhydrous dimethyl carbonate (DMC) (>99%, Sigma Aldrich) overnight at 40 °C. Then, the cathodes were rinsed well with DMC and dried overnight in a vacuum oven held at 120 °C.

Cathode-centered cells were prepared with the cathodes of Examples 6-7 and Comparative Example 8. The cells included a vacuum deposited lithium anode and a Celgard 2325 separator. The electrolyte included 4 wt% LiNO₃ in a 1M LiPF₆ in 50 wt% ethyl carbonate and 50 wt% dimethyl carbonate solution. The cells underwent three initial cycles in which they were charged at a rate of C/8 and discharged at a rate of C/3 to 4.35 V. They then underwent subsequent cycles in which they were charged at a rate of C/3 and discharged at a rate of C. FIG. 7 shows the discharge capacity as a function of the number charge/discharge cycles of the different cells. Examples 6 and 7 exhibited longer cycle lives than the cells of Comparative Example 8.

### Examples 8-13

In Examples 8-13, unless otherwise stated, the electrochemical cells were prepared by the following methods: the first electrode (anode) was vacuum deposited Li (thickness 14 µm) positioned on a 200 nm-thick Cu current collector disposed on a PET substrate. The porous separator was a 9 µm-thick polyolefin film (Entek EP), and the second electrode (cathode) was nickel manganese cobalt (BASF NCM721) coated on a 20 µm-thick aluminum substrate current collector with an active cathode material (ACM) loading of approximately 20.1 mg/cm² on each side of the current collector. The above components were assembled in a stacked layered structure of anode/separator/cathode/separator/anode. The total active cathode surface area was 100 cm². After sealing the cell components in a foil pouch, 0.5 mL of electrolyte was added. The cell package was then vacuum sealed. These cells were allowed to soak in the electrolyte for 24 hours unrestrained.

**Example 8:** The above cell was prepared with an electrolyte containing 1 M LiPF₆ in a 20 wt%:80 wt% mixture of FEC and DMC (Li-ion 14).

**Example 9:** The electrochemical cell was identical to the cell of Example 8, except that the electrolyte further contained 1 wt% LiBOB.

**Example 10:** The electrochemical cell was identical to the cell of Example 8, except that the electrolyte further contained 1 wt% vinylene carbonate (VC).

**Example 11:** The electrochemical cell was identical to the cell of Example 8, except that the electrolyte further contained 1 wt% prop-1-ene-1,3-sultone (PES).

**Example 12:** The electrochemical cell was identical to the cell of Example 8, except that the electrolyte further contained 1 wt% LiBOB and 1 wt% VC.

**Example 13:** The electrochemical cell was identical to the cell of Example 8, except that the electrolyte further contained 1 wt% LiBOB and 1 wt% PES.

After the cells were soaked in the electrolyte, 10 kg/cm² pressure was applied to the cells and the cells were cycled under this pressure. Charge and discharge cycling was performed under the following condition: three cycles of 30 mA charge to 4.4 V, followed by taper at 4.4 V to 10 mA and then 120 mA discharge to 3.2 V; further cycles of 75 mA charge to 4.4 V, followed by taper at 4.4 V to 10 mA and then 300 mA discharge to 3.2 V. As shown in Table 5, the battery comprising VC, LiBOB, and FEC in the electrolyte (Example 12) showed significant improvement in cycle life over batteries comprising FEC and only one of VC or LiBOB, or comprising FEC and neither of VC and LiBOB (Examples 8-10). As also shown in Table 5, the battery comprising PES, LiBOB, and FEC in the electrolyte (Example 13) showed significant improvement in cycle life over batteries comprising FEC and only one of PES and LiBOB, or comprising FEC and neither of PES and LiBOB (Examples 8, 9, and 11). However, the batteries lacking one or more of VC, PES, LiBOB, and FEC also showed appreciable cycle life.

**Table 5.**

| Example | Base Electrolyte | Passivating Agents | No. of Cycles to 80% Capacity |
|---|---|---|---|
| Example 8 | Li-ion 14 | 17.52 wt% FEC | 146 |
| Example 9 | Li-ion 14 | 17.52 wt% FEC + 1 wt% LiBOB | 170 |
| Example 10 | Li-ion 14 | 17.52 wt% FEC + 1 wt% VC | 185 |
| Example 11 | Li-ion 14 | 17.52 wt% FEC + 1 wt% PES | 162 |
| Example 12 | Li-ion 14 | 17.52 wt% FEC + 1 wt% LiBOB + 1 wt% VC | 231 |
| Example 13 | Li-ion 14 | 17.52 wt% FEC + 1 wt% LiBOB + 1 wt% PES | 218 |

All definitions, as defined and used herein, should be understood to control over dictionary definitions, and/or ordinary meanings of the defined terms. The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, to A only (optionally including elements other than B); alternatively to B only (optionally including elements other than A); in yet another alternative, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer to at least one, optionally including more than one, A, with no B present (and optionally including elements other than B); alternatively to at least one, optionally including more than one, B, with no A present (and optionally including elements other than A); in yet another alternative, to at least one, optionally including more than one, A, and at least one, optionally including more than one, B (and optionally including other elements); etc.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases.

## Claims

1. An article for production of or use in an electrochemical cell, said article comprising:
- a first electrode comprising lithium, said first electrode comprising a first surface;
- a second electrode, said second electrode comprising a second surface;
- an electrolyte;
wherein said article further comprises
(i) a first additive wherein the first additive comprises a xanthate group;
and
(ii) a second additive wherein the second additive comprises an (oxalato)borate group, and wherein the first additive is present in the electrolyte, the second additive is present in the electrolyte at greater than or equal to 0.2 wt% versus the total weight of the electrolyte, and wherein the ratio of the total weight of the first additive to the total weight of the second additive is less than or equal to 3.

2. An article according to claim 1, wherein said first additive is selected from the group consisting of lithium xanthate, lithium ethyl xanthate, lithium isobutyl xanthate, potassium xanthate, potassium ethyl xanthate, potassium isobutyl xanthate and a polymer which comprises xanthate functional groups.

3. An article according to claim 1 or 2, wherein said second additive is selected from the group consisting of lithium bis(oxalato) borate and lithium difluoro(oxalato)borate.

4. An article according to any of claims 1 to 3, further comprising a protective layer.

5. An article according to claim 4, wherein said protective layer is disposed on the first electrode.

6. An article according to claim 4 or 5, wherein said protective layer is porous.

7. An article according to any preceding claim, wherein said second electrode comprises a material selected from the group consisting of lithium intercalation compounds and sulfur, wherein said lithium intercalation compound is preferably selected from the group consisting of lithium nickel manganese cobalt oxide, lithium nickel cobalt aluminum oxide, lithium iron phosphate and lithium cobalt oxide.

8. An article according to any preceding claim wherein said electrolyte comprises a solvent, preferably a solvent comprising a carbonate group wherein said solvent is preferably selected from the group consisting of dimethyl carbonate, diethyl carbonate, ethyl methyl carbonate, propylene carbonate, dioxolanes, dimethoxyethane, ethylene carbonate.

9. An article according to any preceding claim wherein said electrolyte comprises a lithium salt, wherein said lithium salt is preferably selected from the group consisting of lithium perchlorate, lithium hexafluoroarsenate, lithium tetrafluoroborate, lithium trifluromethanesulfonate, lithium bis(trifluoromethanesulfonyl)imide, lithium bis(flurorosulfonyl)imide (LiN(SO₂F)₂) and lithium hexafluorophosphate.

10. An article according to any preceding claim wherein said first additive is soluble in or miscible with said electrolyte.

11. An electrochemical cell comprising an article as defined in any of claims 1 to 10.

12. A process comprising the steps of
introducing
(i) a first additive wherein the first additive comprises a xanthate group;
(ii) a second additive wherein the second additive comprises an (oxalato)borate group,
into an article for production of or use in an electrochemical cell, said article comprising
- a first electrode comprising lithium metal, said first electrode having a first electrode surface;
- a second electrode, said second electrode having a second electrode surface;
- and an electrolyte
or into an electrochemical cell comprising said article, wherein the first additive and the second additive are introduced into the electrolyte, the second additive is introduced in an amount greater than or equal to 0.2 wt% versus the total weight of the electrolyte, and wherein the ratio of the total weight of the first additive to the total weight of the second additive is less than or equal to 3.

13. Use of
(i) a first additive wherein the first additive comprises a xanthate group;
(ii) a second additive wherein the second additive comprises an (oxalato)borate group, for preparing an article according to any of claims 1 to 10 or an electrochemical cell according to claim 11.

## Patentansprüche

1. Artikel zur Produktion von oder Verwendung in einer elektrochemischen Zelle, wobei der Artikel Folgendes umfasst:
- eine erste Elektrode, die Lithium umfasst, wobei die erste Elektrode eine erste Oberfläche umfasst;
- eine zweite Elektrode, wobei die zweite Elektrode eine zweite Oberfläche umfasst;
- einen Elektrolyten;
wobei der Artikel des Weiteren Folgendes umfasst:
(i) ein erstes Additiv, wobei das erste Additiv eine Xanthatgruppe umfasst;
und
(ii) ein zweites Additiv, wobei das zweite Additiv eine (Oxalato)boratgruppe umfasst, und wobei das erste Additiv in dem Elektrolyten vorliegt, das zweite Additiv in dem Elektrolyten in einer Menge größer als oder gleich 0,2 Gew.-%, bezogen auf das Gesamtgewicht des Elektrolyten, vorliegt und wobei das Verhältnis des Gesamtgewichts des ersten Additivs zum Gesamtgewicht des zweiten Additivs kleiner als oder gleich 3 ist.

2. Artikel nach Anspruch 1, wobei das erste Additiv aus der Gruppe bestehend aus Lithiumxanthat, Lithiumethylxanthat, Lithiumisobutylxanthat, Kaliumxanthat, Kaliumethylxanthat, Kaliumisobutylxanthat und einem Polymer, das funktionelle Xanthatgruppen umfasst, ausgewählt ist.

3. Artikel nach Anspruch 1 oder 2, wobei das zweite Additiv aus der Gruppe bestehend aus Lithium-bis(oxalato)borat und Lithiumdifluoro(oxalato)borat ausgewählt ist.

4. Artikel nach einem der Ansprüche 1 bis 3, der ferner eine Schutzschicht umfasst.

5. Artikel nach Anspruch 4, wobei die Schutzschicht auf der ersten Elektrode angeordnet ist.

6. Artikel nach Anspruch 4 oder 5, wobei die Schutzschicht porös ist.

7. Artikel nach einem der vorhergehenden Ansprüche, wobei die zweite Elektrode ein Material ausgewählt aus der Gruppe bestehend aus Lithiuminterkalationsverbindungen und Schwefel umfasst, wobei die Lithiuminterkalationsverbindung vorzugsweise aus der Gruppe bestehend aus Lithiumnickelmangancobaltoxid, Lithiumnickelcobaltaluminiumoxid, Lithiumeisenphosphat und Lithiumcobaltoxid ausgewählt ist.

8. Artikel nach einem der vorhergehenden Ansprüche, wobei der Elektrolyt ein Lösungsmittel umfasst, vorzugsweise ein Lösungsmittel, das eine Carbonatgruppe umfasst, wobei das Lösungsmittel vorzugsweise aus der Gruppe bestehend aus Dimethylcarbonat, Diethylcarbonat, Ethylmethylcarbonat, Propylencarbonat, Dioxolanen, Dimethoxyethan, Ethylencarbonat ausgewählt ist.

9. Artikel nach einem der vorhergehenden Ansprüche, wobei der Elektrolyt ein Lithiumsalz umfasst, wobei das Lithiumsalz vorzugsweise aus der Gruppe bestehend aus Lithiumperchlorat, Lithiumhexafluoroarsenat, Lithiumtetrafluoroborat, Lithiumtrifluormethansulfonat, Lithiumbis(trifluormethansulfonyl)imid, Lithiumbis(fluorsulfonyl)imid (LiN(SO₂F)₂), Lithiumbis(oxalato)borat und Lithiumhexafluorophosphat ausgewählt ist.

10. Artikel nach einem der vorhergehenden Ansprüche, wobei das erste Additiv in dem Elektrolyten löslich oder mit diesem mischbar ist.

11. Elektrochemische Zelle, umfassend einen Artikel nach einem der Ansprüche 1 bis 10.

12. Verfahren, umfassend die Schritte:
Einbringen
(i) eines ersten Additivs, wobei das erste Additiv eine Xanthatgruppe umfasst;
(ii) eines zweiten Additivs, wobei das zweite Additiv eine (Oxalato)boratgruppe umfasst;
in einen Artikel zur Produktion von oder Verwendung in einer elektrochemischen Zelle, wobei der Artikel Folgendes umfasst:
- eine erste Elektrode, die Lithiummetall umfasst, wobei die erste Elektrode eine erste Elektrodenoberfläche aufweist;
- eine zweite Elektrode, wobei die zweite Elektrode eine zweite Elektrodenoberfläche aufweist;
- und einen Elektrolyten;
oder in eine elektrochemische Zelle, die den Artikel umfasst,
wobei das erste Additiv und das zweite Additiv in den Elektrolyten eingebracht werden, wobei das zweite Additiv in einer Menge größer als oder gleich 0,2 Gew.-%, bezogen auf das Gesamtgewicht des Elektrolyten, eingetragen wird und wobei das Verhältnis des Gesamtgewichts des ersten Additivs zum Gesamtgewicht des zweiten Additivs kleiner als oder gleich 3 ist.

13. Verwendung von
(i) einem ersten Additiv, wobei das erste Additiv eine Xanthatgruppe umfasst;
(ii) einem zweiten Additiv, wobei das zweite Additiv eine (Oxalato)boratgruppe umfasst;
zur Herstellung eines Artikels nach einem der Ansprüche 1 bis 10 oder einer elektrochemischen Zelle nach Anspruch 11.

## Revendications

1. Article pour la production de ou une utilisation dans une cellule électrochimique, ledit article comprenant :
- une première électrode comprenant du lithium, ladite première électrode comprenant une première surface ;
- une deuxième électrode, ladite deuxième électrode comprenant une deuxième surface ;
- un électrolyte ;
ledit article comprenant en outre
(i) un premier additif, le premier additif comprenant un groupe xanthate ; et
(ii) un deuxième additif, le deuxième additif comprenant un groupe (oxalato)borate, et le premier additif étant présent dans l'électrolyte, le deuxième additif étant présent dans l'électrolyte à raison d'une quantité supérieure ou égale à 0,2 % en poids par rapport au poids total de l'électrolyte, et le rapport du poids total du premier additif sur le poids total du deuxième additif étant inférieur ou égal à 3.

2. Article selon la revendication 1, ledit premier additif étant choisi dans le groupe constitué par le xanthate de lithium, l'éthylxanthate de lithium, l'isobutylxanthate de lithium, le xanthate de potassium, l'éthylxanthate de potassium, l'isobutylxanthate de potassium et un polymère qui comprend des groupes fonctionnels xanthate.

3. Article selon la revendication 1 ou 2, ledit deuxième additif étant choisi dans le groupe constitué par le bis(oxalato)borate de lithium et le difluoro(oxalato)borate de lithium.

4. Article selon l'une quelconque des revendications 1 à 3, comprenant en outre une couche protectrice.

5. Article selon la revendication 4, ladite couche protectrice étant disposée sur la première électrode.

6. Article selon la revendication 4 ou 5, ladite couche protectrice étant poreuse.

7. Article selon une quelconque revendication précédente, ladite deuxième électrode comprenant un matériau choisi dans le groupe constitué par des composés d'insertion de lithium et le soufre, ledit composé d'insertion de lithium étant préférablement choisi dans le groupe constitué par l'oxyde de cobalt manganèse nickel lithium, l'oxyde d'aluminium cobalt nickel lithium, le phosphate de fer lithium et l'oxyde de cobalt lithium.

8. Article selon une quelconque revendication précédente, ledit électrolyte comprenant un solvant, préférablement un solvant comprenant un groupe carbonate, ledit solvant étant préférablement choisi dans le groupe constitué par le carbonate de diméthyle, le carbonate de diéthyle, le carbonate d'éthyle et de méthyle, le carbonate de propylène, des dioxolannes, le diméthoxyéthane, le carbonate d'éthylène.

9. Article selon une quelconque revendication précédente, ledit électrolyte comprenant un sel de lithium, ledit sel de lithium étant préférablement choisi dans le groupe constitué par le perchlorate de lithium, l'hexafluoroarséniate de lithium, le tétrafluoroborate de lithium, le trifluorométhanesulfonate de lithium, le bis(trifluorométhanesulfonyl)imide de lithium, le bis(fluorosulfonyl)imide de lithium (LiN(SO₂F)₂) et l'hexafluorophosphate de lithium.

10. Article selon une quelconque revendication précédente, ledit premier additif étant soluble dans ou miscible avec ledit électrolyte.

11. Cellule électrochimique comprenant un article tel que défini dans l'une quelconque des revendications 1 à 10.

12. Procédé comprenant les étapes
d'introduction
(i) d'un premier additif, le premier additif comprenant un groupe xanthate ;
(ii) d'un deuxième additif, le deuxième additif comprenant un groupe (oxalato)borate,
dans un article pour la production de ou une utilisation dans une cellule électrochimique, ledit article comprenant
- une première électrode comprenant du lithium métallique, ladite première électrode possédant une première surface d'électrode ;
- une deuxième électrode, ladite deuxième électrode possédant une deuxième surface d'électrode ;
- et un électrolyte
ou dans une cellule électrochimique comprenant ledit article, le premier additif et le deuxième additif étant introduits dans l'électrolyte, le deuxième additif étant introduit en une quantité supérieure ou égale à 0,2 % en poids par rapport au poids total de l'électrolyte, et le rapport du poids total du premier additif sur le poids total du deuxième additif étant inférieur ou égal à 3.

13. Utilisation
(i) d'un premier additif, le premier additif comprenant un groupe xanthate ;
(ii) d'un deuxième additif, le deuxième additif comprenant un groupe (oxalato)borate,
pour la préparation d'un article selon l'une quelconque des revendications 1 à 10 ou d'une cellule électrochimique selon la revendication 11.
